# EUROPEAN PATENT APPLICATION

(11) **EP 4 253 097 A1**
(43) Date of publication of application: **04.10.2023**
(21) Application number: 21884189.8
(22) Date of filing: 29.10.2021
(51) Int. Cl.: B60C 19/12, B60C 5/12, B60C 5/14, B60C 5/20, B60C 1/00, B60C 17/00

(54) **PUNCTURE-RESISTANT LINING FOR PNEUMATIC TYRES**

(30) Priority: 30.10.2020 BR 102020022231
(71) Applicant: Turozi, Alexandre Santos, 88034-130 Florianópolis - SC (BR)
(72) Inventor: Turozi, Alexandre Santos, 88034-130 Florianópolis - SC (BR)
(74) Representative: Monteiro Alves, Inês
(86) International application number: PCT/BR2021/050477
(87) International publication number: WO 2022/087705

(57) **Abstract**

The invention belongs to the tires sector, and it refers to, more specifically, a system of shield levels for tire protection that prevents sharp objects from puncturing the inner tube or in tubeless tires that prevent sharp objects from emptying the air from the tire, which can be applied to practically every kind of tire. In the invention, the perforating object bends and is deformed when it contacts the tire tread, not allowing it to contact the inner tube or the air in case of tubeless tires. The perforating object penetrates the tire rubber, but bends when it strikes the shields, instead of puncturing or deforming it, due to a ratio of hardness between the shield and the tire tread summed with wheel movement.

## Description

### Technological sector of the invention

The invention pertains to the tires sector, and it refers to, more specifically, asystem of shield levels for tire protection that prevents pointed objects from puncturing the inner tube or, in tubeless tires, that prevent pointed objects from emptying the air from the tire, which can be applied to practically every kind of newtire, used or in the manufacturing process of tires for: handcarts, bicycles, motorcycles, fork-lift trucks, agricultural vehicles, cars and correlated transport vehicles.

### The state of the art

The tires are vulnerable components in any transport or cargo vehicle. The rubber, which ensures comfort in the routes and the adherence to the ground, has little strength against perforation. Tire is an abbreviated form of "pneumatic tire", a word of Greek origin derived from *pneumatikós* which means "animated by breath". The pneumatic tire exists since the second half of the 19^{th} Century and the invention revolutionized the means of transports. At that time, before the automobiles dominated the streets, bicycles formed the major fleet of urban transit vehicles in some European and, thanks to the comfort of the tires, the popularity increased evenfurther. In spite of all the advantage, the pneumatic tire had (and has to this day) only one problem: the tire tread is subject to punctures with a certain ease and all it takes is a single nail to spoil the tire's function.

The most common agents that perforate the tire tread are small metal objects, broken glass and small steel wires common on the road. On mountain bike, for instance, punctures occasioned by nails, thorns and pieces of barbed wire are most usual. Currently there are several technological options that eliminate or considerably reduce the punctures. The market offers from tires that already leave the factory with anti-puncture systems, inner tubes with sealant liquid, anti-puncturetapes, tubeless tires with repairing liquids and even solid or flexible solid tire that don't even use air, as the case of the airless tires (or NPT - non-pneumatic tires that don't use air. Practically all the main tire brands offer models with some technology that reduces the incidence of perforations.

In the bicycles market, the tubeless tires technology is efficient and quickly won the market. The introduction of tubeless system to the cyclist market began with Stan Koziatek, who in 2001 produced the first conversion kits to tubeless tires on a commercial scale. This is how the company "Stan's No Tubes" emerged, a pioneer company in this technology and that opened the way for other brands.

With chemical agents on a tubeless tire, the tire itself has the function of storing and keep inflated the air mattress on its interior. To do that it is necessary that the rim is perfectly sealed for the air not to escape through the valve, the nipplesand neither the side of the tire bead. A sealant liquid stays inside the tire and, in case of a puncture, the pressure that escapes then pushes the liquid which makes the repair. The most ordinary conversion kits bring a tape that is installed on the rim so as to cover the nipples, the special valve that is attached on the existing punctureand the liquid. Each tire uses 50 to 120ml of sealant. Another tubeless system is the UST (Universal System for Tubeless), with wheels that already come ready to be used with or without inner tube. The tires for the UST wheels have an internal finish of Butyl, which helps in the sealing. The tubeless tires are very efficient and withstand punctures of up to 3mm of diameter. In addition to repairing punctures, the tubeless tires provide a softer ride and relievesweight, for they eliminate the inner tubes and the rim tapes.

In 2014, the German brand Schwalbe presented the Pro Core technology. The term, which means "Progressive Core", has two air compartments for the purpose of providing greater traction, at the same time it minimizes the chances of punctures. The interior holds a high pressure Pro Core inner tube that can be inflatedfrom 55 to 87 psi. The external inner tube is the very interior of the tire which can becalibrated from 12 to 20 psi. In case of a puncture, the cyclist can in this case manage to pedal with the pressure that is within the inner chamber . With two innertubes, the cyclist more calibration options, in accordance with the style of pilotage and the terrain.

The company Britek Tire and Rubber has developed a tire called ERW; in practice, the product cannot be classified as a pneumatic tire, for it doesn't use air.Originally developed for the cars, pickups, trucks and tractors market, the ERW was applied in NATO military vehicles. The product uses a rubber tire tread, as if it wasa normal tire. normal. The tire is open on the sies and the major difference is that the tire tread is mounted on rubber rods that fill the space where the inner tube stayson the ordinary tires. When the tire passes over an obstacle, the vehicle is driven forward by the energy generated by the return of the elastic, justifying the product name: Energy Return Wheel.

Various solutions have been the object of patents or practices consecrated on the course of time as presented in the patent document US 20190344626 - "Tirestructure and combining structure thereof" published on 11/14/2019, which reveals a tire structure that can be combined with a rim, includes an air tube, a core providedon the air tube and an external tire layer provided on the core; the core includes a part of the body positioned above a transversal diameter of the air tube and a part of the wing positioned under the transversal diameter of the air tube and a lower endof a part of the wing is placed under the rim's upper surface. The core can include a material selected from the group that consists in, for instance, natural rubber, synthetic rubber, thermosetting resin, thermoplastic resin and combinations, but cannot be limited to the same.

The company Tannus has a flexible shield (described in the patent document US 20190344626) with Shore 20C to 80C, i.e., it refers to a soft or very flexible classof polymers, and allows the nail to perforate not just the tire, but also perforate the armature - a long nail would reach even the inner tube. Also a part of said patent, a lateral system which causes the tire when striking a rigid corner, such as a curb or a stone, with the impact the tire can puncture the inner tube on the metal rim.

It is also observed that the document US 20190344626 mentions specific situations of hardness and variations of hardness rations between the foam and thetire's external layer in agreement for each test carried out, i.e., proves the invention'sfunction and its applicability for tires with inner tube. It also demonstrates the function of a spacer, however in a single circular part, without the cutout demonstrated by this patent, which makes the installation easier, in addition to allowing an universal fitting in various tire brands. Therefore, the only proximity involves the hardness scale, but as already broached, the product development didnot sustain itself only on this parameter, and encompasses accessories and construction of the shield to present a new concept of protection, something that advances in relation to the anteriority.

The patent document BR 112012027181-4 - "Pneumatic object provided with a layer impervious to the thermoplastic elastomer based gases and thermoplastic" published on 07/19/2016, presents an impervious elastomer layer that comprises hot melt polymeric microdomains based on at least one thermoplastic material, which can be carried out before or after vulcanization (or baking). In a mode, they reveal the use of chlorinated vinyl polymers chosen among the polyvinyl chlorides (PVCs), the polyvinylidene chlorides (PVDC's), the super chlorinated polyvinyl chlorides (PVCCs) and the blends of the same. In the first case, the layer is simply applied in a conventional manner in the desired place and then the vulcanization isdone next. In another form, the impervious layer is deposited in the plane segment directly over a confection drum, under the form of a skim layer of adapted thickness, before covering the latter with the rest of the pneumatic tire tread band structure. Inanother case, after baking the tire tread, the impervious layer applied inside the band by any appropriate means, for instance, gluing, pulverization or even extrusion and direct application of a profile of appropriate thickness.

And, further, the document FR2879504 - "Vehicle tire anti-puncture system comprises liner of synthetic resin or recycled tire material" published on 06/23/2006,which reveals a tire puncture prevention device comprised of a protective liner thatcan be manufactured in synthetic resin, polycarbonate, PVC, tetrafluoroethylene polymer or recycled material, and covers all the interior of the tire, the internal faceof the tire tread and rim flanks. It promises to form a resistant layer, in such a mannerthat when some object perforates the tire, it prevents that its use be impaired. The current patent reveals that the shield can be provided with virgin thermoplastic
resins and/or with blends of recycled material and the can be manufactured with scraps from the footwear industry, with crushed SBR, cold glued or glued and vulcanized by means of molds. In addition to being a flexible shield, different proposed patent, the anteriority indicates that this shield can be made of materials from recycled tires. Thus, the invention reveals different kinds of materials recycled and applied to a shield different from the one presented by the anteriority.

There are also polyurethane tapes that help to protect against small objects, being very flexible and installed between the inner tube and the tire. The documentUS 6877537 refers to a polyurethane (PU) tape with an aluminum fitting that does the protection of the bicycle tire inner tube. The tire lining comprises a puncture- resistant flexible aluminum tape to protect the inner tube from damages by punctures and a polyurethane protection tape that is applied to the main first and second surfaces of the flexible aluminum tape to provide additional protection against perforations and increase the aluminum tire's strength and durability.

There are still other relevant documents that can be highlighted, such as US3982577 that reveals a protection of inner tubes of relatively narrow tires, such as bicycle tires. The anteriority refers to a protection that can be fitted between the internal surface of the tire tread and the inner tube with the purpose of protecting the inner tube against punctures and preventing cracks on the tire tread wall. The protection effect is achieved by means of very specific member thicknesses and diameter, in addition to providing protuberances that prevent slippage of the protection in relation to the tire tread surface. Said protection is made of plastic material, preferably polypropylene, and requires that resistance exists to penetrationof pointed objects, such as nails or broken glass, by means of hardness of approximately 64 Shore D ASTM. It so happens that the current invention reveals ashield levels system for tire protection that prevents pointed objects from puncturingthe inner tubes or, in tubeless tires, prevents that pointed objects empty the air fromthe tire. It is important to stress that the invention stands out by presenting a difference between spacers and shields by means of the Shore hardness of the polymer being used. This particular feature reveals a new shield levels systems that
has four stages: the first is a shield that acts only as a spacer; the second stage is a shield, the third stage are accessories that can be attached to the rim or the shield itself that allow the tire to run airless with greater autonomy; and the fourth stage are two accessories that allow the tire to run with air or without air for the entire tireservice life. These differentials provide an advance to the state of the art that, if considering this particular anteriority, simply reveals a tubular protection restricted to bicycle tires that performs at a thickness range, with sole diameter and around ahardness that allows that the perforating object does not enter the inner tube, observing that it tries to ensure the technical effect by means of these parameters, which does not provide minimum knowledge to prevent the development of a broad protection to various tires and that has the capacity of even bending pointed objects, something achieved not restrictedly at a thickness and hardness composition, but through other accessories.

Further on the US 3982577, it is fitting to point out that the invention has theoption of being split, which generates two new effects: the universal fitting in several tire sizes and the damping. Furthermore, there is the possibility of using e of TPE and TPV additives with Shore between 50 A and 50D, in concentrations between 1% and 30% in polypropylene. What generates a performance of excellent balance between the necessary hardness to deform a nail and the necessary flexibility to have no cracks or breaks on impact testing with the use of 4% to 6% of TPE or TPVShore 70A. At this concentration, in addition to crushing nails, it allows the shield to have the capacity of being approved in impact testing without presenting cracks or breaks, in addition to bringing greater impact absorption and less hardness to the part. The anteriority, lastly, does not demonstrate the function developed by this patent of deforming the perforating object, in which case the shield deforms and the perforating object remains intact.

US 5679184 consists in a pneumatic tire and a device to prevent theperforation by pointed objects by means of the compression of an internal tube located inside the pneumatic tire. A deformable ring is revealed and not a shield that, when placed inside the pneumatic tire, it enters an inner tube and a rim prevents perforations or "snake bites" of the inner tube. Said ring has specific dimensions as well as a defined hardness of 90 Shore A, however, it does not indicate any proximity with the invention presented herein, which demonstrates a shield that is placed between the tire tread, external layer of the tire and the inner tube and has protection layers, with a particular set of hardness and accessories and that doesn't work by means of pumping air into a protection ring when it is perforated, as in the document in question.

GB 2024118 presents a puncture resistant tire that is designed to allow the tire to move without failing due to the heat caused by the shell friction action againsta puncture protector during the tire's flexion movement. It is comprised of aelastomeric shield layer that receives, as it is conventional, the perforating objects; the invention, however, is not based in an elastomeric layer that flexes and molds itself to the inner tube according to the perforation, and rather, to a resistant object that is formed in shield levels. A point that cannot create confusion with the anteriority is the fact that it can be dismembered into a few parts, however, the invention aims to protect regions fragilized due to some impact of the tire, in such amanner as to be able to increase thicknesses in certain regions, which, consequently, can have an unbalancing on the tire, and to compensate this unbalancing, it is possible to subdivide the shield into more sections: 2, 4, 8 or more equal parts. Another form of compensating the tire balance is to maintain the shield in a single part, but with small internal high reliefs, solutions which are not suggestedin the anteriority.

WO 2019133009 discusses that when changing the tire's design parametersto improve the running strength performance, other tire performance measures are sacrificed, such as handling and adherence on wet and dry ground. Consequently, there is a need to provide an improved strength performance without sacrificing the handling and adherence on wet and dry ground. The anteriority works in the sense of promoting greater tire strength by means of ribs, however, this document could not serve as a basis to seek a possible association with the invention, after all, the ribs revealed on the shield seek to increase their mechanical performance and
hardness to bend nails - such as ribs on the opposite direction to the movement orrandom that drive objects such as nails to bend on a manner with greater assurance of repetition. Alternatively, there can be ribs that provide better thermal insulation between the tire rubber and the shield creating an air layer given the relief with a predominantly triangular rib shape that has a thermal insulation effect, when the tireis moving, improves the shield performance in relation to the friction generated by the tire movement with the ground, which naturally generates heat, and the heat reduces the shield's Shore hardness. Thus, by means of these ribs, a technical solution exits to reduce the heat exchange of the tire rubber with the shield. In addition, the ribs bring a more robust mechanics to crush nails.

US 8959990 provides a tire pressure sensor unit placed on the internal wall of the tire tread in a rubber retention device. The retention device is connected to the internal wall, in which a sealing compound is applied to the internal wall, or in case of a retention device with a closed lower section that is connected to the internal wall, the sealing compound is applied to the bottom of the section turned towards the sensor unit. In case of a foreign object perforating the internal wall or perforating the internal wall and the lower section, the sealing compound prevents at least a short term pressure loss caused by the resulting puncture, in which the sealing compound almost firmly seals the puncture. The anteriority anticipates the possibility of placing sensors to control the tire pressure, other than that, it is distantfrom the inventive design presented.

US 5785779 demonstrates a protective tire lining positioned between the inner liner positioned between the inner liner and the external liner of a bicycle wheel, and in which the lining is formed by a perforations-resistant flexible band to protect the internal tube against damage caused by perforating objects and at least one covering layer being positioned on the perforations-resistant flexible band to cover at least the lateral edges of the same. The perforations-resistant flexible band has a relatively abrasive surface, especially in the lateral edges of the same, so as to be capable of wearing down the internal tube in relative movement. In proximity to the invention, the perforations-resistant band is preferably produced in a thin, flexible and light material, made of Kevlar wire, but with distinct constructiveness from the proposal.

US 8573271 presents a tubeless tire that includes a self-sealing layer placed in its internal wall to seal any perforations in service. The internal wall is covered with a self-sealing layer comprising a thermoplastic styrene (TPS) with a Shore hardness below 35. In regard to the patent, it is important to point out that there are no layers that form the self-sealing, but an assembly with reinforcement and a hermetic layer that promote the overlooked technical effects. Moreover, it anticipates the possibility of the self-sealing layer be made of PVC.

US 2016303909 reveals a safety tire in combination with a rim comprising anexternal tube; a reinforcement layer attached to the external tube and a plurality of partitions for dividing a space formed by the reinforcement layer, the external tube and the rim in a plurality of compartments. To leave out any doubts, the anteriority reveals a damping system formed by parallel elastic undulations in a part, whereasthe patent presents a single system formed by two arches that meet at the ends of the shield, or by structures in "X" that form repetitions to absorb more impact and generate greater flexibility to tire, therefore, being fully innovative before the anteriority.

US 2006151082 reveals a tubeless tire, containing an anti-puncture elementattached on the tire's internal part. The self-sealing element is composed of a layerof uncured soft rubber gum compound, reinforced with a soft texturized Nylon canvas that pushes the cured rubber gum into the hole and closes it. The patent reveals an accessory external to the shield, located between the shield and the tire,which can be made of Nylon, Teflon or PU, formed by parts with male and female fitting, being an optional accessory of the shield that can be made of Nylon (Teflon and PU are not mentioned in the anteriority) and that differs by the Nylon canvas being an essential component of the self-sealing element, applied on the element'sinternal part.

WO 2007035076A1 reveals a production method of solid flexible inner tubesfor tires, which are made of polyurethane elastomer material and that are
characterized by being to recover the original shape of the same, with the self- sealing of punctures. The patent reveals shield can be manufactured in composite PVC with scraps from the textile and automotive industries, and percentage of cotton as material load.

US 2010032069 reveals a puncture-proof tire assembly in which a rubber sealant or another material similar to rubber is pressed against the tire tread of the tire assembly in such a way that there is a higher pressure in this sealing chamber than in the inner tube, and the sealant comprising at least one fill, as well as a method to produce this tires assembly and the use of aqueous gels in the production of these puncture-proof tires assembly. It can be applied to automobiles, motorcycles, bicycles, baby carriages, wheelchairs, handcarts and similar. However, the principle can also be applied to tubeless vehicle tires or to motor vehicle tires. It refers to ordinary applications of the product in question. The patent, in spite of presenting the same applications, it refers to a completely different product. The applications are ordinary, in view that it refers to products directed towards the protection of tires.

EP 3450208 reveals a tire with an external tire tread, two layers of rubber onthe sides and a layer of anti-explosion internal rubber. The tire tread is formulated with the addition of 1.5 to 5.5 parts of carbon or graphene nanotubes, which improves the compound's conductivity. The patent reveals that the shield can be provided with polymers with 0.1% to 30% graphene additives, fiberglass or minerals. And that it can be manufactured in thermoplastics and thermosets with 0.1% to 30%of graphene. The anteriority anticipates the use of graphene on the tire formulation and not in a shield, and in different concentrations, which doesn't prevent the use ofgraphene different products.

FR 2868989 reveals a tire with a puncture-resistant internal sole and an internal support and an external sidewall protector with teeth, fins or vanes. The sole is made from a double steel wire web or a flexible steel plate within a 7 - 10 mm rubber or elastomer layer and covers the entire internal surface of the tire's tire tread. It can be fixed or removable, with the ends beveled at 20° for convenient fitting and removal. The internal support is made of rubber of flexible elastomer, covering the sole and ensuring the seal. It refers to a new type of tubeless tire, complete for all terrain and road, for all vehicles; a tire with sidewalls reinforced externally by a toothed circular crown or fins, and internally a puncture-resistant sole and a crown/stop on the edge. It refers to ordinary applications of the product in question. The patent, in spite of presenting the same applications, it refers to a completely different product. The applications are ordinary, in view that it refers to products directed towards the protection of tires.

US 4064922 reveals a sealant composition for punctures that comprises: a low molecular weight sealant in blend with a plasticizer substance plus a small proportion of high molecular weight sealant. The presented compositions can be painted directly on the tire, with different layers. The patent reveals an extra protection system for the shield, which must stay between the shield's internal surface and the inner tube or the shield's internal surface, being able to include a painting on the part with rubberized paint, this paint can be total or partial, preserving a few sliding regions of the damping system. Further, a bath with liquid rubber can be used, or even the part's full or partial over-injection. Said applying of paint is on the shield and not on the tire, as in the anteriority.

WO 2009078041 reveals a tire for automotive vehicles comprised of a rim, inner tube, externa shell and, between the, external shell and the inner tube, it has an anti-puncture protection band. The protection band is made of steel, carbon or any other flexible or resistant material. The band is cut according to the tire's dimension and undergoes a double machining process: i) Creation of a semicircle shape; ii) Wrap the strip over itself on the entire length to be lodged within the rim. the patent reveals that the shield can be manufactured by a machining process. Themachining process is known and here it refers to applying machining to a specific product, as it was done anteriority.

PI 0712143-1 reveals a flexible chamber located on the tire's internal part andthat conforms itself according to the material that perforates the tire (a nail, for instance) preventing inner tube perforation. The flexible chamber is comprised of an elastic material and a perforation-resistant reinforcement, and attached to one of the tire's sides. In one mode, the flexible chamber comprises a plurality of spheres arranged on the bed between the working tire tread and the sealing membrane, which can be coated with specific products prepared as a poly(tetrafluoroethylene) (Teflon) base or equivalent. The Teflon is also quoted as an example of specific application which comprises a perforation-resistant layer with three membranes of impermeability composed of elastic and perforation-resistant reinforcements, respectively separated by a dry lubricant layer and a Teflon lining. The invention reveals that the shield can be manufactured by Teflon shaping, the use of Teflon is not the same. In addition to the anteriority presenting a flexible membrane, totally different from the one proposed in the patent.

Another solution are the run-flat tires that present structural reinforcements on the flanks, shoulders and beads (the side and the tire attachment rim). When it is totally without pressurized air on its interior, the vehicle's weight is supported in this reinforced layer - the wheels do not stay directly on top of the tire tread. With this, it is possible to drive safely without occurring the tire breakdown with the vehiclein movement. An example is displayed on the document US 5795416 that reveals aseries of lateral reinforcements placed on the tire manufacturing process that the same can run even airless.

However, such inventions are not capable of meeting the sector's needs and have a common characteristic, the nail (or hard and pointed objects) can penetratethe tire, and the sealing solution takes place within the tire, with the nail (or hard andpointed objects) intact. There are document patents that present an aluminum core in sandwich with plastic, in addition to various systems on the market to prevent punctures on pneumatic tires, but that in any case infringe the tire tread depending solely on internal protection mechanism, keeping the nail intact.

There are still shields for car tires that are used for an eventual escape in case of use of firearms by muggers. There are metal bands that hold the tire on the rim even if deflated, having a 3-km autonomy; Nylon bands and Rubber band that are attached to the rim that can also be used between 5 to 50km.

Moreover, it is fitting to mention the wheels, above all the ones used for cars,gas-operated fork-lift trucks, mini-tractors, large civil construction machines and handcarts, however, they have no air, and are not characterized as pneumatic tires,and rather as solid or airless flexible solid. As it was also seen, the use is anticipated of protection bands, chemical liquids and injected layers that promote a given technical result, which allow the perforating object to perforate the tire and not be deformed. Differently from the similar solutions of the state of the art, this patent demonstrates that, by means of a thermoplastic and thermoset polymer shield, it is possible to create anti-puncture protection levels on tires of practically every kind of vehicle capable of bending the perforating object or protecting the tire from perforating objects. And this new part, i.e., the shield creates the protection levels by means of hardness of the material, type of material, thickness, geometry and temperature that the tire is submitted to.

### Novelties and objectives of the invention

To solve the technical problems still present, above all regarding the perforation of the tire tread in pneumatic tires, the invention revealed differs by presenting a differentiated technical effect of deforming the perforating object, for instance, nails.

In the present solution, the perforating object, when coming into contact with the tire tread, is bent and deformed, not allowing the perforating object to contact with the inner tube or with the air in case of tubeless tires. The perforating object penetrates the tire rubber, but when it strikes the shield, instead of perforating or damaging the same, the object is bent due to a hardness ratio between the shield and the tire tread added to the movement of the wheel and the tire.

For larger objects, such as screws in excess of 2mm in diameter, or nails shorter than 10mm long and diameter in excess of 1mm, it was possible to observe that the shield doesn't bend and deform the perforating object, but causes another new effect: the tire runs over the screw or the small nail, and instead of the perforating object emptying the tire air, the tire runs over the screw or the small nail and obviously the tire rubber is punctured, however, it doesn't reach/strike the inner liner or the air in the tubeless tire, and in this manner, thetire is not emptied, and doesn't lose the air pressure.

The developed system applies to any kind of pneumatic tire. From a handcart, a bicycle, tractor, agricultural vessel, up to a car or motorcycle.

It differs further for the possibility of being a part independent from the tire, i.e., independent from the tire manufacturing process, the shield can be manufacture separately from the tire, so it can be assembled to the tire in a tires factory, by a tire retreader, a tire shop, or even by an ordinary tire user, i.e., a person not specialized in tires.

The current invention proposes that a shield can be commercialized in an independent manner from the tire, as an accessory plastic part of a tire. Up to the current The State of the Art, the existence was identified of a few types of spacers for bicycles, sealant liquids for cars and motorcycles that are products with similar functions commercialized independent from the tire. But the current invention refers to a semi-rigid plastic part, i.e., a shield that after installed on a tire, it is capable to crush a nail and can be commercialized in an independent manner from a tire.

In addition to this innovative differential, when the shield is manufactured in thermoset polymers its application becomes more economically viable when used within the tires' manufacturing process, i.e., the shield is commercialized together with a tire.

The use of thermoplastics also allows that a part in thermoplastic is installed inside a tire within tires factory to be commercialized as a tire - dependent part, i.e., as an integral part of a tire. For that. The part can be installed in a tunnel (TU) proper for this application.

Therefore, the designs proposed for this invention enable a shield to be manufactured both in thermoset polymers and thermoplastic polymers, allowing these shields to be vulcanized, glued or welded to the tire, being an integral part of the tires, or used as an accessory, as an independent part, assembled to the tire.

It differs, further, for revealing the comprehension of the difference between spacers and shields by means of the Shore hardness of the thermoplastic or thermoset polymer used in this shield.

This difference between spacers and shields reveals a new shield levels system, which has four macro stages: the **first stage** is a shield that acts only as a spacer when it has Shore 80A and 40D hardness with thickness below 2mm; and when it has hardness below Shore 80A, in any thickness has the function of and iscalled spacer. A spacer increases the tire's protection by the thickness it has, whichcan be perforated by a nail, what protects the tire against punctures is the size of the spacer thickness, for instance, a spacer 12mm thick, protects the perforations from nails up to 10mm long, both the tire and the spacer are perforated and the perforating object is not deformed; The **second stage** is a shield that from Shore 40D to 100D in a thickness from 0.3mm to 100mm or with 2mm to 100mm with Shore 80A to 40D, it is already possible to observe that the two new effects of the shield can deform nails running over them without letting them empty the tire air, aswell as ensuring the use of the tire with a certain weight and for a certain autonomyto run airless and without letting tire stay low, stay flat (the tire with this system beingable to run airless for the tire's entire service life in some vehicles); the **third stage** contemplates the use of a shield with Shore from 40D to 100D, added to accessoriesthat can be attached to the rim or the shield itself that allow the tire to be able to runairless for a greater autonomy (or for the tire's entire service life in some cases); and the **fourth stage** contemplates the use of a shield with Shore from 40D to 100D, added to two accessories that allow the tire to run with air or airless or for the tire'sentire service life.

The shield, when not performing as a spacer, is a part that copies the internalsurface of a tire, and awards to this internal surface a layer thickness harder than the tire rubber, between Shore 40D and 100D with thickness of 0.3mm and 100mm;
or 2mm and 100mm using Shore between 80A and 40D. This part can be in thermoplastic or in thermoset polymer.

Therefore, a shield can be a part independent from the tire, produced in thermoplastic polymers and remain in their use detached from the tire.

It can also be made in thermoplastic polymer and glued to the tire rubber.

Optionally, when a shield is produced in thermoset polymer, it is essentially attached to the tire rubber, either glued or vulcanized to the tire - in this case, it becomes economically more viable that it is industrialized in a tire factory, but it can also be assembled and industrialized by a tire retreader, tire shop or a company specialized in tire recuperation.

Whether by means of thermoset or thermoplastic polymers, vulcanized, gluedor welded to the tire; or assembled on an independent manner from the tire, this new effect is achieved by means of polymeric blends, many of them already used for various applications, mainly in the automotive industry.

This polymeric blend needs to have at the same time hardness above Shore 40D, preferably between 70D and 90D, to have the capacity of crushing a nail. A pure engineering polymer shield PA6, PA66, PC, for instance, which has adequate hardness doesn't have sufficient flexibility to withstand impacts from holes, sharp reliefs such as a curb, among other ordinary obstacles to the use and application ofpneumatic tires.

Further, it is needed that this flexibility and hardness be maintained at hot and cold temperatures, from -30°C to 150°C and still withstand the prolonged exposureto high and low temperatures, so the use of two or more polymers, i.e., of polymeric blends and additives for mechanical and thermal improvement are essential to ensure hardness of Shore 70D, for instance, in a tire that is with an external temperature at 100°C, for instance. And the polymeric blend also needs to withstand impacts whether in high temperatures and low temperatures.

The prolonged exposure to temperature in thermoplastics can generate a molding post-contraction on the polymer and in this sense the shield can go back tocrystalizing again. In practice this means that a shield that heats up and cools down frequently can change the dimensioning and a few mechanical and thermal properties. Therefore, the use of polymeric blends stabilizes better so that the polymers can function stabilized even with constant changes in temperature.

Therefore, the solution and the novelty presented by this invention is that the polymeric blends are capable of uniting the two functions necessary for the optimum function of shiels for pneumatic tires, i.e., that of being unbreakable for its intended application and of maintaining itself mechanically stable from -30°C to 150°C, even with exposures in excess of 12 continuous hours at these temperatures.

What determines the shield thickness and hardness is the polymeric blend and its additives. There is an infinity of polymeric combinations, whether of thermoplastic polymers whether of thermoset polymers. For instance, a shield with a commodity thermoplastic such as the PP (polypropylene) with 1% to 10% of elastomer (TPV, TPE or TPO) and with a thickness of 4mm withstands a service temperature from -30°C to 70°C, which allows its application in practically any kind of manual traction vehicle, or of low motor traction such as 5km/h to 10km/h. This tire with a shield at 70°C is capable of bending a nail, and even so absorb impacts without rupturing.

For motor traction vehicles such as cars and motorcycles, blends with engineering polymers are recommended, PC/PBT; PPE/Nylon; ABS/PA; PP/EPDM; PC/PBT; PC/PET; PEAD/PA6; EPDM Rubber with Silicone Rubber (SiR); PP/TPU; PP/TPE; PP/TPO; PETG/TPE; SEBS/PC; PA/AES; PA6/AES/MMA-MA; PA/AES/EPDM-MA; PA/SEBS, not being limited to these, only to demonstrate that the blend must have hardness above Shore 40D and have modifiers for improving the impact absorption, making the shield unbreakable for application and being able to work in temperatures between -50ºC and 150ºC, or cover a range next to these temperatures.

The proportions of the blends and the additives, compatibilizing agents shall be defined in accordance with the tire application, whether defined by the operation peak temperature, whether by the capacity of the polymer to work in higher temperatures, absorb impact, as well as by the economic viability condition.

To define the shield's capacity to absorb impact and define that it is unbreakable, it is enough that the shield passes the impact testing proposed by the tire's standard that is being applied. Therefore, the blend needs to be unbreakable so that it passes the impact testing of the standard being applied corresponding to the tire.

A few high performance engineering polymers can also be a part of the blend, such as additives or as a main base, such as PEI, PPSU, COC, PES, PPA, LCP, PPS, PA 4.6, PA 12. These are polymeric materials that have high resistance to high temperatures of continuous use, above 180 °C. And, further, PI, PBI, PEEK andPAEK are a few polymers that can be used up to 300 °C.

That is, motor traction vehicles, such as scooters that reach 80km/h that use a less sophisticated blend of engineering polymers. Automobiles that reach 110km/h to 200km/h, another category of engineering polymers, being able to be developed, further, shields for tires that reach up to 350km/h.

The increase of thickness increases the part's mechanical capacity in bending a nail, and at the same time reduces the polymer's heat exchange , i.e., allows the polymer to heat up more when in use.

Therefore, additives such as graphene become import in the formulation of these blends, allowing a more effective heat exchange, in addition to reduce the thickness (so, the weight reduction) of the shield, maintaining the functions of thicker shields and still improving its strength against impacts.

Graphene enables the polymer a better memory effect and a greater quantityof repetitions of the same mechanical and thermal exercise.

Graphene has, further, a function of performing as an excellent compatibilizing agent, helping that different polymers acquire an adequate miscibility, so mainly for applying in motor traction vehicles, it is an essential additivefor blend composition.

Graphene also helps in the blend's thermal strength, being able to represent an increase from 10% to 50% of a blend's thermal strength.

Normally, from 0.2% to 0.5% of graphene is used in a blend, however, it is possible to use from 0.01% to 30% of graphene in a shield so that the same acquires the desired effect of maintaining the shield's Shore in 70D to 90D, for instance, so that it is capable of crushing a nail, and at the same time, an excellent strength against impact, achieving the characteristic of unbreakable plastic.

The shield can function as a part independent from the tire, which can be fitted and removed, or it can be an integral part of the tire. Thermoplastic or thermoset polymers can be used in both cases.

The shield can be installed in tires with inner tube or in tires without inner tube, tubeless, by means of vulcanization of the shield to the tire, or by means of installing a protection tunnel.

In tubeless tires, when a thermoset polymer is used, the shield can be vulcanized to the tire making it an anti-puncture shielded tire.

In tubeless tires, when thermoplastic or thermoset polymers without vulcanization are used, it is possible to use the created protection tunnel that allows a shield to be used in tubeless tires, and after the tire's service life, it can be easily removed from the tire and recycled, especially in the case of thermoplastics.

The shield developed in this patent has as main focus to perform in the field of protecting pneumatic tires against punctures from small metal objects such as nails, screws, *miguelitos,* wires and other objects that perforate the tire of vehicles.

A double function of this shield was discovered since it was possible to observe by the tests developed that the same anti-punctures protection enables the utilization of tire outside the ideal calibration, with less air pressure, but with the same capacity of load and ground adherence, and still enables that the same can be used completely airless, for a certain time.

It is known, however, that when compared to air-free tires, i.e., which don't use air, the pneumatic tires calibrated in an adequate manner and the air itself in pneumatic tires ensures a smaller fuel consumption in combustion vehicles as well as an use with less physical effort in vehicles driven by human strength. Since airless solutions tend to consume more fuel, they are, therefore, less sustainable than solutions that use air.

Another technology developed was a shield dimensional auto-adjust system:The problem is that each tire manufacturer has their own molds, technologies and small dimensional differences when measuring internal circumference of the tire's tire tread, the place where the shield is installed. For instance, a bicycle tire Rim 29x2.20 has different manufacturers and can have 10mm, 30mm, 50mm of difference (among different manufacturers) on the tire's internal circumference afterthey are filled. That is, to commercialize an universal shield system that can fit into the various dimensional variations of the manufacturers (considering the same tire model - in the example rim 29×2.20) the part's needs to have a good dimensional and elastic flexibility to compensate for the stretching when the tire is inflated. Withthat in mind, an open shield system was developed, with a cutout, which creates the auto-adjust system and allows the shield to adjust to the internal circumference fromthe various competing tire manufacturers This variation between same models fromdifferent manufacturers can be observed in all market segments: of handcart, cars,motorcycles, wheelchairs, agricultural vehicles, etc. Therefore, this solution attendsall tire segments.

The same auto-adjust system, which is an universal fitting system in all market models, still has a second function, which is that of generating a damping inthe tire, allowing the same to absorb impacts, open and close according to the speed applied to the tire as well as to be able to mold to impacts on holes and similar obstacles.

Different from a whole shield, with no cutouts, which only absorbs impacts by the kind of blend, the shield thickness and of their impact absorption accessories, ashield with cutout allows a rigid part to move accompanying the tire's natural movement, generating an additional impact absorption system to the tire.

Another new technology developed is that until the known current state of the art, in the shield system with damping by geometry, i.e., by the part's design, was presented. This patent presents various shield system with an impact absorbing function that allows the use of harder polymers to be used to perform the tire's protection. And to improve that, a rim reinforcement is foreseen that allows strengthening the shield in such a manner that it doesn't crack on the edge on impact situations.

The use of harder polymeric blends that use as main base the PP, PU, Nylon, PC, PETG on the tire interior generates new functions to the shield.

The first one is that for a few vehicles with shield, the very flexion of these harder polymers simulate the function of the air. That is, a tire with shield has a function similar to a run-flat tire. The difference to the run-flat tire is that a shield can protect the tire against punctures, being able even to bend nails, increase the tire's capacity, reduce the tire's air pressure, reduce the use of rubber on tires, ensure a more uniform wear, in addition to allowing that the tire can still run airless or flat. Another difference is that the run-flat tire uses the tire's side, leaving it even more rigid, however, the shield uses the tire's tire tread, leaving it even more rigid, however, with the possibility of having various damping system to prevent vibrations. For tires with shield after being emptied of air or limp still sustain themselves without becoming "flat" for a certain period of time, speed and controlled temperature. Thereare also accessories that can be used to extend the tire's utilization, even if airless, or ensure its function for the tire's entire service without the use of air.

Another characteristic particular to this invention is that on account of being a harder polymer it is possible to submit it to the exposure of heat. Therefore, the same constructivity can be used for installing the shield in a tire factory, producing a new tire direct from the factory with shield, but also allowing that specialized tire shops can assemble and shield new and used tires outside the factories, in their own facilities.

It is worthwhile to stress that to undergo the vulcanization process and enablea shield to be installed it is necessary that the polymer withstands the high temperature of vulcanization, in this case between 135 °C and 200 °C. Or else, it can also be a rubber vulcanized on the tire itself.

An important characteristic of the shield that can also be injected in thermoplastic polymers is sustainability; that after the tire is disposed of, the shield can be separated from the tire and be recycled. With the more uniform wear of the tire ensured by the shield, the tire can have an extended service life, in addition to allowing the reduction of using tire rubber, since the shield increases the tire's loadcapacity.

The possibility of using thermoset polymers bring a new characteristic to thetire, allowing a tire to be built in a single part with these new functions, the main onethat of being able to crush a nail.

On account of the shield bringing a mechanical support to the tire, the consumption of the tire's canvas and rubber can be reduced. This is a mechanical and sustainable benefit. When using a shield on a tire, its load capacity is increased.What defines the amount of load that a shield can support in excess to the capacity of the same tire without shield. The thicker or more ribbed, more load the tire is going to support. The Shore hardness of the shield material also influences, just as the temperature the tire is exposed to. That is how Shore 70D polymers support less weight than Shore 40D polymers. In the quality of exemplification, a handcart tire with a load of 100kg has 80kg of load on the tire and 20kg of load that the user conveys. That is how a shield 4mm thick in Polypropylene and TPV, is capable of supporting 80kg even with the tire completely limp or airless. That is how, with thickness of 2mm it manages to withstand only 45kg. The Shore hardness of the blend with polypropylene used in the testing is 70D, with the use of a harder Shore,80, 90 or 100D, it is possible to support more weight and have less interference to softening by means of heat.

The same testing was carried out with a motorcycle, with a shield in PETG 4mm thick, with a person on the motorcycle, in this case the motorcycle weighting 100kg and the rider weighting 80kg, that is how the shielded tire supported 90Kg as was also capable of deforming nails, run over small nails and large screws without emptying, even with 80 °C measured on the tire's external surface.

Another factor that distances this invention from the current state of the art isthat the shield can act as a protection system of an inner tube, but with the same constructivity (the same part) can be used on a tubeless tires (with no inner tube); that is how the geometries presented perform the protection of tires with and withoutinner tube, with small accessories developed for use in tubeless tires.

Another factor that distances the current state of the art is the design of a tunnel for protection against punctures. The tunnel is formed by the shield in thermoplastic or thermoset in polymer, isolated by a rubber layer with vulcanite, glueor binding rubber on the borders; or even with a blanket of tissue with rubber with vulcanizable edges to allow the tire's tire tread to be perforated, striking the shield without emptying the tire - since the tunnel has no pressurized air from the interior of the tire. The tunnel can also be used in some applications on tires with inner tube, providing greater safety and better isolating the hard shield from the inner tube.

Another factor is that on account of the shield being harder than the tire, thetendency of the tire with shield is to maintain the tire's diameter with its more correct dimension, it is common for the tire to empty with time, the shield leaves the tire in its best shape, wearing the tire down on a more regular manner, even out of the correct pressure.

Another factor is that by crushing a nail, it generates another novelty which is that of clearing the lane so that other vehicles don't perforate their tires, providing greater safety to the passengers from the various kinds of vehicles.

Another innovating factor is that the technology developed allows understanding four shield levels. Having that level 1 only protects by means of spacers (not being capable of crushing nails), level 2 protects against punctures being able to crush nails and support the tire's weight even airless - this level 2 provides six protection sublevels, and level 3 and 4 refer to the possibility of the tire using the pressurized air or not, being able to run with or without air.

Therefore, in addition to the anti-puncture levels, the same technology has the load support level when the tire is airless - the airless tire level is determined by the material, hardness, ribs, thickness of the shield and of its support accessories attached to the shield or to the tire's rim.

Therefore, level 1 demonstrates that the same design is capable of crushinga nail when it has Shore D above 40D; it has the function of spacer when it uses Shore D below 40D. Spacer is when the shield goes out of Shore 40D by the action of heat, which causes the softening of the Shore D polymer greater than 40D or bythe composition of the polymer that has Shore A below 80A. The shield being with the function of spacer, is uncapable of bending the perforating object, but is capable of serving as spacer, by means of its thickness, between the perforating object andthe inner tube, or the air in case of tubeless tires.

At level 1, it is still pointed that some materials between Shore 80A and 40D, for shields with thickness above 2mm, it is still possible to bend nails and support a little of the tire's weight even if airless, however, it is valid to note that with temperatures between 40 °C and 60 °C in the tire, these polymers tend to lose this function. Therefore, it is a critical region that can be used for shielding tires, however, it requires that nobler and engineering polymers be used so as to have a better thermal performance, between 60 °C and 100 °C. Pure polymers rarely present good stable characteristics to maintain the polymer's Shore between 40D and 100D and at the same time an optimum mechanical strength against impacts, So the use of additives in pure polymers and the construction of polymeric blends that act so as to maintain the shields' mechanical stability and temperature is essential. Further in this hardness range, the use of larger thicknesses such as 4mm, 6mm, 10mm or larger is recommended to be able to bend nails. Therefore, in this Shore range, so that the shield functions adequately, it shall probably become more expensive when compared to shields with Shore above 40D.

In testing, a 4mm shield in polypropylene with 6% of TPV, Shore 75D, with 100Kg of load on the tire, demonstrated the same capacity of bending a nail4mm in diameter by 30, 40 and 50mm long, both at ambient temperature, 25 °C, and at 70°C of temperature on the tire. That is, even if under high temperature, it was possible to maintain the shield's function of bending a nail for ordinary polymers such as polypropylene with Shore 75D.

The same shield was submitted to laboratory testing on a cylinder of 60cm in diameter running at 4km/h with an obstacle of 40mm×40mm welded to it,simulating an obstacle, for 48h and demonstrated that the PP/TPV blend, in addition to crushing a nail, also absorbs impacts for optimum function. The PP/TPV blend has brought the shield the characteristic of being unbreakable.

The same test was carried out with a 4mm shield in recycled flexible PVC, with scraps from the textile and automotive industries, with a percentage of cotton from raw material scrap, Shore 75D, with 100Kg of load in the tire, at a temperature of 25 °C it was capable of bending a nail; at 50 °C of temperature measured on the tire, it was observed that the shield softened and started to act as a spacer and it wasn't capable of bending a nail.

It was observed that even with low quality engineering materials, the shield already presents interesting performance results. It is understood, therefore, that with the use of engineering polymers, better results of temperature performance, mechanical strength and load capacity can be obtained with the airless tire.

The same test was carried out a shield 6mm thick in flexible PU, with lower Shore, Shore 40D, with 100Kg of load on the tire, at a temperature from 25°Cup to 70°C on the tire, it was capable of bending a nail, just as the shield with greater thickness proved themselves capable of bending a nail. The Polyurethane used on the teste is the same one used in damping system, and presented another novelty, when being perforated by a nail or a perforating object it presents an auto-regenerative property that at the moment in which the nail is removed from the polyurethane the same doesn't stay with the perforating object's diameter, and, rather, tends to go back to having a smooth surface; this case demonstrates that polymers with auto-regenerative properties can also prevent water from entering in tires, even after perforation on the tire rubber bya nail.

The base concept that defines the shield is to place a thermoplastic or thermoset polymer layer with Shore D in excess to 40D on the internal part of the tire's tire tread. According to the type and model of the tire and the vehicle that shall use it, the shield thickness, the hardness of the material and the type of material can vary to ensure the correct function of the shield. Therefore, as demonstrated next, a shield can function on a tire for handcart, wheelchair 4mm thick with polypropylene blend and an elastomer, since these vehicles work at 1km/h to 5km/h at a maximum temperature of 70ºC on the tire. On a motorcycle the shield should be 4mm to 16mm and have as a base the engineering polymers blend such as Nylon, PETG, PC, PU, with or without fiberglass load, graphene among other additives or even using similar thermoplastic or thermoset materials to withstand temperatures from -30ºC to 130ºC.

Some polymers function better both at very hot and cold environments, therefore, for negative temperatures, polymers adequate to this need must be used, as is the case, for instance, of Nylon that can work up to -40ºC, so blends with polyamides are better applied to large thermal variations, and places with negative temperatures.

In this manner, any thermoset or thermoplastic polymer blend can be used on the shield. As long as it has thickness starting from 0.3mm and Shore D in excess of 40D, it can already present anti-punctures protection properties froma few perforating objects.

In this manner, any thermoset or thermoplastic polymer can be used onthe shield. As long as it has thickness starting from 0.3mm and Shore D in excess of 40D, it can already present anti-punctures protection properties, and from 1mm it can already support a little weight on a few tires.

Having developed the current arguments, it is understood that this patent proposes a four-level shield system. The first level being the use of the geometries developed for a shield using a Shore below the one recommended to crush nails, in this case with Shore 20A to 40D, these shields perform moreas spacers, and it is known that there is an intermediary range between level 1 and 2, in a few types of polymers more than 2mm thick between Shore 80A and 40D can also present a good performance at protection from small perforating objects, but this range starts to demonstrate better results with higher temperature with thickness from 6mm.

The second level is a shield that uses thermoplastic or thermoset polymeric blends that have as characteristic having Shore 40D to 100D. These shields can already deform nails and ensure an optimum tire function, even if limp or airless, such as presented in the table below, shield level 2 has another six sublevels.

The six sublevels of shield level 2 by load capacity and anti-puncture protection.

| Level 2 | Shore 40D to 100 D | | | | |
|---|---|---|---|---|---|
| | Weight | Thickness | Load | Diameter | Length |
| Sub Level 2.1 | 0KG to 250kg | 0.3mm to 6mm | 0kg to 50 kg | 0.3mm to 4mm | 1mm to 5mm |
| Sub Level 2.2 | 0kg to 500kg | 6mm to 10mm | 30kg to 200kg | 0.3mm to 5mm | 1mm to 50mm |
| Sub Level2.3 | 0kg to 1400kg | 10mm to 20mm | 100kg to 500kg | 0.3mm to 20mm | 1mm to 70mm |
| Sub Level2.4 | 0kg to 2000kg | 20mm to 30mm | 300kg to 1000kg | 0.3mm to 30mm | 1mm to 100mm |

| | | | | | |
|---|---|---|---|---|---|
| Sub Level 2.5 | 0kg to 4000kg | 30mm to 40mm | 300kgto 2000kg | 0.3mm to 50mm | 1mm to 200mm |
| Sub Level2.6 | 0kg to 10000kg | 40mm to 100mm | 300kg to 4000kg | 0.3mm to 80mm | 1mm to 400mm |

This table considers that the shields use polymeric blends adequate with the tire's need. Therefore if the tire has its peak working temperature at 60ºC itis considering that this shield uses a polymer with working temperature between 60ºC and 70ºC.

Next, the definitions of the table's columns are described:
**Level:** demonstration of six-level scale from Shore 40D to 100D. It is possible that more levels be created increasing the shield thickness. Up to 100mm for instance, for use on large machines.
**Weight:** is the weight under the tire with pressurized air. For using the airless tire it is necessary to use the maximum load reference indicated in the load column, and if accessories (222) and (222AM) are included, which shall be best discussed later, the multiple is used for reference of the load capacity.
**Thickness:** shield thickness. Above 6mm the thicknesses can contain mass reliefs and ribs, since the objective is to prevent punctures and to ensurea mechanical robustness so that the tire has autonomy even airless it is not necessary that the shield is massive, it can contain ribs and mass reliefs.

The use of graphene can reduce the blend thickness from 10% to 90%.

**Load:** load that the shield can convey with the airless tire and without considering (222) and (222AM). The variations occur since there are tires of larger and smaller diameters. To obtain the load value considering (222) and (222AM) multiply the load value by a multiple of 2 to 6. Example: sublevel 2.3, thickness from 10m t 20mm, load = 100kg to 500kg, considering the use of (222) and/or (222AM) the airless load capacity rises to 200kg to 3000kg, depending on the materials used on (222) and (222AM).

**Diameter:** diameter of the perforating object;

**Length:** length of the perforating object;

For solutions that need autonomy without the use of air above 200KG, the use of (222) and (222AM) is recommended.

**Tire temperature:** must use a polymeric blend adequate to the tire use temperature. To obtain these results it is necessary to select a material adequate for the shield in accordance with the tire's operation thermal need. Example, fora tire that works up to 70ºC, the blend base with PP and Nylon, which resists at this temperature, must be selected. For a tire that can work up to 130ºC a blend must be selected from among, for instance, PC/PBT; PPE/Nylon; ABS/PA; PP/EPDM; PC/PBT; PC/PET; PEAD/PA6; EPDM Rubber with Silicone Rubber (SiR); PP/TPU; PP/TPE; PP/TPO; PETG/TPE; SEBS/PC; PA/AES; PA6/AES/MMA- MA; PA/AES/EPDM-MA; PA/SEBS, or polymeric blends that withstand this temperature, have sufficient impact to make the shield unbreakable for the standards applicable to the corresponding tire.

| Greater percentage of the polymeric blend | Working temperature* |
|---|---|
| PP | 60ºC to 80ºC |
| PP with fiber | 80ºC to 100ºC |
| Nylon | 80ºC to 100ºC |
| Nylon with Fiber | 100ºC a 130ºC |
| PC | 100ºC a 110ºC |
| PC with fiber | 100ºC to 130ºC |
| Pet | 60ºC to 80ºC |
| Pet with fiber or PTFE | 80ºC to 100ºC |
| PETG | 80ºC to 130ºC |
| PPSU | 130ºC to 180ºC |
| Peek | 200ºC to 260ºC |
| PTFE Teflon | -200ºC to 260ºC |

The above table demonstrates thermal resistance values of some ordinary polymers; these values can change according to the grade or the technical specification of the polymer. The values are illustrative, considered for mere demonstration of the selection function of a thermoset or thermoplastic polymer according to its capacity of working under high temperatures. It is evident thatin an universe of polymers in the current days it is possible to obtain other polymeric blends with properties from -50ºC to 300ºC, in accordance with the shield application, the base of greater percentage of polymeric blend, whether it is thermoplastic or thermoset, shall be selected in accordance with the tire application. If the tire can reach 100ºC, a blend must be selected that can work without losing their chemical, physical and thermal properties working on a continuous mode at this temperature.

For the material to present given technical characteristics of being able to crush a nail and support tire load even airless, it is necessary to respect the tire's working temperature. Therefore, if the tire works normally at 100ºC, it is necessary to select a polymer that resists working with 100ºC or 20% to 50% more than the indicated temperature, so as to have a more adequate sizing and survival of the shield.

After selecting the base polymer it is necessary to select the polymer compatible with the blend, as well as, if necessary, the compatibilizing agent. For instance, PP merges well with elastomers such as TPV, TPE, TPO; these elastomers with PP don't need compatibilizing agents and the blend miscibility achieves mechanical properties adequate for optimum shield function up to 70ºC.

In the case of using PA6 with PEAD, for instance, the use of the compatibilizing agent PEgAA allows ensuring greater impact strength to the PA6, maintaining the thermal properties of the PA6 at 100ºC. The use of loads such as fiber as well as graphene can increase from this blend's thermal capacity from 10% to 50%.

So, it is worthwhile to stress that a composition of some factors is necessary for a shield to acquire good functions of being crush a nail and become unbreakable, such as: shield thickness, thickness of the shield edges, blend composition, use of compatibilizing agents, use of mechanical additives and thermal strengthening additives, use of graphene, assembly process - if vulcanized to the tire or if independent from the tire.

According to the composition being used it is possible to customize a shield for any application in pneumatic tires.

The third shield level considers the use of (222) which is a part similar to Nylon or rubber belt already used for shielding automotive rims. The differenceis that in this case (222) acts as a stop for the shield, controlling the tire's damping. That is, (222) acts so that the shield doesn't enter into its plastic deformation, always performing with elastic deformation. Therefore, the shield supports the vehicle's weight and when it sustains an impact it strikes (222) which limits its movement so that there is no plastic deformation of the shield.

In the fourth and last shield level it is the element (222AM) that performs in a manner similar to what happens with tires of the airless type such as the tweel of the company Michelin, *but* stablishing a connection from (222) up to the shield by means of a flexible structure capable of absorbing impacts and at the same time support the vehicle's weight. The difference between this system and the one from Michelin, is that this system creates the function of working airless, with an ordinary tire and an ordinary rim, the new function takes place within a vehicle's ordinary tire, with no need of changing a car's, and, rather, fitting these new accessories to the tire.

This forth level is so important that (222) and (222AM) can transform intoa single part. This part can be fitted to the rim or the shield so as to allow the tire to function perfectly without using air, i.e., as an airless tire, for the tire's entire service life. It can, further, vulcanize (222AM) integrating it to the tire, as well as using polyurethane in this solution, generating an optimum mechanical strength and impact absorption.

However, different from the airless tire, this system allows the tire to useair or run airless. There is an economy of the vehicle's fuel when air is used, but when air is not used on the tire, the vehicle functions perfectly, it shall only make the vehicle consume a little more fuel, and lose a little of the comfort providedby the air. But such application results in benefits mainly for autonomous cars.

This function of working airless for the tire's entire service life takes place both with the element (222) alone and with (222AM); it so happens that with (222AM) it is possible to have greater impact absorption and greater load capacity, using the same shield thickness.

The same polymeric blends used on the shield can also be used on (222AM)

And the great difference of this kind of system for airless type tires is thatit can deform perforating objects from the road and function perfectly with or without air. In addition to working inside an ordinary tire and rim already existing on the market, therefore being a tire accessory and not a new tire.

Obviously the possibility exists of creating new tires with this solution, as already explained.

Therefore, the factors that influence the shield are:
1. Shore of the material, the harder they are, they tend to have greater protection and resistance to temperature;
2. Type of the material, depending on the temperature in which the tire needs to operate it is necessary to select a polymer that has a working temperature compatible with the tire's need for the blend to function in an adequate manner;
3. Compatibilizing agents: compatibilizing agents have the function of helping that two or more polymers mix so as to create structures with mechanical and thermal properties adequate to the shield use.
4. Graphene: the use of graphene helps the optimum fusion of the blend polymers, provides better impact strength, being an additive of excellent applicability to reduce shield thickness and allow an optimum function of the same mainly for use of shields in motor traction vehicles.
4. Shield thickness, using materials with Shore D above 40D, the thicker the shield the greater its strength for high temperatures and load capacity;
5. Thickness of the shield edge: When a shield uses edge, as in the case of rounded edge - motorcycles, bicycles, handcarts - the possibility of cracks exists when the shield edge is very thin, thus 1% to 200% is recommended on the edge increase (LA) to prevent cracks from appearing on the edges. The increase of edge thickness also allows that a greater radius is used at the end of the shield, ensuring a less aggressive contact of the shield with the inner tube or with (2VU)
6. Tire temperature, the greater the temperature the tire is submitted to, the greater the thickness the shield needs to use. Or more additives and engineering polymers shall be used in the blend. It is known that the thinner the shield the better its heat exchange, so the use of additives such as graphene and/or fiberglass can ensure an excellent heat exchange, ensuring that the shield works even if for many continued hours at high temperatures;
7. Tire speed, the greater the vehicle's speed, the more it can produce heat, so more thickness or additives as well as engineering polymers the shield shall need to use;
8. Tire size, the greater the tire, the greater the shield thickness;
9. Size of the perforating object, the greater the perforating object, the grater the thickness that needs to be used to shield the tire.
10. Installation: if the shield shall be fused to the tire, by the vulcanization process or another form independent from the tire shall be used, i.e., internally between the tire's internal surface and the inner tube, but as a separate part.

This shield levels system, allows a broad range of shield industrialization. The industrialization process shall depend a lot on the vehicle. A wheelchair, handcart or bicycle tire can use extrusion process of thin profiles, from 0.3mm to 1mm, which can be wrapped in one, two, three or more turns on the tire's internal part, or in in one, two, three or more parts with the diameter of the tire itis being applied to.

Likewise, the extrusion process can be used for manufacturing thick profiles, 2mm to 20mm thick, and also wrapped in coil so that it can be used in large machines. Since the profile can have a circumference length of 30cm to 20 meters, which encompasses practically every kind tire for large machines.

The thermoplastics injection process is currently considered as the best cost-benefit for the larger volume vehicles used on the market, such as bicycles, handcarts, motorcycles, cars.

Further, the solutions presented by the rotational molding, blowing, thermoforming process can be obtained. That for large machines, due to the cost of the molds being reduced, they can bring a better economic viability.

The rubber vulcanization process as a shield, whether in the manufacturing process of new tires, whether in tire shops in new and used tires, it can also be used in small or large vehicles.

Therefore these levels depict the shield function concept, not being limited, having that a bicycle shield functions in the same manner as a car shield. The materials can change, the thicknesses can change, and the Shore D can change, respecting the base concept of initiating a shield with Shore D 40D upto 100D, at a thickness of 0.3mm, being able to reach 100mm or more, depending on the application. The tests carried out prove to that below 40D a greater vulnerability to temperature exists, and for the shield to function between 40D and 80A needs greater thickness to maintain the property of crushing nails and supporting weight airless.

In spite of not being usual, a few military vehicles can use an aramid blanket superimposed to the shield, both in the top part and bottom part to shield the tire in the same shield process of a car, being able to use this solution in tires with inner tube or even in tubeless tires.

Therefore, it is possible to use a shield or more than one shield in a tire, oneoverlapping the other, with or without attachment, with or without Kevlar, carbon fiberglass blankets or aramid shield blanket, in addition to other synthetic fiber and resin blankets.

This compound or composite formed by shields of a military nature can receive or not receive an over-injection of elastomer, rubberized paint or external liquid rubber in such a manner that they cannot damage the tire, the inner tube (15) or (2VU). It can be installed between the tire rubber (11) and the inner layer (15) ortunnel protected by (2VU) which can be used in tires with inner tube or without innertube. They can, further, use the elements (222) and (222AM) on a joint or separatemanner, allowing that the tire, even if empty, does not in its limp or flat shape.

Depending on the thickness and hardness, the shield can be capable ofbe capable of protecting against punctures from *miguelitos.*

Further for extreme shield applications, it is possible to over-inject the shield under a aramid, Kevlar, carbon blanket or even glue an aramid blanket to a shield, which generates greater protection against punctures and in a few cases the possibility of shielding the tire against shots from firearms.

Shields do not disrupt the TPMS (Tire Pressure Monitoring System) sensors.

### Tests carried out

Important to highlight that the characteristic of bending a nail for large nails, longer than 10mm, in the testing carried out on nails smaller than 10mm nailed on a wooden board, maintained themselves intact, were not bent and did not empty the tire. Large nails, larger than 10mm when striking the shield were bent by the tire and by the shield.

A shield in Polypropylene with TPV (shore 75D) blend, 4mm thick, with a load of 100kg on the tire was capable of bending nails with a diameter of 3mm, 4mm and 5mm with lengths from 15mm to 50mm. The same shield wasn't capable of crushing nails with a diameter of 3mm, 4mm and 5mm with lengthsof 10mm or less. This is explained by the fact that larger objects create a greater angle of inclination after penetrating the tire rubber when moving. Therefore, larger objects incline more and can be deformed, whereas objects smaller than 10mm are not deformed, but also cannot penetrate the shield and perforate the tire.

In the case of screws, they are not bent on account of having greater mechanical structure; however, screws cannot perforate the shield, therefore, even for objects with great perforation potential such as a screw from 5mm to 8mm, a shield 4mm thick in Shore D 75D is capable of preventing the perforation with 100kg of load at 70ºC of temperature on tire, using a commodity polymersuch as polypropylene.

With greater speed on the vehicle and greater hardness on the shield it is also possible to bend smaller objects.

Screws were also used on the same wooden board, screws from 5mm to 10mm thick and 15mm long which didn't bend, in the same manner as the small nails, with length below 10mm. Which demonstrates that even objects with larger diameters have great difficulty in penetrating a more rigid polymer (Shore above 40D) on an abrupt manner, different from more flexible polymers such as the tire rubber.

The fact of not crushing the nail and the screws did not prevent the shield from fulfilling its main function and preventing the puncture, just as in the testing carried out with temperatures on the tire from 25ºC to 70ºC the shield wasn't perforated by these perforating objects, fulfilling their function of protecting thetire against punctures.

A shield in Polyurethane with Shore 40D, 6mm thick had the same behavior of the shield in Polypropylene with Shore 70D, 4mm thick. Which demonstrates that when increasing the Shore it is possible to reduce the shield thickness for some cases. However, shields with less thickness, in PET and PETG tend to have better elasticity, and can deform without being perforated. Therefore, the shield's elasticity also influences its power of protection.

Extruded profiles with thicknesses from 0.3mm and 0.5mm were tested. In this shield system the PET and PETG material demonstrated to be effectivein the protection from small nails. And the increase of protection against punctures was observed when wrapping more than one turn of extruded profile on the tire. The plastic material deforms, and prevents the perforating object from striking the inner tube, the first layer punctures, but reduces the penetration force on the second layer and so on, successively. Therefore, for some perforating objects it is possible use thinner thicknesses on the shield. Obviously, the protection from the profile 0.3 and 0.5mm thick is inferior to the protection from the shield injected a thickness of 4mm , but from 2 turns on thetire it is already possible to prevent some kinds of perforating objects causing less vibration than the 4mm shield. The more turns are given on the tire, greater thickness the shield achieve, so, it shall protect from more objects of different sizes.

In this case the use of blends with PET or PETG is essential to improvethe profile's impact strength, as well as using the edge reinforcement (TA) to prevent that the profile's edge may crack and then perforate the tire.

Tests carried out allowed understanding the shield's behavior in various tires, with and without inner tube, various thicknesses, materials, hardness of materials, and temperatures.

Tests with 100kg of load on the tire, demonstrated that shields with thicknesses from 3mm and with 25ºC of temperature on the tire, with Shore 50D, in recycled flexible PVC, from scraps from the textile industry, were capable of bending nails larger than 10mm long and 3mm in diameter. From the temperature of 50ºC, the material, on account of being flexible, changes its hardness and loses the function of bending nails, working only as a spacer.

In this manner it was possible to understand that some materials work adequately at ambient temperature can lose their properties when heated. Therefore, any thermoplastic or thermoset polymer can be used in the shield. If the tire application requires 100ºC, PETG, PC, Nylon, Nylon with fiber, PU among various other polymers can be used as base of the polymeric blend that fulfills the specification of having good elasticity, not being brittle, and withstand the temperature necessary for the optimum tire function. Tires that work up to 50ºC can use, for instance, pure recycled PVC. It is still valid to point out that there are various additives on the market that are possible to be added in the polymeric blends so that, with their addition, it can:
1. Increase the polymer's elasticity, preventing that the same ruptures with the penetration of the nail
2. Increase the thermal resistance, there are TPE's for instance that withstand up to 150ºC depending on their formulation
3. Increase the mechanical strength to bend smaller and larger objects.
4. Reduce the thickness - the use of graphene in the blend allows reducing the shield thickness

Therefore, what is intended with this explanation is to point out that various polymeric blends can be created to address specifications from various market segments.

Tests with 100kg of load, materials of Shore 70D from 0.5mm presented good performance for small nails 5mm long and 1mm in diameter, in this case the nail didn't bend, but also it wasn't capable of perforating the inner tube, making the tire pass over the nail without perforating the inner tube, with the use of more 0.5mm layers it is possible to increase the diameter and the length ofthe objects in a proportional manner.

Tests with motorcycles, with a load of 100kg on each tire, with materialsof Shore 70D and 2mm, 4mm, 6mm thickness were capable of bending nails various sizes. Nails from 15mm long and 3mm in diameter were bent when struck by the tire with a shield. In screws 10mm long and with a diameter of 5mm to 8mm were not bent, but also weren't capable of perforating the shield, the tire runs over the nail or the screw and is interrupted by the shield, so it cannot reach the air in tubeless tires or an inner tube.

In this manner it was possible to understand that what enables a nail to be bent is: Shore of the Shield Material, Shield Thickness, Temperature that the shield is submitted to, tire speed, shield design (geometry), length and diameterof the perforating object.

It was possible, further to observe that what makes a shield have adequate impact strength to become unbreakable for application on pneumatic tires was: use of polymeric blends, mixing mechanical and thermal properties of polymers; as well as the increase of the shield edge thickness (TA) which provided two new properties - the first one of allowing the inclusion of a greater radius at the end of the shield, and the second one of preventing cracks being formed at the end of the shield, oversizing the same to prevent breakage and cracks at the end, strengthening the effect of making the shield unbreakable.

It was possible, further to understand that a few small-sized pointed objects were not deformed, such as small nails; as well as small pointed objectsof great thickness, such as screws. But it can be observed that none of these objects was capable of perforating the shield using adequate materials, with the tire's correct operating temperature, which uses a material that withstands its operating temperature. In the adequate condition of the part's temperature, thickness, hardness e design it is possible to apply the shield in various segments of the pneumatics market.

To shield the tire against *miguelitos* and thicker objects, it is necessary to use shields with thicknesses greater than 4mm. From 4mm to 20mm it is already possible to shield a tire with polymeric blends of Shore 40D a 100D.

### On the shield thickness

When a shield of the same material and same Shore D is compared, in the same conditions of temperature, tire speed, the less thick the shield, less rigid it stays, i.e., which provides greater comfort to the user, since it leaves the tire less hard, so it produces less vibration. However, the less thick, more susceptible to temperature and penetration of larger objects the shield shall be, and shall need to use more expensive polymeric blends of engineering to have the proposed effect.

In the same manner that the thicker, more protection against punctures it provides and greater resistance to temperature without losing the adequate hardness to protect the tire. However, the thicker the shield gets, more recommendable is the utilization of the impacts absorption systems presentedin this patent. As well as the utilization of a surface between the shield and thetire with Shore D or Shore A inferior to the Tire's Shore so that there is greater absorption of impacts and less vibration.

On the other hand, shields less thick and that use graphene for instance mange to enable an optimized heat exchange, and so allow that shields can be thinner and lighter.

Shields injected with blends in PP, Nylon for instance, can use thicknesses of 2mm to 6mm and are already capable of protecting from a broad range of perforating objects. Shields 6mm to 20mm thick can be used for vehicles that need more speed or even for large civil construction machines, tractors and other agricultural vehicles.

Various other polymeric blends can be used having polymers such as PC/PBT; PPE/Nylon; ABS/PA; PP/EPDM; PC/PBT; PC/PET; PEAD/PA6; EPDM Rubber with Silicone Rubber (SiR); PP/TPU; PP/TPE; PP/TPO; PETG/TPE; SEBS/PC; PA/AES; PA6/AES/MMA-MA; PA/AES/EPDM-MA; PA/SEBS, vulcanized rubber, among others as a main base; the thicknesses can vary from 0.3mm to 100mm depending on the application, however, on special tires thereis in the limit of thickness.

Shields extruded in profiles that have polymeric blends with main base in PU, PP, PET, PETG, for instance, with thicknesses of 0.5mm that are wrapped from 2 to 4 turns around the tire, achieving thicknesses from 1mm to 2mm, also have the possibility of protecting against various perforating objects such as nails and other objects, without deforming them, but protecting the inner tube of the bicycle tire, for instance.

Shields with 2mm to 400mm of Expanded PVC, EVA with Shore 20A to 40D bring comfort, but tend to act as spacers, without having the function of bending nails. In the range from 80A up to 40D, on account of being a transition range, in thicknesses greater than 2mm, some polymeric blends can also bend nails, but better results are observed from 6mm of thickness in this intermediary hardness.

Shields with thicknesses from 2mm to 400mm that use recycled materials such as SBR scraps, crushed and glued, which for a disc in the shape of a shield have Shore between 80A and 40D, can also crush nails, but below 80A function only as spacers.

Interesting to point out about the thickness, is that as the shield is a protection element, two or more shields can to perform the tire's protection. Among the shields, you can have, or not, a blanket or a more flexible over-injected element, to prevent the shields from generating noise. It is interesting since a same part can generate distinct protection levels. Since, for instance, a 2mm shield of a blend with main base PP can protect against nails in 2mm of diameter by 10mm in length, and two shields can protect for nails in 4mm of diameter by 50mm in length. Therefore, a same part can address different needs from different users of the same product. Likewise, 2mm support up to 45kg, whereas 4mm can support from 80 to 100kg on an airless tire.

### On the shield material

The material that had better performance in constructing a shield were the polymeric blends, since it is necessary that a shield stabilizes with Shore 75D ata temperature of 100°C, but to be unbreakable at the same time, therefore, the use of blends with or without the use of compatibilizing agents, with or without the use of graphene, it is possible to maintain a shield with Shore 75D at 100°C, even with 4h, 10h of continuous tire use, keeping the shield unbreakable.

In this sense, it is necessary to conceive blends that unite these functions and that, at the same time, can be less thick as possible, to add the lesser possible weight to a vehicle.

On the conventional elastomers the Shore hardness varies between 20A and 90A. According to the Standard ASTM D 2240, for more rigid materials, the hardness readout above 90A must be made on the scale Shore D. So, the rigid thermoplastics present hardness superior to hardness Shore 45D. TPE, for instance varies from Shore 30A to Shore 60D. PVC and other flexible polymers also start on Shore A and end on Shore D.

For a shield to function, it is enough that the hardness Shore D of the thermoplastic or thermoset polymer is superior to Shore 40D. From Shore 45D and 50D, the shield has an even better performance. Between Shore 80A and 40D, some thermoplastics and thermosets polymers can present the same effect of bending a nail when they have thicknesses above 2mm, but present better results above 6mm.

It is important to point out that depending on the thickness of the material and the temperature it is applied to, the Shore can soften more or less easily.

When adding the elastomer in the shield composition, the rigidity can be lost, i.e., the greater the percentage of elastomer added to the Polypropylene (PP), for instance, the smaller the shield's elasticity module shall be, and less rigid the part shall be. Therefore, for a shield to function correctly, it is necessary to calibrate: 1) the shield thickness; 2) the percentage of elastomer adequate to the application; and 3) the edge reinforcement optimum to prevent breakage. For each kind of vehicle, it is possible to customize these parameters, considering that the shield must be rigid enough to crush a nail of 5mm in diameter and flexible enough not to break during the use of the vehicle in question, respecting the temperature which this tire is submitted to.

The use of elastomers (rubber) in the formulation such as PP+TPU, PP+TPV, PP+TPE can be within a range from 1% to 40% of TPV or TPE. In testing with a concentration of 6%, this mixture maintained the part rigid enoughto deform the nail and flexible enough not to break in the impact test. What is concluded is that the addition of elastomers on the polymers, in general, increases the polymer's impact strength. In this case it was possible to increase the impact strength from 2 to 30 times compared to the use of pure PP.

Notwithstanding, the addition of the Blend PP+TPE, PP+PTV or PP+TPU presents, in addition to the toughening effect, the increase to the shield's thermal resistance, as well as the impact strength on low temperatures from 0 °C to - 10 °C or from 30 °C to 70 °C. At the temperature from 15 °C to 60 °C it is observed, further, that the blend is capable of not letting the shield break in impact testtrials IZOD (ASTM E23, ASTM D256 (Izod), ISO 180 (Izod), ASTM F648 (Izod)), and in tires impact trials.

There is a vastness of possibilities of thermoplastics and thermosets polymers with this characteristic that can be applied in this solution. As well as some polymers that can be developed to have better performance in this application.

It is valid to point out that countless studies and new materials are being created with the evolution of graphene in the plastic industry. Therefore, regardless of the polymer to be developed in the future, graphene can be used in various thermoplastics e thermosets polymers with the intent of making the materials more resistant to temperature and mechanically better. With the evolution of the plastics, and the use from 0.1% to 30% of graphene in thermoplastics and thermosets, it shall be possible to have shields more resistant to temperature, thinner, which generate less vibration, which are more elastic and less susceptible to rupture with pointed objects, and that provide greater protection to the tires that use shields.

The use of a few additives for mechanical improvement as well as the useof graphene in the composition can allow the shield never to break, and have an adequate performance from -50 °C to 200 °C.

In one of the tests a shield 4mm thick in flexible PVC with Shore 50D was used; for instance, this shield was capable of bending a nail up to 50ºC. The useof graphene could maintain the Hardness Shore 50D and provide to it a strength between 60 °C to 80ºC, for instance, and in this manner, PVC which is a cheaper material, could have application in other kinds of vehicles. Likewise, the use of PVC with ABS blends could award a better thermal stability to the PVC. So, the objective of this invent is to maintain an internal layer to the tire with hardness above Shore 40D to prevent punctures, regardless of the kind of material used, the understanding is that with Shore above 40D to 50D it is already possible to bend a nail as well as having various other advantages as well as supporting the tire, even if airless.

In addition to the graphene various other materials are used as load to generate thermal and elastic benefits in various products, and can be developed to address new demands from various vehicles.

Sustainable materials can also be to a shield. Like the example of recycled thermoplastics, crushed SBR from scraps from the footwear industry (and other industries), among others. SBR is crushed, cold-glued, with heat or vulcanized, becoming a solid part that doesn't come unglued nor crumble; it can be used, further, as a spacer between the tire and the shield or even betweenthe shield and the air or an inner tube to serve as a spacer and reducer of the sonorous noise and vibration.

In the same manner as the SBR, used tires can be crushed, cold-glued in molds, with heat, or vulcanized and as spacers or, by means of loads and additives can also changer their hardness to also have the capacity of bending nails and support the tire weight.

Materials with Shore below 40D can be used in the same constructiveness presented, however, they lose the function of bending a nail and support the airless tire weight, functioning only as spacers, i.e., the shield thickness defines the size of the perforating object. Some polymers between 40D and 80A can have the desired shield effect with thicknesses above 2mm, having better results above 6mm.

### Shield super-materials

Some super-materials can be used in the shield:
(1) Shore between 80A e 40D, working temperature between 100ºC to 150ºC(as is the case of some TPE);
(2) Shore between 40D and 100D, working temperature between 100ºC to 150ºC;
(3) Some blends: PC/PBT; PPE/Nylon; ABS/PA; PP/EPDM; PC/PBT; PC/PET; PEAD/PA6; EPDM Rubber with Silicone Rubber (SiR); PP/TPU; PP/TPE; PP/TPO; PETG/TPE; SEBS/PC; PA/AES; PA6/AES/MMA-MA; PA/AES/EPDM-MA; PA/SEBS,
(4) Further, a few additives can be added so that polymers achieve Shore80A to 100D, with operating temperatures from 100ºC to 200ºC.
   a. Additives for Recycled Flexible PVC achieve 80ºC of operating temperature;
   b. Additives for Nylon and Nylon with recycled fiber achieve between 100ºC to 150ºC of operating temperature;
   c. Additives for PP and PP with recycled fiber can work at 80ºC;
   d. Additives for crushed SBR, glued and recycled achieve Shore D above40D and can work between 50ºC and 80ºC; or between 100ºC and 200ºC
   e. Additives for crushed and recycled Tire Rubber achieve Shore D above40D and can work between 100 and 200ºC;
   f. Additives for expanded PVC and EVA.

### On the temperature the shield can be submitted to

Initially, it is worthwhile to point out that this study gave preference to always collect the temperature from the tire and not from the shield. Understanding then, the tire and the shield as the same product, and so, the temperature to be collect is from the external area that comes into contact with the ground. Further, the tire is understood as the main product and the shield a tire accessory.

Each polymer has technical characteristic of working temperature already defined in accordance with its formulation. The fundamental principle of this invention is to manage to maintain the Shield's Shore above 40D at the tire's operating temperature, so that a nail is crushed.

It is known that a tire at 70ºC with a shield 4mm thick in Polypropylene Shore 70D is capable of crushing a nail, in the same manner that a shield flexible PVC 4mm thick, Shore 50D at 45ºC is also capable of crushing the same nail, but at 70ºC the shield in PVC no longer crushes the nail, functioning only as a spacer, thereby being able to perforate the inner tube or strike the air in tubeless tires.

So, it is known that the temperature affects the material's hardness, and according to the application, the shield must use a polymer as blend base so asto seek the desired effect. A bicycle or handcart tire, for instance, can use Polypropylene as blend base or another polymer that withstands 70ºC, for instance; a motorcycle could use a material among a polypropylene with greater thermal capacity, a nylon or nylon with fiber or another polymer that would have its operating range extended between 70ºC to 110ºC.

The use of these pure polymers, as already pointed out, doesn't apply functionally to a shield since the same needs to be unbreakable, so the blend's base polymer is defined by the tire application temperature, and, in sequence, the blend is defined so that the polymer acquires a greater impact strength.

It is a fact that the selection of the polymer, moves according to the tire's temperature on its normal use. It is known that high performance tires, such as those for Stock Car, the ideal temperature for using the tires is from 80ºC to 100ºC. Tires of ordinary use normally at lower temperatures, therefore, if the tire reaches 100ºC even so there are ordinary engineering polymers capable of fulfilling the function of shield. Nylon with fiber, for instance, has an operating temperature between -40 and 130ºC, which already demonstrates the technical viability of the shield's function, even in extreme environments. The use of PEAD or PPE blends in Nylon allow the same to improve its impact absorption.

A machined Shield, or shaped in PEEK for instance could work in up to 260ºC for 5000 horas, or up to 300ºC for a few minutes. A shield in PTFE, Teflon, can work from -200 to 260ºC.

So, the selection of the polymer is made by the economic viability of the application and the tire's technical need. Knowing that for a good part of the tires the use of the blend's main base (50% to 98% of the blend) can use Polypropylene, PVC, PET, PETG, PA, PC, PU, TPE would already be sufficient in technology to address the most different temperature requirements from various distinct tire segments.

As the tests are carried out measuring the temperature of the tire, and not of the shield, it is worthwhile to point out that the temperatures presented shall always be of the tire, which doesn't represent the actual temperature in the shield, since the tire is an insulating material. However, as the shield is never used without a tire, it is preferred to present the temperature studies applied tothe tire and not to the shield.

Polymeric blends that use harder polymers as a base, such as PE, PEBD, PEAD, PP, PA, Nylon, Nylon with fiber, PET, PETG, POM, PU, Teflon among others allow the shield to act in a more robust manner to temperature variations, since the hardness doesn't change so much when submitted to temperatures of 50ºC to 100 °C on the tire. Obviously, PE, PEBD, PP create a softening greater than Nylon, Nylon with fiber, Teflon, but in tests measuring the tire's temperature in 70 °C, all the materials were approved in the tire's shield. Materials such as Nylon with Fiber can work with 100 °C to 130ºC and Teflon can work up to 250 °C. Some polymers such as PI, PBI, PEEK and PAEK can reach up to 300 °C in continuous.

Lastly, it is only fitting to reiterate that practically all the thermoplastics and thermosets polymers with hardness superior to Shore 40D at the tire's operating temperature present effect of being able to bend a nail and support the tire's weight even if airless. When more temperature is applied to the polymerit can soften the surface layer that comes into direct contact with the tire, and the shield thickness summed to the hardness of the material helps to regulate the number hours a shield can be exposed to at a certain temperature. And whatis used to define this are the mechanical and thermal characteristics of the materials commercialized on the market, if the polymer withstands the tire's working temperature and manages to maintain the Shore D above 40D, then it can present these new effects of bending a nail and support the tire even airless. Obviously, as already explained, the harder it is, the more weight the shield can sustain and more anti-punctures protection the shield shall have.

### On the speed of the vehicle that uses the shield

The speed of the vehicles represents no problems in using the shield, onlyin vehicles that work with speed in excess of 4km/h, the speed tends to produce heat and vibration on the shield and for this reason it is necessary to use polymers that have thermal resistance adequate for such application.

A factor used that reduces the vibration is gluing the shield to the tire's internal band. Mainly the use of open models such as (2A), (2ES), and (2PA)with the application of (BA) allow that even if all the external shield is glued to the tire or fitted to the tire, except the regions (2AB) and (RE), the shield perfectly follows the tire's dilation when used in distinct speeds, thereby absorbing the vibration.

| **Vehicle** | **Minimum speed** | **Maximum speed** |
|---|---|---|
| **Handcard** | **1km/h** | **4km/h** |
| **Wheelchairs** | 1km/h | 15km/h |
| **Agricultural vehicles** | 1km/h | 60km/h |
| **Industrial forklift trucks** | 1km/h | 60km/h |
| **Bicycles** | 1km/h | 80km/h |
| **Scooters** | 1km/h | 110 km/h |
| **Motorcycles** | 1km/h | 300km/h |
| **Cars** | **1km/h** | **300km/h** |

### Acoustic Noise Reduction

To reduce the acoustic noise in tires, it is possible to use already existing solutions such as the application of expansive polymers on the tire's internal part, as well as various damping solutions developed for this shield.

Further, it is possible to use spacers (SH) between the tire and the shield,or use (SH) on the part between the shield and the inner tube, or between the shield and the air in tubeless tires. (SH) can have Shore between 40D and 40A, however, when applied between the tire rubber (11) and the shield (2) the Shore of (SH) must be smaller than the Shore of the tire (11), for the material to work and absorb impact and vibration.

The surfaces (SH) can be clipped to the shield (2A), (2ES), (2PA) (2i), (2P) and (2U), can be glued, over-injected, or can be, further, an independent part, with no direct connection with the shield.

The vulcanization of (2ES), (2A), (2ES), (2PA), (2i), (2P) to the tire can also reduce the noise and the vibration.

On the open systems (2ES) as well between (3AB) and (7AB) it is possible to use a coil-type geometry, in zig zag, on the union of the parts, with the ends with coil effect, whether by bi-injection, over-injection or by a mounting of a part with the coil effect at the ends, it is possible to improve the impact absorption. On the same manner that a part in polyurethane could have its ends with coil design, in this manner, the unions absorbed greater impact, for instance, by two arcs that are located at the ends, or by structures in X that form repetitions to absorb greater impact and generate greater flexibility to the tire. The use of (222) and (222AM) can also reduce the tire's vibration, since (222AM) acts in a manner as to absorb impacts.

The use of open shields such as (2A), (2ES), (2PA) can also help in reducing the vibration.

The gluing of the external surface of (2A), (2ES), (2PA) on the tire's internal surface can also help reducing the vibration, using (BA), and leaving (2AB) and (RE) free to move.

### Sensor TPMS (Tire Pressure Monitoring System).

The use of the shield doesn't impair the current TPMS direct and indirect systems. Also, in indirect systems, on account of the shield having the characteristic of keeping the tire, even limp, with its geometry calibrated, it endsup helping so that the indirect systems can have less error, and that the tire has less wear.

On the conventional direct systems, there is also no loss, the shield andits accessories can function perfectly, even with direct TPMS.

It is valid to point out that one of the shield functions to make the tire not lose its geometry, even limp, therefore it is possible to develop a new kind of TPMS sensor by means of shield.

With an open shield, it is possible to include a sensor between the two ends of the shield that move and depending on the distance of each point of the open shield it is possible to know the tire's current pressure. The sensors can be fitted on the shield or even over-injected.

### On the shield constructiveness

A shield can be in a single part with no splices, following the internal geometry of the tires,with thicknesses from 0.3mm to 100mm, in thicknesses above 4mm to 100mm can have ribs to perform the mass relief. It can be dividedin a region to make fitting on the tire easier; the same division process can generate an auto-adjust for fitting in the correct manner in equal models from different manufacturers; the same division process can also generate a damping system and an anti-puncture protection system of the inner tube and the air on tubeless tires.

The part can be divided into 2 sections or more, to the point of being scaled, to provide greater damping. The unions of open shields, or in more than one section, can have systems in X on the union of the halves, providing greater damping.

The construction can have elements that allow the optimum balancing of the product and can, further, contemplate a stop (annexed to the tire's wheel), similar to the *run-flex* tires and *tire shields* belts.

The shield can, further, be inverted, generating damping on the sides.

The shield can be injected in thermoplastic, in polymeric blends of thermoplastics, polymeric blends of thermosets, thermosets, can have internal and external protection with polymers more flexible than the inner tube, and the tire.

The process of bi-injection, over-injection can be used or even have flexible protection parts fitted on the ends for the purpose of protecting the cutting ends of the tube regions in (2VU) and the inner tube (15).

It can have, further, a softer surface between the shield and the tire with Shore A below 80A, or softer than the tire that uses it, as a form of reducing the vibration generated by the shield and generating greater damping.

The shield can be extruded and transformed into coil; it can be wrapped in one or more turns on the tire's internal part; further, it can be attached to thetire by means of various sections of thesis coil's profile.

It can have a flexible blanket that adapts to the shape of the tire or the inner tube.

The shield can be made of vulcanized rubber and mounted together with the tire and with the inner tube, whether an open shield (2A), (2ES), (2PA) or a closed shield (2i), (2P).

The shield can have through cut on the side or mass reliefs on the side to generate greater damping.

The shield can have ribs to generate greater strength.

It can have, further, inner tube protection systems, to prevent that the inner tube may puncture.

It can also modify the interior of a tubeless tire, creating a tube that isolates the air between tire's internal layer of tire tread and the shield's external layer, generating a protection for the air not to escape, even after the tire being punctured by a perforating object.

The shield can be open, with diameter greater than the tire, providing it greater pressure, simulating the pressurized air.

The shield can be cylindrical, without divisions, it can be mounted to and dismounted from the tire.

The shield can be vulcanized directly to the tire, being an integral part of theproduct.

### On the manufacturing process

As already presented, the invention is characterized by being a part of polymeric blends in thermoplastics or thermoset materials above Shore 40D, considering the tire's operating temperature, applied to the tire's internal layer. There are various forms of manufacturing this solution with positive and negative points.

The shield can be vulcanized along with the tire in SBR, natural rubber, silicone, Neoprene, EVA, among others.

It can of inject in polymeric blends that use as a main polymeric base: Flexible PVC, Expanded PVC, PEBD, PEAD, PP, PU, Nylon, PA, POM, Nylon with Fiber, PET, PETG, PC, among others.

Polymers can use loads from 0.1% to 40% of loads. They can be made of fiberglass, graphene or other minerals and additives. It can use only one additive or all of them in conjunction.

A few polymeric blends can use compatibilizing agents to strengthen the mixture so that the blend achieves optimum miscibility.

It can be manufactured with scraps from the footwear industry, reusing SBR plates, crushed and cold vulcanized with glue, hot vulcanized, ring-shaped.

It can be shaped by compression or machined in PTFE, Peek among others.

It can use the extrusion process, and shaped by templates or molds in various kinds of thermoplastics, thermosets and PTFE.

The process of bi-injection or over-injection of more flexible polymers, such as TPE, TPV with Shore below 70A welded to polymers such as Nylon and PP with Shore above 70D can be used.

The process of rotating injection in expanded PVC, EVA can be used.

The process of plastics injection can be used.

It can be extruded and wrapped on a spool for extra fine shields from 0.3mm to 5mm. They can be rotational molded or thermoformed for applications of greater sizes or thicknesses for use of large machines and tires of large formats.

It can be mounted inside the tires factory, with vulcanized rubber on the shield region applied on the tire's internal part.

It can be mounted inside the tires factory, at the moment of welding the tire's external part with the tire's internal part, and vulcanized.

The shield can be installed and the tunnel vulcanized inside the tires factory or in specialized tire shops.

It can be mounted internal to the tunnel (TU), being vulcanized within the tunnel or just mounted as a part in thermoset or thermoplastic material without being glued or attached to the tire.

Fiberglass, Kevlar or carbon blankets can be used to reinforce the shield on the interna or external part, over-injecting thermoplastic polymers over the shield or even working with molds proper for using resins.

For military use, aramid blankets can be glued to the shield with the intent of creating a shield capable of withstanding firearms, installed withing the (TU).

Further, the process of rubberized paint, liquid rubber bath, or over-injectionof elastomer can be used in localized parts of the shield or on the entire shield. It can be, further, covered in all the regions or lined by rubber profile, rubber blanket that protects the shield completely and from all sides, preventing that burrs or sharper corners may damage the inner tube or (2VU).

Injection molds with jaws or collapsible systems can be used, on a similarmanner to the injection process of a motorcycle helmet.

A shield can be vulcanized on the inner tube.

It can be used as a part independent from the tire in thermoplastic orthermoset, as an internal accessory to the tire.

It can be used as a part dependent on the tire, i.e., glued, welded, vulcanized to the tire's internal tire tread with the use or without the use of (2VU).

### On the application in tubeless tires or with inner tube

Application can be done in countless manners for tires with inner tube: The shield can be fitted on the tire outside the tires factory environment, in which the shield is fully mountable and dismountable; the complete part can be welded on the tire with glue or with vulcanization process in the tires factory itself.

For tires without inner tube: the part can be glued on the internal part ofthe tire tread and the glue itself ensures the sealing; the shield can be mountedon the tire outside the tires factory environment and vulcanize a rubber blanket with glue, binding rubber, vulcanite on the sides between the tire and shield, leaving the shield on the middle, in such a manner as to create a tunnel isolating the shield from the pressurized air by means of a glued rubber blanket which does the air sealing. In the process within the tires factory it is possible to include this shield so that it can be fused to the tire on the shaping between the tire's internal and external part; or even after the tire's complete shaping, the part can be mounted to the tire.

For tires with inner tube, the cylindrical shield, without divisions can be fittedby means of 1 or 2 folds on the shield, using specific tools and templates for installing, and, further, for open shields, even a person with little instruction is capable of doing the installation and removal for recycling.

### Forms of generating the damping

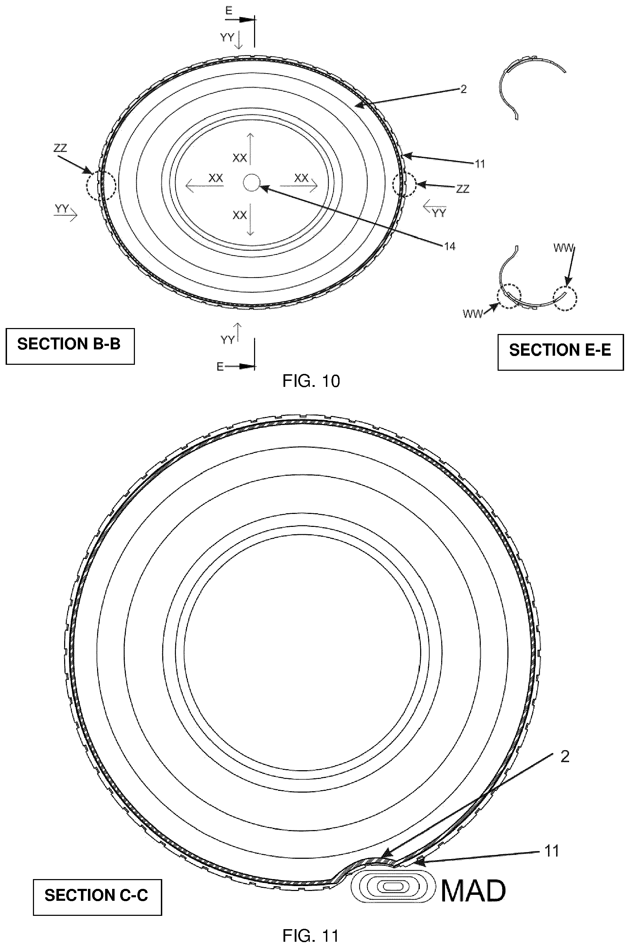

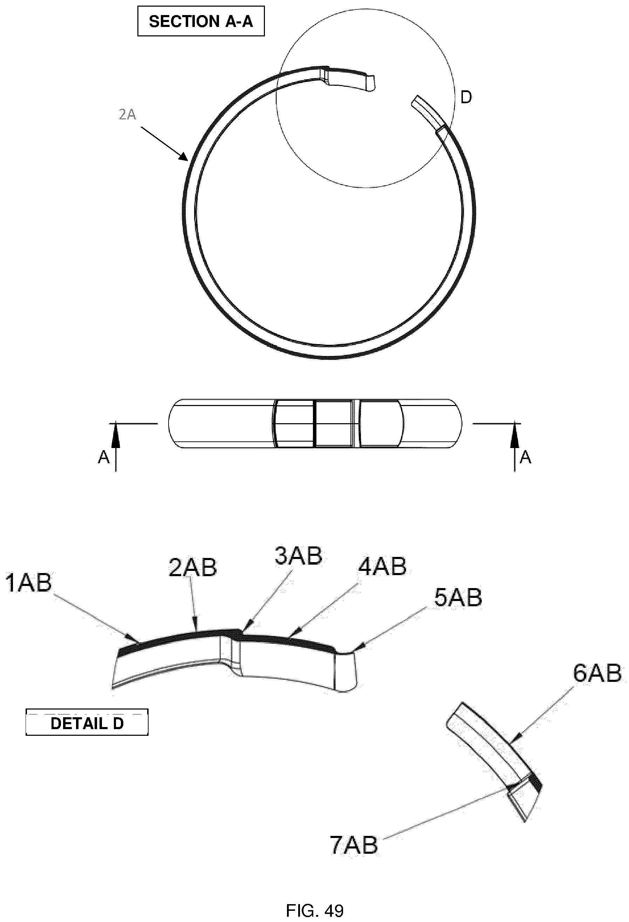

It is possible to generate the shield's damping to reduce the vibration on thevehicle and the tire a hardness, providing greater comfort to the driver:
1. By means of a superficial layer that stays between the tire (11) and the shield (2) where the damping layer has hardness inferior the Tire hardness used;(SH)
2. By means of a partition on the shield; (1AB), (2AB), (3AB), (4AB), (5AB), (6AB), (7AB)
3. The partition promoted by the cutout of Figure 49, can have, further, have a single cutout on a straight line, perpendicular, diagonal (wedge-shaped), or curved;
4. By means of two or more partitions on the shield;
5. By means of the edges of the inverted shield; (2U)
6. By means of the natural deformation of the shield circumference; (Figure 10)
7. By means of small partitions on the edges or the center of the shield; (REAM)
8. By means of mass reliefs and recesses on the shield thickness;
9. By means of using two or more shields of thinner thicknesses;
10. By means of using Materials applied on the shield with Shore between 80A and 60D;
11. Use from 0.1% to 30% of graphene on the thermoplastic or thermoset blendsapplied to shield, can generate greater mechanical strength, elasticity, thermal resistance, enabling the use of more flexible polymers on the shield that act as a form of protecting the tire, generating less vibration;
12. By means of producing the shield with the use of resin and blankets of fiberglass, Kevlar and carbon, 0.3mm to 2mm thinner;
13. By means of through cuts on the edges or center of the shield, with the due lower protections (REAM) and (REPA) ;
14. With the use of (222) and (222AM) separate or as a single part;
15. The vulcanization of (2ES) on the tire (11) can reduce the tire hardness andprovide greater damping by means of folds;
16. By means of using polymeric blends with impact modifiers, generating greater impact absorption on the shields' polymeric blends.

### Accessories available for Shield

The shield has various accessories that can be used in various distinct situations:
1. With (222) it is possible to increase the load capacity in two to six timesthe capacity of the airless tire only with the shield.
2. With (222AM) it is possible to generate greater impact absorption when the airless tire is used. It can be used for a part of the time of the tire's servicelife or the entire time of the tire's service life.
3. The union of (222) and (222AM) in a single flexible part can generate greater flexibility and impact absorptions to the tire.
4. It is possible to use an adhesive film on the shield, both on the internal part and on the external part, which prevents that the polymer breaks into pieces in case of dryness or by means of a collision, performing on a manner similar to the car window film.
5. A film of PU, rubber or polymer of Shore 20A to 80A can be used superimposed to the shield, since these flexible polymers, even when perforated by objects of large diameters, tend to recover their original shape after the removal of the perforating object, thus preventing the possibility of water penetrating the tire interior.
6. The use of two or more shields on the tire can be used to generate a backup shield, to increase the tire's load capacity, to improve the tire's protection.
7. The use of (222AM) when attached to the shield or to the tire and not fixed on (222) (on the wheel) facilitates installation and allows the tire to run a little lower, but with greater autonomy.
8. With (SH) it is possible to reduce the vibration on the tire, in addition to create a spacer capable of increasing the shield's service life and its performance even further.
9. Use of flexible polymers in rigid regions with possibility of cutting the inner tube, of (2VU), the tire itself such as (PO), (3AF) and other profiles or parts injected or over-injected, the rigid edges and corners can be used so as to prevent the rupture of more delicate and softer rubbers.
10. It is possible to use a spacer (SH) between the shield and the air intubeless tires or between the shield and the inner tube in tires with tube to reduce the sonorous noise produced by the tire; on the same manner that it is possible to use already existing sponges with this purpose glued to the shield or to (2VU).
11. The same spacer (SH) that reduces noise, also protects the shield from tearing the inner tube or the tunnel (2VU)
12. It is possible to use a sensor on the two ends in open shields, with the purpose of measuring the calibration on a remote manner on pneumatic tires. On the same manner, these sensors can also function even on airless tires, showing the user the distance between the shield end, so if the tire is at its optimum dimension or not, since the shield allows the use of airless tires. This would be a new form of designing a TPMS sensor.
13. For military vehicles, it is possible to include an aramid blanket on the top part of the shield, between the shield and the tire, preventing that firearms might puncture the vehicle tire.
14. It is possible to use fiberglass, Kevlar or carbon blankets applied on the thermoset or thermoplastic polymers with the purpose of reducing the shield's weight, to increase its mechanical robustness, amplify the thermal capacity and the type of object that it manages to shield from. It is possible, further, to use 2 or more shields in sandwich blankets of fiberglass, Kevlar or carbon to achieve shield levels even more technical.
15. It is possible, further, to use a part in open shield (2A), (2ES), (2PA) or closed shield (2i), (2P) format, of fiberglass, Kevlar or carbon with resin as an extra-thin shield (0.3mm to 5mm) and extra-light for anti-puncture protection.
16. The Shield can receive a glue that improves its adherence and attachment to the tire, preventing it from moving when braking.
17. The shield can have a fixed rubber on the internal part, to protect the inner tube or (2VU), this rubber can line the whole interior or part of the interior.
18. The shield can have flexible parts for fitting to ensure that the straight corners and burrs don't damage (2VU) or the inner tube.

### Graphene and additives

Graphene promises to revolutionize the plastic industry, and it is already possible to use a few thermoset and thermoplastic polymers with 0.1% to 30%of graphene, enabling the shield to be more elastic, i.e., which may mold itselfto the perforating object, stretching itself without rupturing on 100% to 200% more than in ordinary polymers.

On the same manner as increasing their thermal resistance. Traditional polymers that withstand 100°C, with graphene they are capable of achievingtemperatures from 120ºC to 150ºC.

Shields that use Shore 80A to 40D can be used with the weight supporting and shielding functions of tires capable of bending nails at temperatures from 100ºC to 200ºC.

Shields in thermosets or thermoplastics that use graphene can reduce their thickness from 100% to 300% carrying out the same function.

Shields with Graphene can be thinner and lighter.

The use of 0.1% to 0.5% of graphene on a thermoplastic blend allows the graphene to act as a compatibilizing agent, improving the blend's miscibility. This proportion is already capable proving the shield greater impact strength anda better heat exchange.

The use of graphene alone with commodity polymers or added to pure engineering polymers can also be used to ensure optimum shield function and so dismissing the use of polymeric blends.

Graphene accelerates the production of injection of plastic parts. Refrigerating the part with greater speed, allowing the production to be done ona more cost effective manner. Graphene allows, further, that a shield in use might heat up and cool down sometimes, sustaining less effect of the post-contracting, and having even less loss than polymeric blends which don't use graphene.

### On the advantages of using the shield

a) Protection against punctures: The shield is capable of bending a nail and other perforating objects - in case of thick screws or thin nails the tire runs over and the shield deforms without letting the air escape from the tire;
b) Maintain the tire's regular wear and tear, the shield is capable of maintaining the tire's correct geometry, even when outside the optimum calibration;
c) The shield allows the use of the pneumatic tire for part of the time of its service life or for the entire time of its service life completely airless or limp.
d) Reduce the consumption of engine fuel or physical force as the shield tends to maintain the tire on its optimum dimension, prevents that the tire staysin the geometry outside the optimum calibration, which reduces the consumption of engine fuel or human physical force for transporting the vehicle;
e) Easy installation, enables in some vehicles, mainly the ones that use inner tube, which people with little instruction install the shield on their tires;
f) Auto-adaptation to various market brands, a shield can be sold as universal model, which fits on any tire;
g) Comfort, compared to massive and flexible massive tires, which has no air, the shield offers practically the same benefit of a massive tire with much more comfort;
h) Esthetics, as it is not modified, the tire exterior nor the rim, the vehicles that use remain with the same esthetics.
i) Manufacturing, the concept of the polymer with Shore above 40D at the tire's working temperature allows that a vastness of industrial processes might be applied, whether for reducing costs or for specific adaptations in large or small vehicles;
j) Sustainability, with the inclusion of a thermoplastic part, the consumption of rubber and canvas in the tire's industrialization can be reduced, having that on the shield being manufactured in thermoplastic, it can be easily separated from the tire and returned to the recycling cycle. In addition, tires with shield tend to consume less fuel. And, obviously, on account of puncturing less, the tire isdamaged less, better preserving its service life.
k) They can be installed in tire factories or in specialized tire shops, on new or used tires.
l) Even when used with Shore below 40D, whether by blend formulation orby the action of temperature on the tire, they still function as spacers.
m) As the shield can crush a nail and other perforating objects, whoever uses it helps to clear the track of objects hazardous to vehicles that don't use.
n) Being able to have the benefit of a *run-flat* tire with an ordinary tire.

### Description of the annexed drawings

So that the current invention is fully understood and taken into practice and understood by any technician from this technological sector, it shall be described in a clear, concise and sufficient manner, having as a basis the annexed drawings, which illustrate and subside it as listed below:
**Figure** 1 represents the view in perspective of the shielded pneumatic tire, wherethe tire's internal shield and external surface, named tire rubber, can be observed; **Figure 2** represents the perspective view of the shielded pneumatic tire, partially showing the internal shield, highlighted, and the rubber of the external tire;
**Figure** 3 represents the view in perspective of the round-edged seamless shieldprovided with external ribs;
**Figure 4** represents the exploded view in perspective, demonstrating the applying of the round-edged seamless shield in motorcycle tires and the perspective view incut;
**Figure** 5 represents the exploded view in perspective of the motorcycle tire in cut; **Figure 6** represents the hardness graduation table of the rubber and thermoplasticpolymers;
**Figure 7** represents the function of the seamless shield when the tire is airless, incut C-C;
**Figure** 8 represents the side view of the pneumatic tire with shield, partially showingthe round-edged seamless shield and the front view in cut A-A, when it is airless;
**Figure** 9 represents the side view of the shielded pneumatic tire in cut B-B showing the round-edged seamless shield partially and the top view, when it is absorbing impact, with no inner tube or limp;
**Figure 10** represents the same cut B-B of Figure 9 followed by cut E-E where the fold WW can be observed;
**Figure 11** represents the shielded pneumatic tire when coming into contact with a hole or rigid object;
**Figure 12** represents the geometry of the flat-edged seamless shield when appliedpm flat-edged tires such as those of automobiles;
**Figure 13** represents the side and frontal view in cut D-D of a tire with stop for tiresof cars, motorcycles, bicycles and others;
**Figure 14** represents section D-D of Figure 13, with highlight to detail C where the distance responsible for maintaining the deformation of the flat-edged seamless shield on its elastic moment can be observed;
**Figure 15** represents the same shield situation with the welding process by vulcanized rubber blanket tunnel, but with a damping system promoted by a flat- edged open shield;
**Figure 16** represents a situation where the flat-edged open shield is made harder material, which generates greater vibration on the tire and is used with a damping system;
**Figure 17** represents the damping system applied to flat-edged open shields with harder material;
**Figure 18** represents a form of compensating the tire balancing by keeping the shield on a single part, with small internal high reliefs;
**Figure 19** represents the perspective view of the damping system of one side in cutand the other without cut illustrating the movement;
**Figure 20** represents the perspective view of the system in movement after damping;
**Figure 21** represents the damping movement that takes place when open shields meet an object, hole, or similar, with the tire compressing and running over the object and the shield following the tire's shape, highlighting the tension concentration points at the moment of impact;
**Figure 22** represents the function of the open shield damping systems after striking an object, or after the tire is limp or completely airless, highlighting the tension concentration points on the folds;
**Figure 23** represents the layer that can have a partition, generating impact and vibration absorption, overlapping the entire shield region; when (SH) is overlappingthe internal part, (SH) acts as a noise reducer and protection of the inner tube and (2VU)
**Figure 24** represents the seamless layer (no partitions) overlapping the entire shield region generating a damping system and spacer;
**Figure 25** represents the shield's damping system in inverted "U" shape withhighlight to damping by shield deformation and for a softer surface;
**Figure 26** represents how an attachment part can be constructed, in exploded view, for the function of the sealing tunnel;
**Figure 27** represents the tunnel formed by the attachment element with the tire;
**Figure 28** represents a round-edged tire with sealing tunnel;
**Figure 29** represents the attachment part designed on a manner similar to an automotive repair that can be glued with vulcanizing glue or even by the definitive vulcanization process;
**Figure 30** represents that is located on the side of the tire and the entire region (BO)which can have layers of blankets, fibers, reinforcement canvas or be made of ordinary rubber for applications of lesser impact;
**Figure 31** represents the tunnel mounting process inside or outside the factory; **Figure 32** represents the side view of the flat-edged seamless shield with flat-edgedtire and the view in cut D-D;
**Figure 33** represents the perspective view of the flat-edged seamless shield for flat-edged tires such as those of cars;
**Figure 34** represents the scaled system with at least seven identical parts;
**Figure 35** represents a shield with reliefs, with highlight to the distancing created bythe tire's shield;
**Figure 36** represents the exploded view in perspective of the pneumatic tire provided with parts that complement the lateral shield, with highlight to the mountedtire in cut;
**Figure 37** represents the exploded view in perspective of the pneumatic tire provided with parts that complement the lateral shield and with mounting reinforcement, with highlight to the mounted tire in cut;
**Figure 38** represents a shield accessory for thermal insulation and mechanical reinforcement in exploded view simulating the mounting process on a handcart tire;Figure **39** represents the shield accessory for male and female fitting, highlighting the mounting to the shield; when installed on the external side of the shield it acts athermal insulator, when installed on the internal side of the shield it acts to prevent shield punctures with the inner tube or (2VU);
**Figure 40** represents the detail X presenting how the male and female fitting staywhen the tire is mounted, allowing the adjustment according to the pressure used;
**Figure 41** represents the perspective view of the male accessory mounting on a tiresection;
**Figure 42** represents the shield function sequence in cut C-C, with highlight for thepointed object being deformed;
**Figure 43** represents the shield function sequence in cut C-C, with highlight for a more rigid pointed object, such as a screw, where it is capable of running over withno damages;
**Figure 44** represents the industrial process like a tape, which can be shaped to thetire, and connected, being possible to use stamping, cutout, polymers injection, PVC, EVA, expanded PVC, expanded PU, polymeric blends, expanded rubber or even vulcanized rubber process, which can be mounted on an independent manner, glued or welded to the inner tube or to the tire; or mounted as an independent part.
**Figure 45** represents the perspective view, side view and in cut A-A of the tire withthe parts that serve to ensure the shield centralized and having correct mounting and balancing;
**Figure 46** represents the side view, in cut H-H, and in detail HB of the tire with thickness reduction and shield end rounding;
**Figure 47** represents the side view, in cut J-J, and in detail JB of the tire with the shield ends protection by means of the over-injected or mounted part;
**Figure 48** represents the side view and in cut K-K, with highlight to the details M and N that demonstrate the shield mounted to bicycles' tire;
**Figure 49** represents the side view in cut A-A and the top view of the open shield for adjustment of the way how it comes out of the mold, with diameter greater than tire diameter;
**Figure 50** represents the tire's fitting to the open shield, with highlight to the perfectcircular, performing the damping;
**Figure 51** represents the open shield's behavior when sustaining an impact, with highlight to the movement from the top part to the bottom part at the moment of impact and the proper geometry not to perforate the inner tube or the tube;
**Figure 52** represents the round-edged open shield's damping system on a central section;
**Figure 53** represents the flat-edged open shield's damping system on a central section;
**Figure 54** represents that a same injection mold can be designed to manufacture one or more open shields of similar sizes;
**Figure 55** represents the open shield applied to any round-edged tires;
**Figure 56** represents a seamless shield which to enter the tire is factory-installed, or when outside, need a folding movement;
**Figure 57** represents a first fold on the center of the shield, and after this movementreceives a second fold so that it can achieve the size and enter through the center of the tire;
**Figure 58** represents the extrusion process, which uses thinner thicknesses, and in the profile exit process from the mold, it is possible to make the profile stay coil- shaped;
**Figure 59** represents the shield process with the use of the extrusion process with 2 turns around the tire;
**Figure 60** represents the shield process with the use of the extrusion process with 2 turns, more specially, it demonstrates the extrusion profile and the flexible polymer accessory part to be used on profiles thicker than 0.5mm so as to protect the innertube;
**Figure 61** represents a spacer shield of hardness below Shore 80A with any thickness and with thickness below 2mm between Shore 80A and 40D, manufactured from SBR, crushed and mixed to an agglomerant glue; alternatively with tire scraps, crushed and glued with other expansible thermoplastic and thermoset polymers;
**Figure 62** represents the possibility of reinforcing the shield with internal ribs, so as to ensure greater strength to the shield mainly when the tire is used with no inner tube;
**Figure 63** represents more reinforcements allocated to the shield that can be partial or until the end, generating greater mechanical strength to function even without theair from the tire or the air from the inner tube;
**Figure 64** represents the possibility of the universal shield have markings of different sizes and be cutout by the user;
**Figure 65** represents the through cuts or recesses can be made on the round-edged or flat-edged shield so as increase its damping, with highlight to the internal protection reinforcement;
**Figure 66** represents the construction process of an open shield, which allows that more than one shield model or size can be manufactured with the same mold, with highlight for the smaller shield to the left and larger to the right;
**Figure 67** represents the construction process of an open shield, with highlight to the insert area that can be replaced for manufacturing more than one model with distinct circumference lengths;
**Figure 68** represents the construction process of an open shield, with highlight to the end of the two shields on the mold;
**Figure 69** represents the construction process of an open shield, with highlight tothe insert that can be replaced to carry out the exchange of one or more models; **Figure 70** represents an alternative that allows the tires that use shield can function even airless for the most various types of automotive tires;
**Figure 71** represents the reinforcement by increasing the shield edge thickness.

### Detailed description of the invention

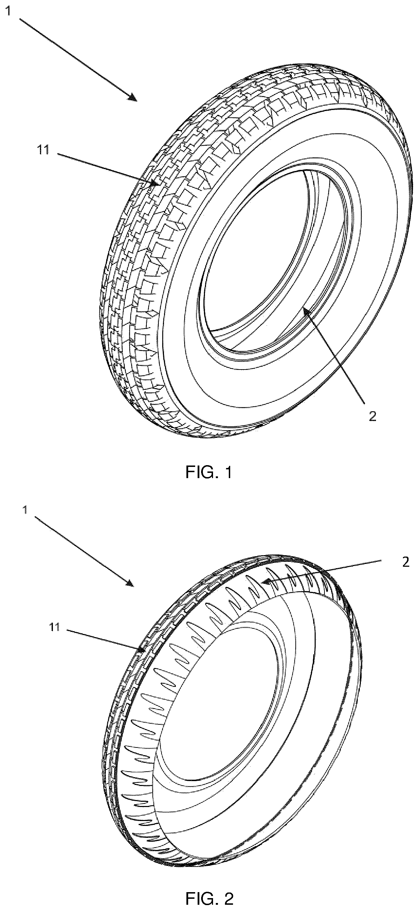

For a better understanding of the technology, the term shielded tire is defined
(1) as the assembly formed by the tire's internal surface, herein named tire rubber (11), and by the shield (2) juxtaposed to the tire rubber (11). As Figures 1 to 2 depict,the current invention reveals a shield (2) that is juxtaposed to the tire rubber (11) of pneumatic tires, thereby forming the shielded tire assembly (1), comprised of shield
(2) and tire rubber (11). Having that said shield (2) is preferably of polymeric blends of thermoplastic or thermoset polymers with hardness Shore between 40D and 100D, being able to function as a spacer when using hardness below 40D up to 20A. There is, further, a group of polymeric blends that with shields with thicknesses above 2mm, have an optimum function for hardness between Shore 80A and 40D, thereby acting as shields and not as spacers. Produced by plastics injection process, alternatively, it can be made with:
   - Recycled material in PVC composite with scraps from the textile and automotive industries, and a percentage of cotton as material load; Use of PVC and ABS as polymeric blend results in a polymer of optimum hardness and good impacts absorption.
   - Injection of polymeric blends with main base principal in PP, PE, PET, PETG, PU, PC, Nylon (all these with or without fiberglass load), TPE, TPV, other thermoplastic polymers with Shore above 40D;
   - Addition of compatibilizing agents in polymeric blends;
   - Vulcanized rubber thermoset with hardness Shore from 40D to 90D to shield thetire against punctures;
   - Vulcanized rubber thermoset with hardness Shore from 30A to 90A to function asspacer;
   - Polymers pressing/stamping process;
   - Expanded PVC;
   - Expanded rubber;
   - EVA;
   - Extrusion process;
   - Rotational molding and thermoforming for large-sized tire shields;
   - PEEK and Teflon machining and shaping, among other polymers that can be machined;
   - Polymers with additives that optimize the thermal conductivity;
   - Mixtures of virgin industrial resins and materials and loads of recycled polymers.
   - Scraps from tires or from SBR, crushed, glued and vulcanized, preferably with Shore between 40D and 60D, being able to function as spacers for Shore below 80A.

The shield (2) displayed in Figures 1 and 2, can be subdivided into open shields (2A), (2ES), (2PA), (2CH) or closed shields (2i), (2P), (2U). Thereby when the nomenclature shield (2) is used, it is intended to refer to all the shield models.

Open shields enable an easier installation process on the tire, in addition to an universal fitting system that reflects on a damping system.

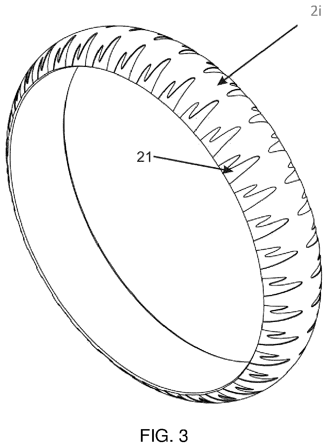

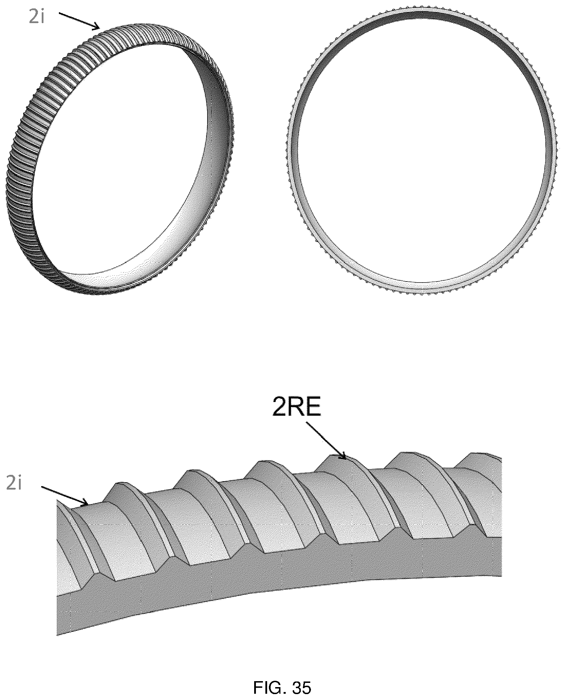

As Figure 3 shows, ribs (21) are provided on the shield (2i) which increases its mechanical performance and hardness to bend nails - such as ribs on the opposite side to the movement or random that lead objects such as nails to bend on a faster manner and with greater assurance of repetition. The ribs are not obligatory, but their use can improve the shield's mechanics. Alternatively, as Figure 35 depicts, it can have ribs (2RE) which provide better thermal insulation between the tire rubber (11) and the shield (2i) creating an air layer given the rib's predominantly triangular relief (2RE) which has a thermal insulation effect, when the tire is moving, improvesthe shield's performance (2i) in regard to the friction generated by the tire's movement against the ground, which naturally generates heat, and the headreduces the shield's Shore hardness. Thereby, by means of these ribs (2RE), a technical solution exists to reduce the tire rubber (11) heat exchange with the shield(2i). In addition, the ribs bring a more robust mechanics to crush nails.

The shield's external surface can be 100% smooth, with no reliefs.

The tire's movement is the determinant factor for crushing a perforating object(12), the shield (2) located on the internal part of the shielded tire (1) has the capacityof bending pointed objects and deforming the, thereby preserving, not only the innertube (15) and the shielded tire (1) from punctures, as well as eliminating possible perforating objects from the environment for other vehicles that don't have such technology. Rigid internal mass is used which allows economy in the use of canvas,fabrics, vulcanized rubber in the construction of pneumatic tires. The shield (2) hasinternal rigid mass with hardness Shore in excess of 40D and provides the use of the tire even empty or with little air, preserving the tire's characteristics with certainautonomy, in the cases of limp or airless operation.

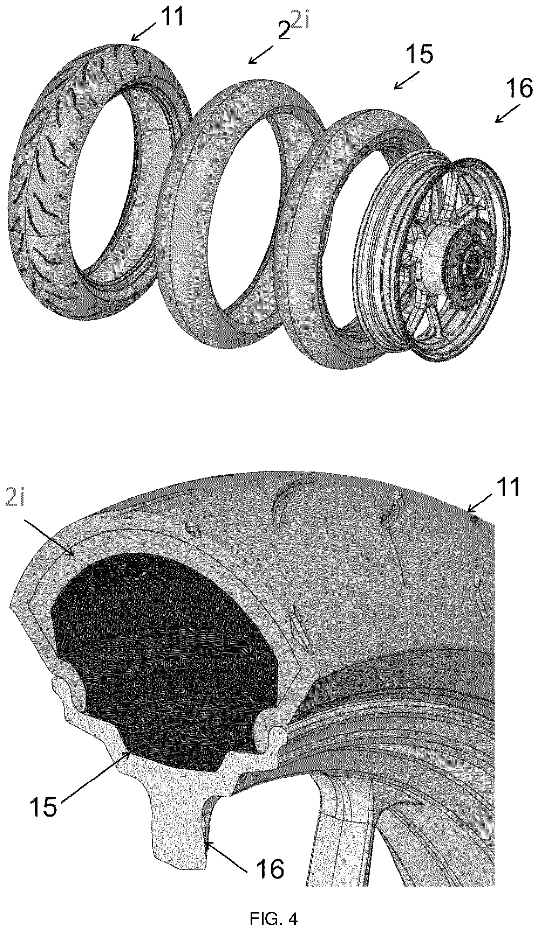

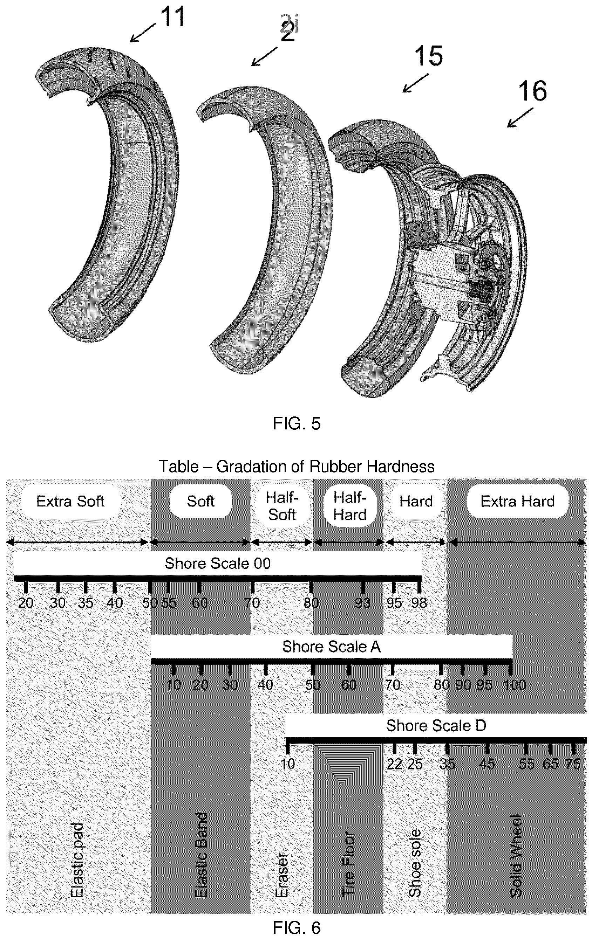

It is possible to see in Figures 4 and 5 the same application of shield (2i)in motorcycle tires. Where (11) represents the tire rubber, (15) the inner tube and (16) the rim.

As to the hardness, according to the table from Figure 6, the function of this technology takes place with Hard and Extra Hard polymers, in Shore A, from 20A to80A for spacer shields, which don't bend nails; the intermediary line for shields withthicknesses greater than 2mm between 80A and 40D which can perform as shieldsat low temperatures and Extra Hard, above Shore D 40D which are capable of crushing nails. The table from Figure 6 demonstrates that the equivalent hardness in other measurement scales such as Shore D among others is also valid. It is validto point out that the polymer hardness is one of the factors that make the shield work, so the selection of the polymer base for the polymeric blend is done initially by the polymer hardness, but to have impact strength it is necessary to use one or more polymers, additives and compatibilizing agents that stabilize the polymer for agood thermal resistance and a good impact strength, becoming an unbreakable part for the intended application.

It is worthwhile to consider that the Shore scales (A, B, C, D, DO, E, M, O, OO, OOO, OOO-S, and R) are the scales foreseen by the standard ASTM D2240-00. Shore testing methods are defined in the standards ASTM D-2240; DIN 53 505; ISO 7619 Part 1; JIS K 6301 (The standard JIS is very similar to the standard ASTM2240) and Asker C-SRIS-0101. The scales Shore A and Shore D are indicated for measuring hardness of rubbers/elastomers and also used for "soft" plastics such as polyolefins, fluoropolymers and vinyls. The scale A is used for "soft or less hard" rubbers while the scale D is used for "harder" rubbers and various others polymerssuch as PP, Nylon, ABS.

The solution created differs for tending to be rigid due to Shore higher than the Tire's Shore, but still provides flexibility. The shield (2) is a semiflexible cylinder-shaped coat that when placed a tire, internal to the tire rubber (11), provides three behaviors that are completely different, that of deforming a nail, that of being unbreakable and that of being able to support the tire even airless for a certain time.

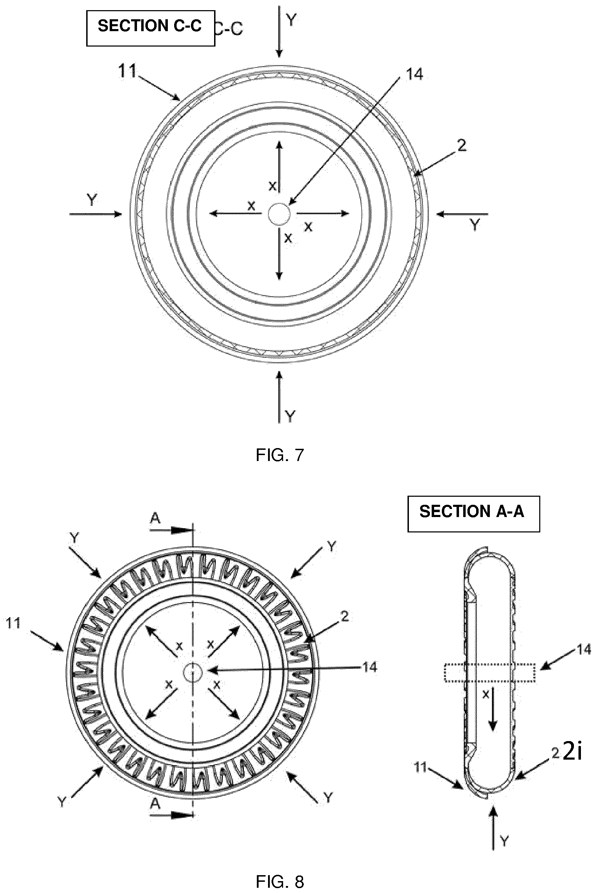

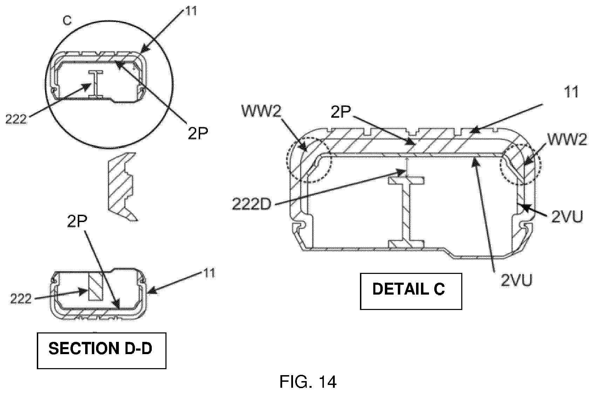

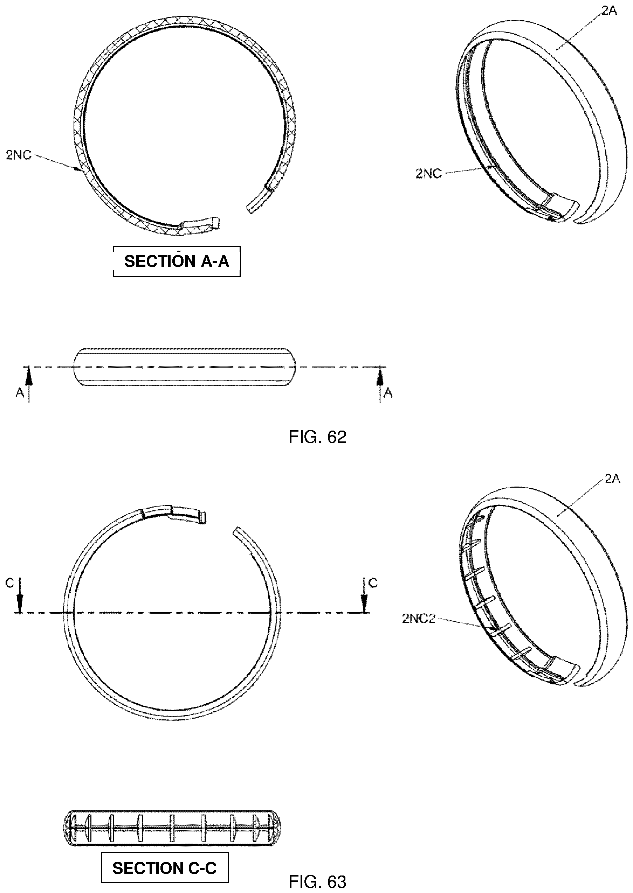

As demonstrated in Figures 7 and 8, the internal shield (2) has hardness between 40D and 100D, and is not completely rigid nor very flexible, and is juxtaposed to the tire rubber (11) or even a little larger, providing a small interferencethat, when installing the shield, the shielded tire (1) can stretch slightly, in the samemanner that it is stretched when filled with air. It has a strong mechanical structure, capable of withstanding the vehicle's weight, all the weight being placed on the axle (14) and that could deform the shield's coat (2) being suspended by the mechanical structure of the shielded tire itself (1), so, at every weight "X" placed under the axle(14), there is a force "Y" that keeps the tire in its round shape, even if airless or limp. In this manner, even airless inside the shielded tire (1) the shield (2) keeps the tire's structure circular, without becoming flattened. For as the shield (2) is rigid and has little flexibility, there is still a counterpressure between the shield (2) and the tire rubber (11). The vehicle's weight and the gravity deform the shield (2), and simultaneously, the structure of the shielded tire (1) prevents it from deforming, thereby creating a resistance where the shield tries to deform and the tire rubber and its fabrics prevent the deformation, thereby keeping the tire with the shield's shape (2). What ensures that the shield (2) supports a handcart tire or a tire of other vehicles is the shield thickness (as demonstrated in Figures 62 and 63 in (2NC) and (2NC2), and the additives fitted in the shield, the larger the thickness, ribs and constructivity of the fold (demonstrated in Figure 10 in (WW) and in Figure 14 in (WW2), or more engineering polymers are used in forming the polymeric blends, thegreater the supported weight. There is a limit to support the weight, and who defines this limit is the thickness, the shield's ribs, the size of the fold (WW) and (WW2), thematerial of the shield's polymeric blend.

Alternatively, for flat shields such as (2P) and (2PA) it is still possible not to use (WW2), but use the entire developed solution of open and closed shields, with polymeric blends in thermoplastic or thermoset polymers presented in this invention. A shield (2P) or (2PA) without (WW2), i.e., without folds, in tubular shape, is incapable of supporting any kind of weight, but it can be thinner, lighter, and bring the same benefit of being able to bend a nail on a plane pneumatic tire.

The same effect demonstrated in Figure 7 and 8 is seen on open shields andclosed shiels.

In addition to supporting more weight, the greater the shield's tire tread thickness, the greater the weight it can support.

On the other hand, the better the composition of the polymeric blend, i.e., the more engineering polymers, compatibilizing agents, additives such as graphene, less thick the shield can be, ensuring to it the same effect of thicker shields with theuse of polymeric blends that use engineering polymers.

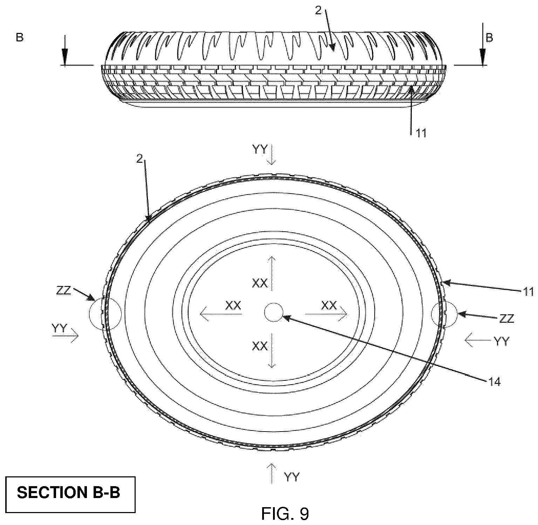

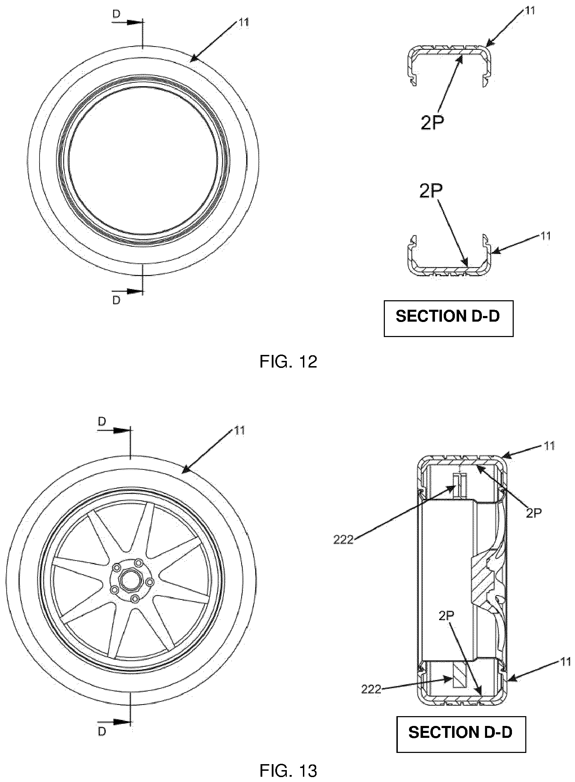

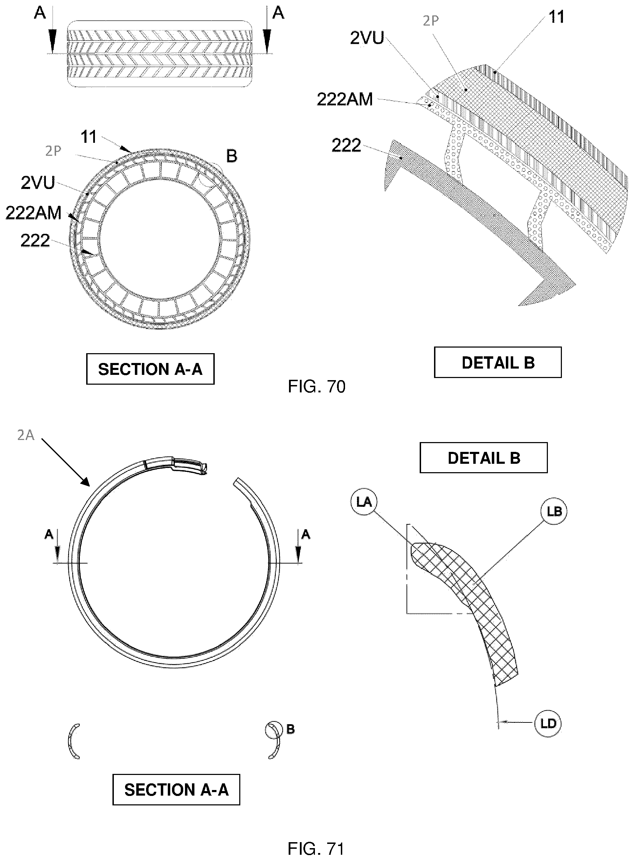

Figure 9 is the simulation of one of the shield damping processes, whether the tire is with air or airless, the shield deforms, thereby demonstrating that even using more rigid polymers, with Shore 70D or 100D, it shall still deform absorbing the impacts and vibrations a little. Another simulation depicted in Figure 9 is when the tire is airless, without inner tube, or limp. Demonstrates the region (ZZ) where the force is accumulated on the shield (2). The fact of the shield not being plane andrather with lateral fins, gives it mechanical strength to support weight, simulating an inner tube. As the polymeric blend used has hardness and flexibility, it acts in conjunction with the tire (11), i.e., even when empty and with no internal air pressure, the polymer substitutes the inner tube, creating the pressure for the tire to continue running without becoming completely empty. Thereby, with a weight incurring on theaxle (14) there is a force XX that is compensated by YY, which keeps the tire full (even airless inside). The shield (2) ensures the tire support, and the factor that regulates the shield's load capacity is the shield thickness and material. Example, the shield 4mm thick in PP/TPV blend has a strength from 80kg to 100kg. In Nylon/PEAD, PA/SEBS, PA/AES with fiber and with the same 4mm presents a strength from 110kg to 150kg. To use the shield on a motorcycle, car or another heavier vehicle, just regulate the shield thickness and the polymeric blend to be used so as to have the necessary load support for the vehicle in question, the tire's thermal resistance to be applied, as well as the impact strength. The increase of thefold (LA), inclusion of internal and external ribs can increase the airless load capacityeven further, in the same manner that the inclusion of a support to the wheel (demonstrated in Figure 13 by the element (222), and by Figure 70 by the element (222AM) ensuring even further a much higher load capacity).

Figure 10 shows the same cut B-B from Figure 9 followed by the cut E-E where the fold (WW) can be observed. The fold creates a mechanical property on the shield (2) which allows the same to have excellent load capacity and memory effect, capable of simulating an inner tube, even with the tire airless. The same fold(WW) can occur on flat-edged tires, such as car tires (as demonstrated on (WW2) in Figure 14), following the tire's construction to ensure a better running (rodagem) capacity, even airless. The fold can be partial, protecting the tire tread more, it can be up to half the tire's side, protecting the tire's sides a little more, or it can be total or semi-total, fully protecting the tire. The greater the fold, the greater the tire's protection, however, the harder it shall be and can produce greater vibration. Further, the edge can have a reinforcement (LA) as demonstrated in Figure 71.

In Figure 11 it is demonstrated what happens with the shield (2) when the tire
(1) comes into contact with a hole or a rigid object (MAD) - the shield molds togetherwith the tire. Advancing on the product researches, a function was generated from increasing the shield edge thickness, which makes it one of the great shield differentials in thermoplastic blends. Figure 71 demonstrates the edge reinforcement by increasing the thickness between 1% to 300% of the thickness of the part that prevented cracks from appearing on the impact testing. The edge increase has brought a new effect: the increase of the tire weight strength when limp or airless in up to 50% more weight when compared with the model with edge that follows the part's tangency. The tangency line (LD) that follows the part's concave design also divides side (LA) from side (LB). Side (LA) demonstrates the accumulation of mass on the part's edge, which allows using larger radii, so preventing burrs from appearing, and protecting the inner tube from perforations andwear and tear from using. Side (LB) represents the shield without the reinforcementof (LA).

However, car tires, just as motorcycle and bicycle tires, among others may need a stop, similar to the *run-flat* tire, or Nylon and rubber straps used to shield carrims. As Figures 12 and 13 depict, the element (222) functions as a stop with the purpose of preventing that the shield (2P), comes to suffer a definitive deformation in case of vehicle overweight or even of a strong impact. (2P) refers to flat-edged seamless shields, but the element (222) can be used in conjunction with every kindof shield (2).

For handcarts and vehicles with lesser load capacity, the elements (222) and (222AM) are optional, for vehicles that support more load, they are important to maintain the optimum shield function when the tire is limp or airless. However unbreakable the polymeric blend, the use of a limiter or stop like (222) can prolong the service life of a shield used on tires of vehicles that run at more than 40km/h.

As the car tire tends to be thicker, there is a greater gap between the two folds demonstrated in Figures 12 and 13 when compared in the round-edged tire. Therefore, the element (222) can be necessary to prevent the plastic deformation, keeping the shield always in its elastic deformation, i.e., keeping the deformation in which the stresses acting on the body are removed, it returns to its original shape.

Figure 14 demonstrates the same section D-D, but with the detail C to the side, the distance (222D) responsible for maintaining the shield's deformation on itselastic moment is highlighted; and the stop (222) being responsible for preventing the shield's (2P) plastic deformation. As the element (222) refers to only an accessory, which doesn't prevent the shield from working without it, in situations ofexcess weight and high impacts its use might be necessary.

With (222) installed, the shield (2P) can be thinner sim from 4mm it is already capable of bending a good part of the small perforating objects. Therefore, the stop (222) and (222AM) are items that make a better control of the tire's load capacity viable, thereby being able to increase the shield's thickness less when used in caseof heavy vehicles.

Further highlighted in detail C of Figure 14 the attachment part (2VU), which is a layer vulcanizable to the tire (11), and that creates a tunnel on the tire separatingthe internal region that has air pressure from a new anti-puncture shielded layer. This layer (2VU) demonstrated in Figure 14 shaped as if it were a large patch wherethe central part is rubber or rubber with canvas, fabric; and the sides have binding rubber, vulcanite, glue or materials vulcanizable to the tire. It can be continuous withno splices, no partition, or in parts, as long as it doesn't let the air pass from inside the tire to the tube's region.

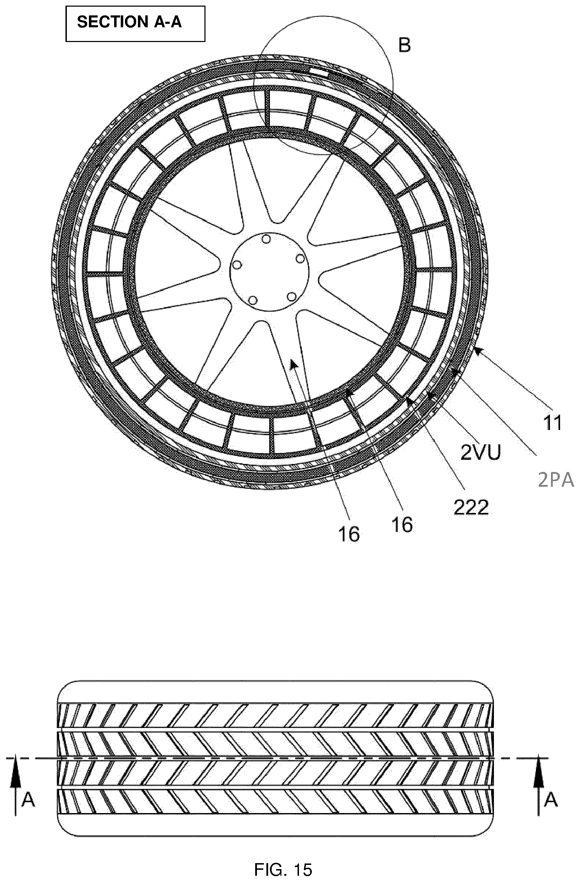

The same situation is presented in Figure 15, an open plane shield (2PA) mounted inside the tunnel, with the blanket vulcanized (2VU) on the tire (11), but with a damping system highlighted in detail B.

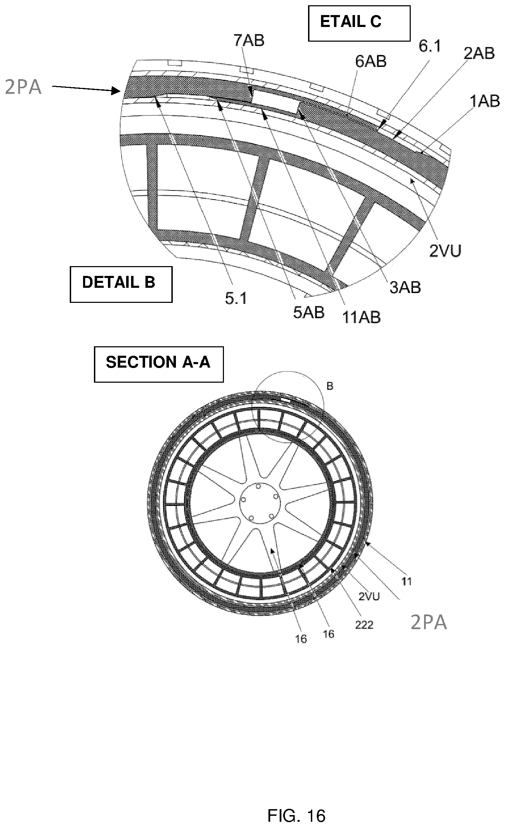

What happens is that with the continuous shield with no splices, eventually the vibration can increase too much for some vehicles since there is a reduction in the impact absorption on the tire's part on account of creating an internal layer more rigid than the tire hardness, the vibration can increase in some vehicles, so, the damping system demonstrated in Figure 16 was developed.

Here a technical challenge is encountered, since the fact of using a harder material as a polymeric blend base, for instance, a Nylon with hardness Shore 70D,the tire shall cause more vibration than a TPV rubber or elastomer with hardness Shore 40D. Even with the damping system proposed, obviously the shield system with Elastomer, Rubbers, Flexible TPV or similar with hardness Shore 40D shall absorb more vibration and transfer less vibrations to the vehicle. Therefore, with thetechnological development applying graphene in these materials, for instance, it shall be possible to create additives capable of leaving Shore 40D materials more heat resistant, more mechanically resistant, so it'd be better to use materials with Shore closer to 40D, i.e., less hard, for shielding the tires on account of proving lessvibration to the vehicle.

### Extra protection system of the Tunnel and the Inner Tube

However the constructivity of the shield system may have been developed toprevent contact with the inner tube (15) and with (2VU), there are some forms of oversizing this protection and thereby avoid that time or stronger impacts and forcesacting on the shield unforeseen or unvalidated in testing might give an extra protection so that the shield can't perforate the inner tube (15) or (2VU). To ensurethis protection, the systems highlighted below run on the supposition of working with Shore A 90A to 20A, preferably with hardness below the hardness of the inner tube (15) or the (2VU).

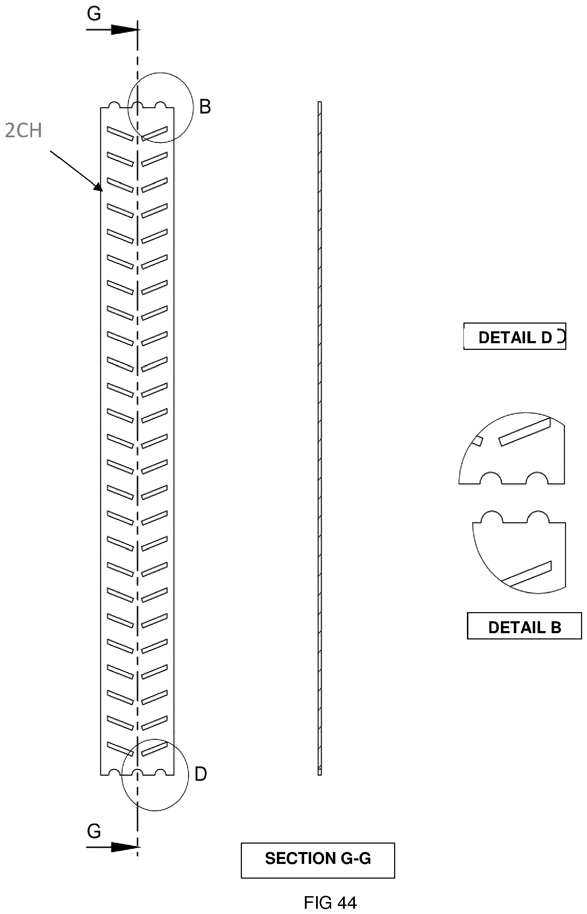

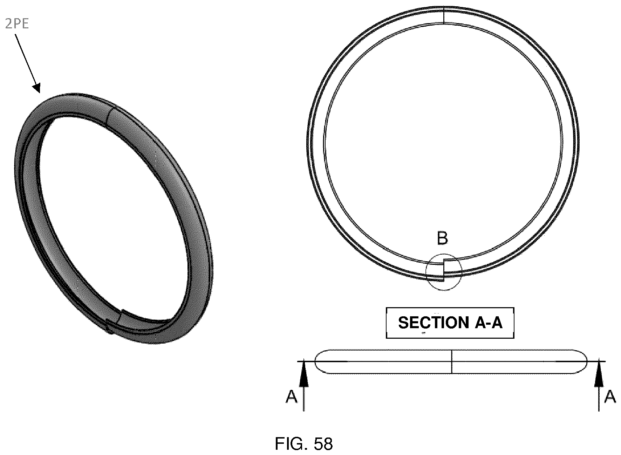

The position of these protection systems must be between the shield's internal surface and the inner tube (15) or the shield's internal surface (2A) and (2VU) - here refers to (2A) which is an open shield, but these systems are applicableto every kind of shield (2):

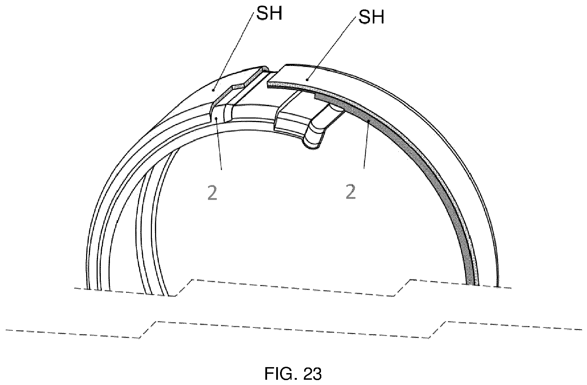

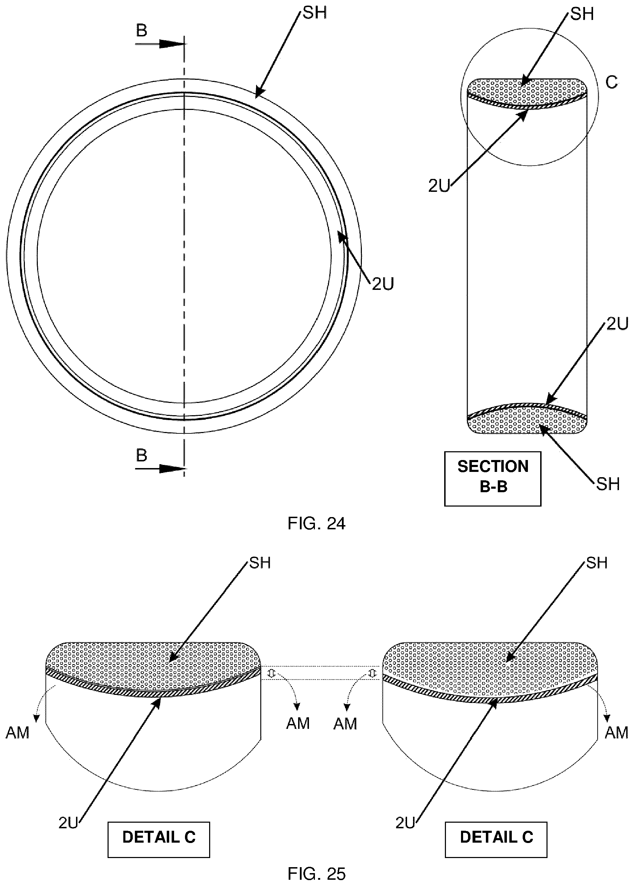

a. Figure 23 and 24 present the element (SH) in the shield (2A) and (2U).The element (SH) is presented as a spacer of Shore 40D to 40A, which must use Shore below tire hardness. The same process of over- injecting or using a part that copies the shield's external surface with a softer layer can be used to apply in the internal layer or on the shield's total envelopment. It is valid to remember that the damping regions between (1AB) and (7AB) can use this softer surface or not, since this softer surface can impair the shield's sliding. Therefore, stops, movement limiting guides and ribs can be used in the region (2AB), (4AB) and (6AB) to allow the optimum sliding when these threeregions are covered by (SH).
b. The same can occur by means of painting on the part with rubberized paint; this painting can be total or partial, preserving some sliding regions of the damping system. Further, a bath with liquid rubber canbe used, or even the part's complete or partial over-injection.
c. The outline regions (13AB) and (5AB) can also be over-injected with material more flexible than the shield and the inner tube (15). these regions can also be protected with profiles made of flexible material, with blankets of rubber, rubberized paint, liquid rubber bath, robotized or manual application of flexible materials.
d. A part such as a cover can also be attached on (5AB), taking on the outline of (5AB) and preventing the same from escaping.
e. A cover such as (BO) can also be used on profiles.
f. Male and female fitting systems partitioned into 2 or more parts such as (2MF) positioned between the shield and (2VU) and the inner tube(15)
g. The use of an ordinary rubber blanket, or elastic material with or without fitting, as presented in Figure 44.
h. A profile extruded with the geometry of the shield's internal profile andof the tire, with geometry similar to the profile presented in Figure 58. Just like a tubular profile that protects the shield's internal and externalside.
i. A part with no partitions, but in elastic material, such as rubber or in thermoplastic elastomer with a design similar to the shield itself (2i), (2P) or (2U), obviously a little smaller so as to allow that the shield's internal surface can receive a part similar to the shield itself with less thickness and greater flexibility, this part can be vulcanized as an innertube, can be injected in thermoplastic material. This part can have simple geometry or edges for fitting in the shield itself so that a person can install the without having to install a protection coat before attached to one another, it is possible to carry out the installation.
j. Further, the same geometry of (2VU) without the lateral gluing edges,can be attached in the shield's internal part (2A) as a form of protecting the inner tube's shield.

### Damping system of the shield

In Figure 16 it is possible to view in detail how the shield's damping system works, with highlight to layer (2VU) that makes the sealing tunnel and leaves the shield (2PA) in the middle between said layer (2VU) and the tire (11). One side of the shield (2PA) starts in (1AB) and ends in (5AB) and on the other side starts in (6.1) and ends in (7AB). The distance between (7AB) and (3AB) is the distance that generates the new damping effect.

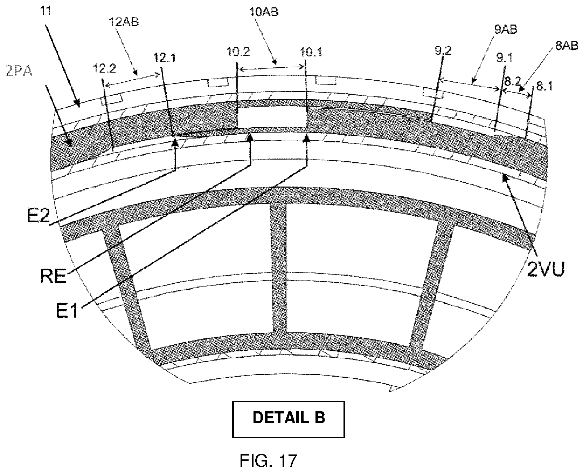

According to Figure 17, as the tire (11) is more flexible than the shield (2A), when opening a cutout in the shield, that starts in (12.1) and ends on (8.2) in the shield's lower face (2PA), and starts in (12.2) and ends in (9.2) in the shield's upperface (2PA), a damping system is created in the simultaneous displacement from (12.1) to (12.2); (10.2) to (10.1) and consequently (9.2) to (9.1).

This damping is a form of compressing and expanding the shield (2PA), causing the same to have the natural flexion of the plastic, added to movement of the regions (9AB)(10AB)(12AB).

Thus, when an impact takes place in the tire, the tire deforms naturally, the shield (2PA) follows the tire (11), as demonstrated further in Figure 17, as the shieldis harder than the tire, the damping system compensates the fact of the shield beingharder, internally also causing the shield to work - leaving the point (10.2) and reaching the point (10.1), and simultaneously leaving the point (9.2) and reaching the point (9.1). Likewise, simultaneously the point (12.1) reaches the point (12.2).

As it can be observed, the region (10AB) can be fragilized in the moment of its opening, for it has two thinner regions in the upper and lower part, as it is observed in the highlight of the region (RE) that starts in (E1) and ends in (E2).

To protect this region, it is possible to increase the thickness of (RE), however, with the increase of the region (RE) there can be unbalancing in the tire (11), to compensate this unbalancing it is possible to subdivide the shield (2PA) into more sections: 2, 4, 8 or more equal parts.

The same system demonstrated in Figures 16 and 17 with (2PA) works in an identical manner with round-edged shields and tires, i.e., with shields (2A).

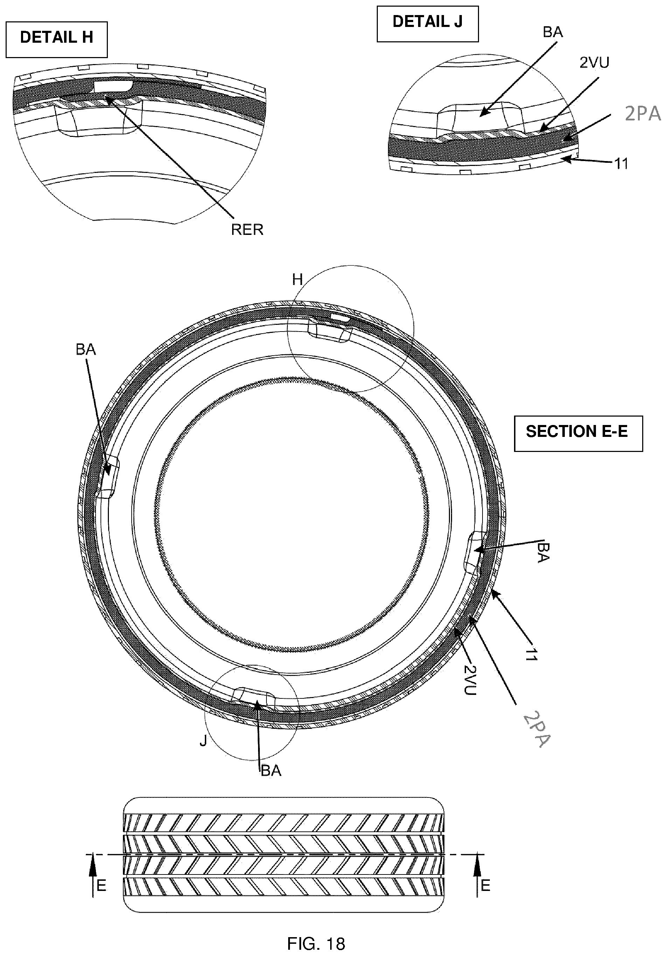

Another form of compensating the tire balancing is to keep the shield (2PA) or (2A) in a single part, but with small internal high reliefs (BA), as demonstrated in Figure 18, to compensate the mass allocated in the region (RER) to the internal side.

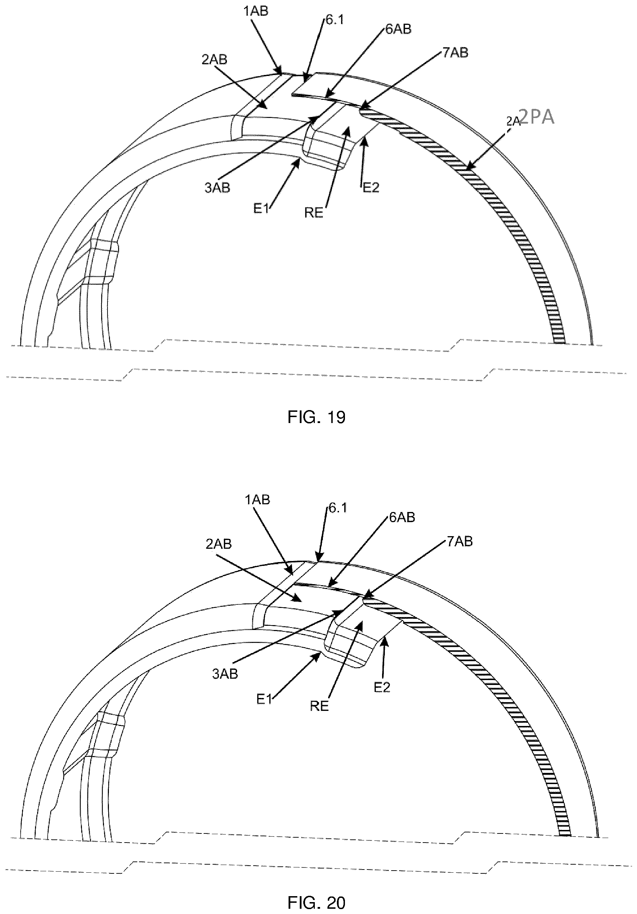

Figure 19 demonstrates the damping system from one side, in cut, and fromthe other without cut, to make viewing easier. In Figure 20, it is possible to view themovement after damping. Further, it is possible to add movement limiting guides inthe upper face (2AB) or in the upper face (RE) that allow the shield to stay always in the optimum position, preventing that the same is displaced to the sides. The movement limiting guides can be lateral or central, in high or low relief. The male side of the guide can stay on the side of the indicated shield (6AB) and the female side on the upper surface in (RE) or (2AB). The same situation can be replicated toround-edged open shields (2A). The guides can restrict the shield from opening upto a certain point, preventing it from opening more than necessary for a certain tire and at the same time, can support greater load capacity, simulating the function of a seamless shield.

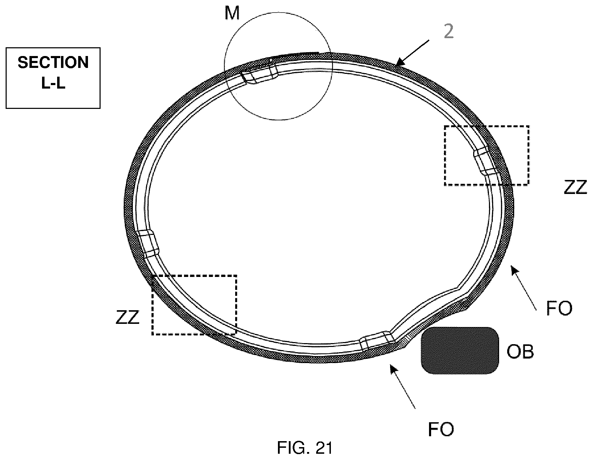

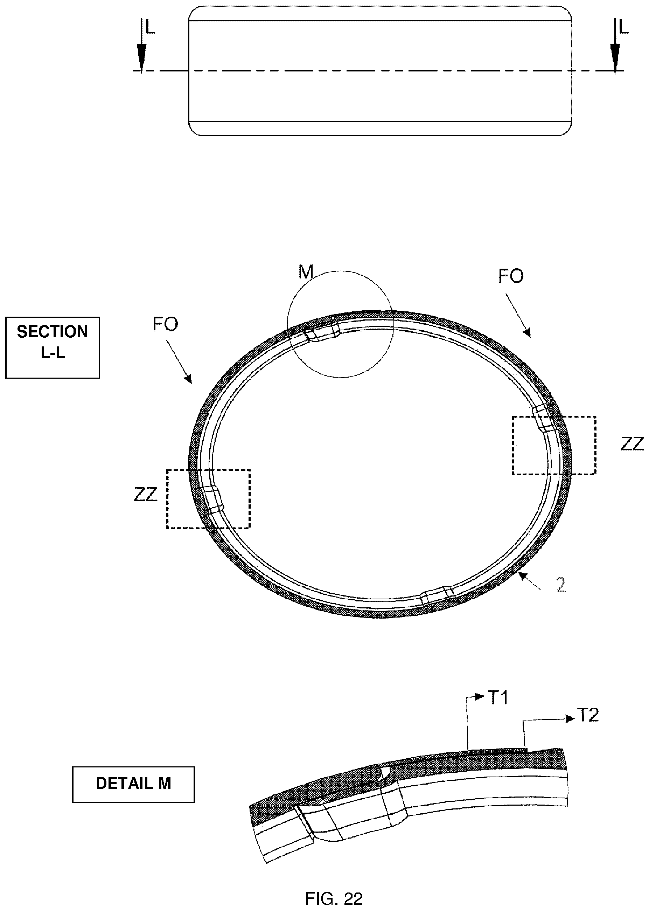

In Figure 21 is possible to understand exactly the shield (2) function after striking an object (OB). The natural force (FO) that would deform the tire exercisesequally in the shield, which follows the shape of the tire taking on an oblong shape or only following the outline of the stricken object. The oblong shape is presented to demonstrate that the shield doesn't leave the tire massive, and, rather, allows that the same had a damping, which generates tensions in (ZZ). However, on account of the shield being more rigid than the tire, when the shield has no damping, the impact in the object (OB) can be very dry, of the same manner that in the vehicle's drivability can present greater vibration. To contain these problems, it can be seen, in Figure 22, what takes place simultaneously to the damping when the shield leavesfrom (T1) to (T2), thereby working the shield size, and absorbing the impact even further, simulating the tire's best possible function.

Thereby, when the shield strikes the object OB, there are two damping systems acting on the tire. The first one is what the shield flexes illustrated by the tire's oblong effect, generating the points of tension (ZZ). The second one is the system demonstrated in Figure 22 that demonstrates the shield leaving (T1) and going to (T2).

This movement from (T1) to (T2) can take place in a partial manner, with lessdisplacement movement, without (T1) striking (T2); this takes place in the natural movement of the tire, there are slights displacements of (T1) in direction to (T2) which causes slight absorptions and impact. And they can take place as demonstrated in Figure 22 with the total displacement from (T1) to (T2) when the tire sustains a stronger impact.

In Figure 22, the same damping movement takes place when the shield encounters an object, hole, or similar, the tire compresses (ZZ) and runs over the object and the shield follows the tire's shape, and the damping system is also actuated as demonstrated in detail 'M'.

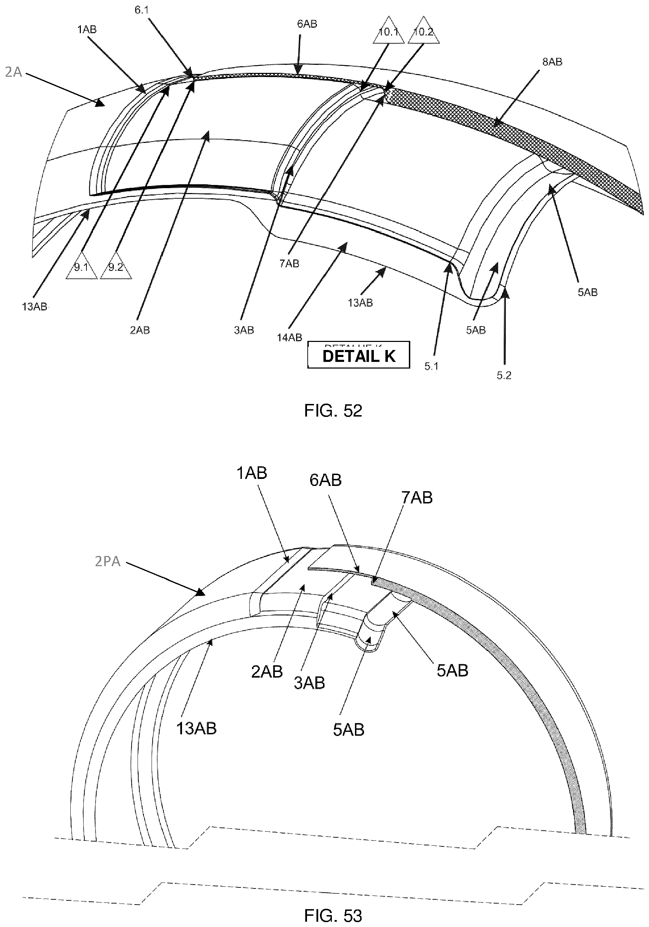

This cutout of the shield (2A) and (2PA) causes the damping system to havetwo functions. The first one, as already explained, is to do the damping, the second one is to be an universal model. Tires of a same category, for instance, a bicycle tire rim 26 x 1.95 has internal dimensions that may have variations between manufacturers. The element (6AB) is very thin, between 0.3 and 1.5mm (Figure 52),to the point that it generates no irregularity in the rubber diameter. Item (6.1) can be very close to item (1AB) or it can be closer to item (3AB). this distance of the entireregion (2A) and (2PA) is the auto-adjust area, which makes the shield of a 26 x 1.95 tire of the example adjust itself between the most varied models of the market. It doesn't get to adjust itself for the tire rim 24 x 1.95 or rim 29 x 1.95, this region allows that various equal tire models from distinct manufacturers use the same part.

Obviously, there is the possibility of an accessory that performs this male andfemale fitting to allow that a single model is sold, for instance, 24 x 1.95 which can be sold with an accessory that elongates for the tire rim 26 x 1.95 and another larger accessory that elongates the shield for the tire rim 29 x 1.95. on the same manner that for other models of other tires of motorcycles, cars, etc.

Further, it is highlighted that for bicycle tires, the profiles system as depictedin Figures 58, 59 and 60 can be used. Coil-shaped, it is easy to carry out an adaptation to the most various tires size of the market, and with lateral fins, the shield is easier to be installed to the tire.

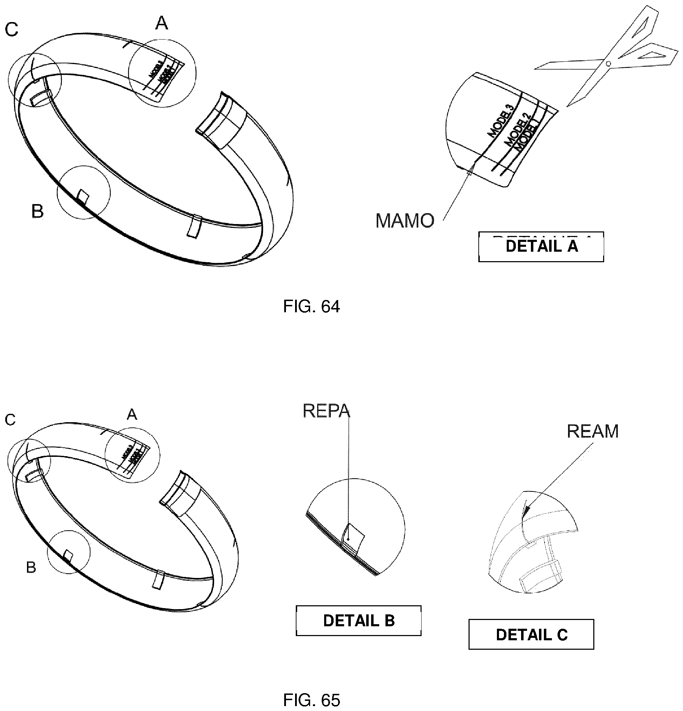

In addition, in the surface (MAMO) it is possible to have inscriptions and markings in the shield so that the manual customization of the shield size can take place in accordance with the model that shall be used (Figure 64).

In Figure 23, in addition to the damping system, it is known that some polymers accept the bi-injection or over-injection process of TPE, TPV, with Shore below 20D, over-injected, for instance, in PP or Nylon of Shore 70D in the shield (2)in the layer that contacts the tire (SH) to work with Shore below the tire's Shore (11). In a tire that has Shore 20D, the layer (SH) of Figure 23 must have Shore below 20D, with the intent of absorbing impact and vibration. For instance, this layer (SH) with Shore 60A could already absorb considerable impact and vibration. In addition to the over-injection process, it is possible use a separate part overlapped in the same region, with no need of the shield being glued. this part can be in any kind of more flexible polymer, such as an EVA, expanded PVC, TPE, TR, thermoset rubber or another material that is adequate to the temperature conditions the tire shall be submitted to

The part (SH) can, further, be massive or have ribs when it is very thick. Further, it can be seamless in a single part, or it can be open, in the same manner as the shield.

It can be on the shield's upper surface, on the lower surface or in both parts,like a tube.

Figure 24 depicts a shield with damping system and vibration reduction by means of inverted "U" that can have or not have a soft material (SH).

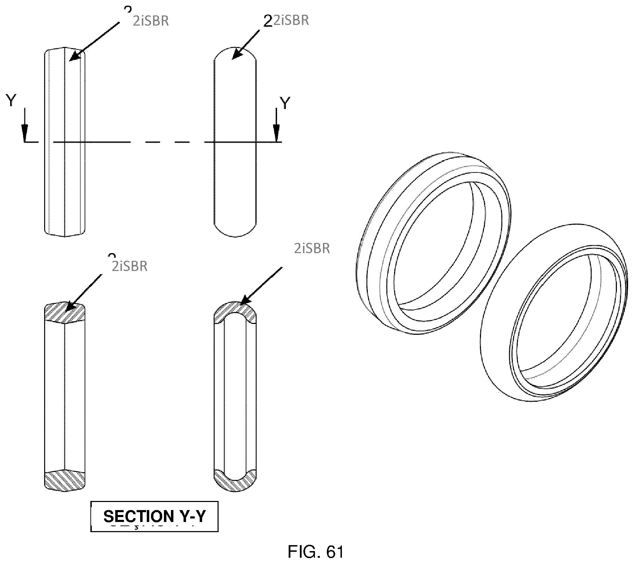

The layer (SH) can have a partition as demonstrated in Figure 23 or it can seamless (no partitions) overlapping the entire shield region as Figure 24 shows. The manufacturing process can be by over-injection, or it can be an additional part separate from the shield, injected in flexible elastomer, it can use Expanded SBR, Expanded PVC, Rubber, or even SBR scraps, crushed, glued and re-vulcanized for some applications (a part similar to the spacer of Figure 61). It is worthwhile to pointout the function of SH is to absorb more impact, but with the differential of having ashield that bring more damping to the tire by the inverted edges.

It must be highlighted that the layer (SH) functions as a spacer, and can, further, function independently from the shield in tires for bicycle, wheelchair, handcart and vehicles of lesser speed.

(SH) can also be manufactured with polymeric blends that award a better memory effect, without having definitive deformation by the pressure applied on it.

For some applications it is also possible the use of the shield (2U) in inverted"U" shape being used without the layer (SH); in this sense, the contact of the rigid shield (2U) is smaller with a rubber, causing it to have less vibration between the shield and the tire, for there is less contact area of the rigid surface with the tire's tread, as Figure 25 depicts.

(2U) has essentially an inverted "U" curve, and can have its fold, in the same manner as presented in (WWW) and (WWW2) elongated for all the side of the tire rubber (11), (2U) can have an edge that follows the side of the tire's internal profile (11); it can go up to half the tire's side (11) or it can be total or semi-total.

The use of (2U) also allows using the systems (222) and (222AM).

(2U) also can use the edge reinforcement (LA) and be industrialized with thermoplastic polymeric blends.

It is still possible, in cases where there is no need to shield the tire, the simpleuse of the layer (SH) acts as a spacer, protecting the inner tube.

As it can be seen in Figure 25, the edge (AM) of the left side is in its initial stage and the edge (AM) of the right side is already in its shape after the impact absorption, thereby the inverted "U" brings reduction of the friction of the shield's rigid region, with the geometry it also generates a new damping process, preventingvibrations

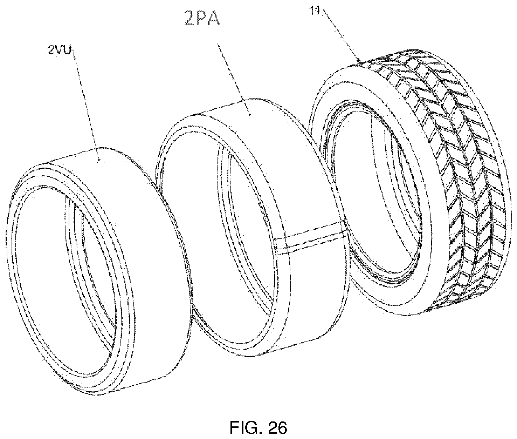

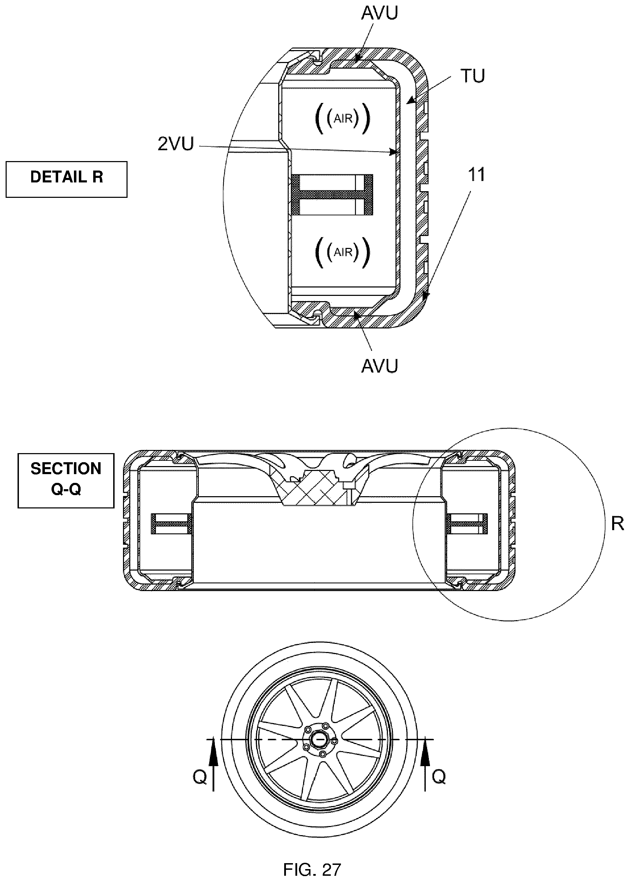

Figure 26 demonstrates how the layer (2VU) can be built in a single part or in parts - (2VU) is responsible for doing the tunnel's sealing, isolating the shield (2PA) from the tire's internal air. In Figure 27, it is possible to view the tunnel (TU) formed by the layer (2VU) with the tire (11). In this tunnel that is allocated to the shield, i.e., the tunnel is an environment isolated from the tire's internal air and in this manner, the pneumatic tire with no inner tube can use the shield without problems.

Part (2VU) in Figure 26, still illustrates another concept, a form of being used in separate, without the lateral gluing region, to protect the inner tube in tires with inner tube (15). So it is provided with attachment devices on the interna face of theopen or seamless shield, and acts like a protector of the inner tube (15).

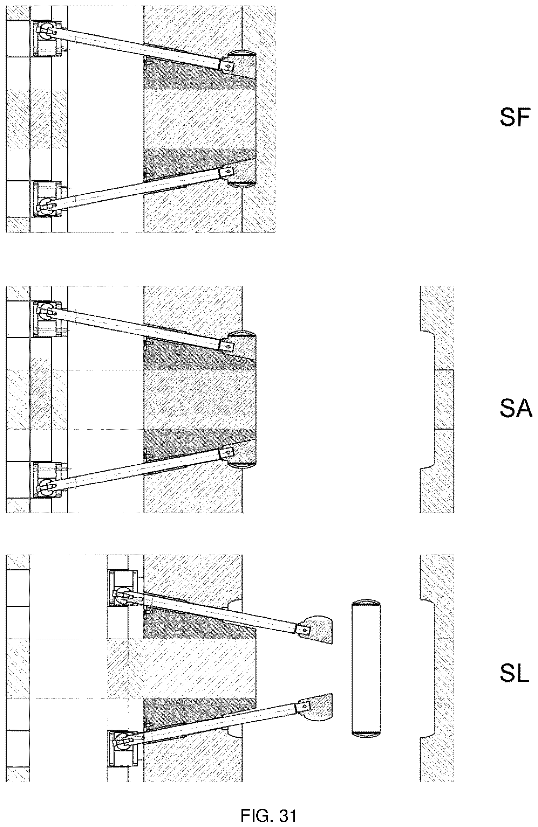

Part (2VU) can be vulcanized internally in a tires industry or even a tire shopin new and used tires. Part (2VU) can be an additional component to any tire, whichfollows the shield. As the vulcanization process depends on pressure to have a weld,there can be a jaws system similar to the male mold of a helmet. Figure 31 depicts how the internal model of the mold that sustains the internal pressure and that allowspart (2VU) to be welded to the tire can work. In (SF) the closed vulcanization system;(SA) show the open system and (SL) shows the release of the part by the angle of the jaws.

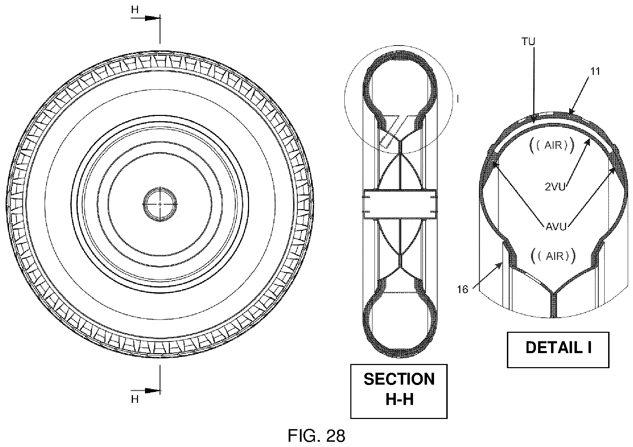

Likewise, tires for bicycle, motorcycle, wheelchair and other vehicles that have round-edged tires can also have a sealing tunnel (TU) as demonstrated in Figure 28.

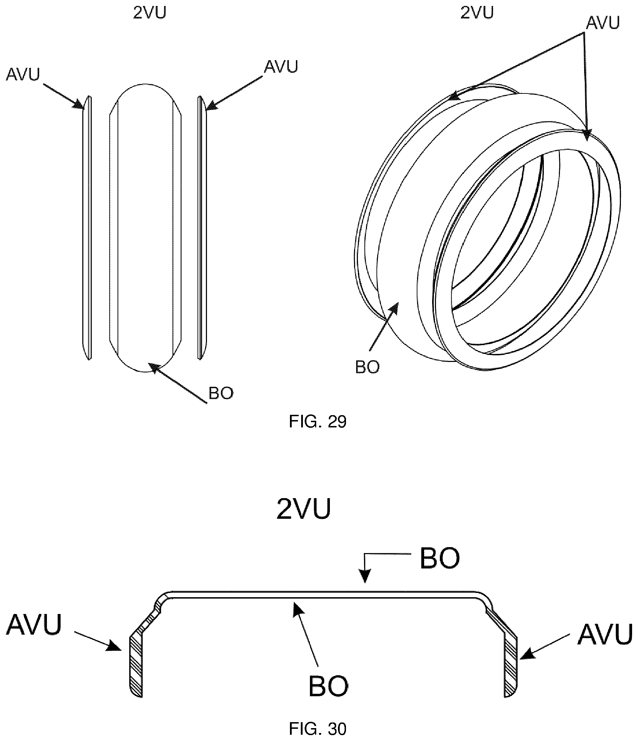

Figure 29 demonstrates how the part (2VU), which can be designed in a manner similar to an automotive repair, can be manufactured, where (BO) is the layer of rubber (with canvas, fabric or rubber similar the inner tube) and (AVU) is thegluing and vulcanizing layer. (AVU) and (BO) are a part of the same part and the purpose of the illustration is to leave the exploded view of the distinct materials of the same part clearer. The extreme lateral region (AVU) is the region where bindingrubber, vulcanite, vulcanizing glue is applied, as Figure 30 shows; the region that comes into contact with the with the inner tube or with the air indicated with (BO) can be of ordinary Rubber, with or without reinforcement of fabric.

So, the area of contact of the cola stays on the side tire in (AVU) and the entire region of (BO) can have layers of reinforcement fabric, canvas and other materials already applied on tires, or be of ordinary rubber, as an inner tube, for lesser impact applications.

(2VU) can be a part already pre-molded, as depicted in Figure 29, or sold incoil like binding rubber and vulcanite, as if it were a large tire repair.

This mounting process of part (2VU) can be done inside the tire factory or in the rubber shop. Both processes allow the shield to be dismounted the post-use and 100% recycled, when produced in thermoplastic material.

Likewise, it is well-known that in the tires industry it is common that the internal part of a tire be manufactured in separate from the external part, and that there is a stage of the industrialization process that the internal part is welded to the external part. It can also happen in a correlated manner in this welding stage, the mounting of a rubber blanket similar to (2VU) which allows that any shield model (2)can be mounted in a tire's normal industrial process - thereby dismissing the use of (AVU). In this manner, a shield can be a part a tire's normal industrialization process,staying welded inside tire, having that the shield (2) can be a thermoplastic, or a thermoset. In the case of a thermoset, it wouldn't need (2VU), the simple vulcanization of the shield in the tire could already bring the desired shield result In the case of using a thermoplastic blend, the same can be glue to the tire's internalface or it can stay loose, with no gluing, but applied inside (2VU).

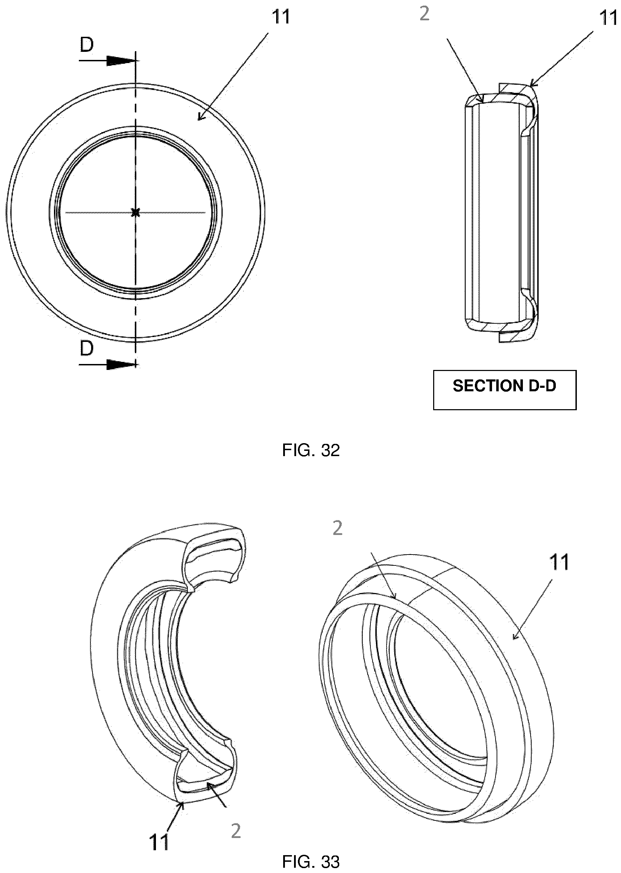

In Figure 32 it is possible to observe the possibility of welding by glue. A kindof glue can be applied on the upper face of the shield (2) that contacts the internal face of the tire (11), capable of welding a thermoplastic on a thermoset. on the samemanner that the shield can be manufactured in a vulcanizable rubber, the simple vulcanization process allows the function of the shield system on a tire with nom inner tube.

Further, it is possible to vulcanize the rubber shield in the external area of the inner tube, thereby creating an inner tube with shield. In the unions between two parts (2ES) there can be a distance or a system in V, allowing the shield to have a better impact absorption. Further, it is possible to leave the shield (2) with a slight interference on the tire's internal face, i.e., the shield with a diameter slightly larger, which causes that the same not to need the gluing or vulcanization process to remain attached to the tire.

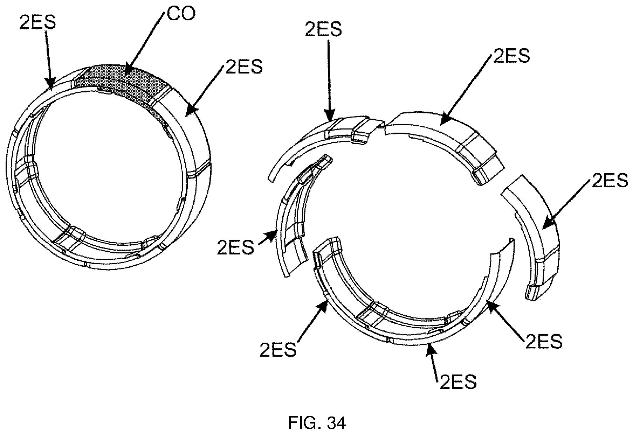

Figure 34 demonstrates a scaled system with 7 identical parts, but obviously only in the condition of demonstrating the scaled system, which can be with more or less parts. The scaled system can bring greater flexibility to the shield both for internal use in the tunnel (TU) with part (2VU) as for use with glue, and for the vulcanization of these parts (2ES) in the tire (11). with these several splices the tire generates several matched damping systems, which allows the same not to be so hard, such as the system of Figure 33.

It is shown in Figure 34, in the face with the hexagons (CO) the surface of applying glue or vulcanization - in all the surfaces (2ES) are glued or vulcanized. Several parts (2ES) are demonstrated, which can be que increased or reduced according to the need of increasing or reducing the system damping.

This system constructive system allows modules to be created and allows that small, medium and large tires can be mounted with the same element (2ES), or with elements (2ES) of different sizes, but which manage to form the internal diameters proposed by the most varied tires.

The partition and junction lines of a layer of (2ES) with another layer of (2ES) must have a clearance, distance from one another, or even having a V fitting, allowing the shield to work.

Figure 35 demonstrates a form of generating an air curtain between the tire and the shield, improving the heat exchange between the tire and shield and reducing the direct contact of the shield with the tire, thereby the groove design of the shield can help in the heat exchange, in the mechanical robustness, in the easiness of bending a nail and even in the shield damping, since in this case the contact area of the shield with the tire is smaller, so the same can stay less hard comparing the smooth shield or with small grooves.

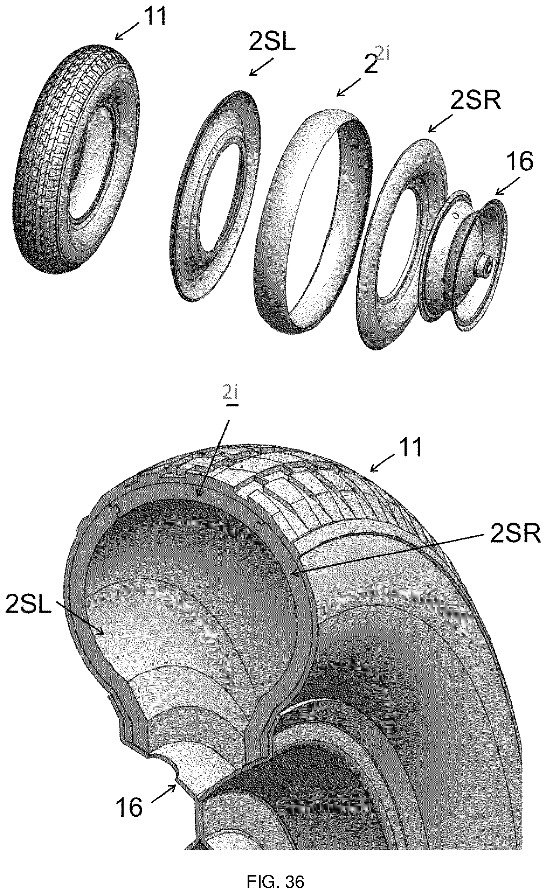

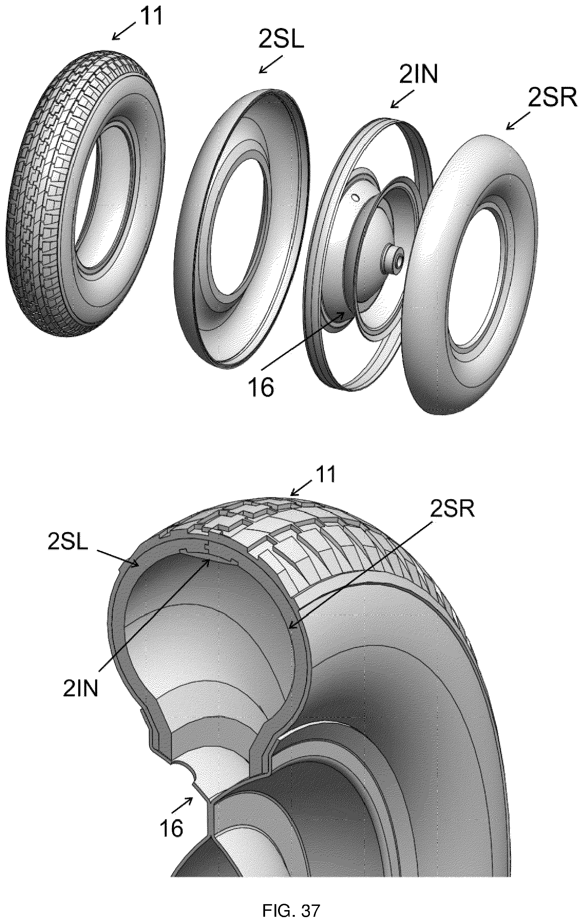

According to Figures 36 and 37, it can have accessory parts (2SL)(2SR) that complement the shield (2i) on the side. Even if illustrated for handcart tire, such application can easily be performed for bicycle, motorcycle and car tires. The parts (2SL)(2SR) can contain with mounting reinforcement (2IN) in substitution of the shield part (2i), being an internal accessory. The industrialization process of such parts is preferably done by injection of plastics. This model, further, can use the damping system that divides the shield in a part. Parts (2SL), (2SR), (2IN) can be fitted or welded by ultra-sound.

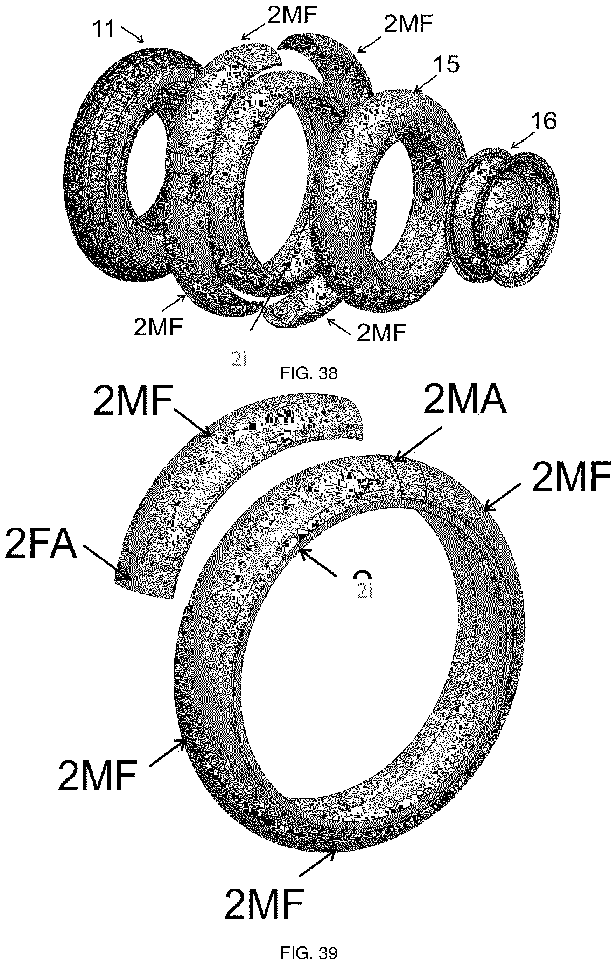

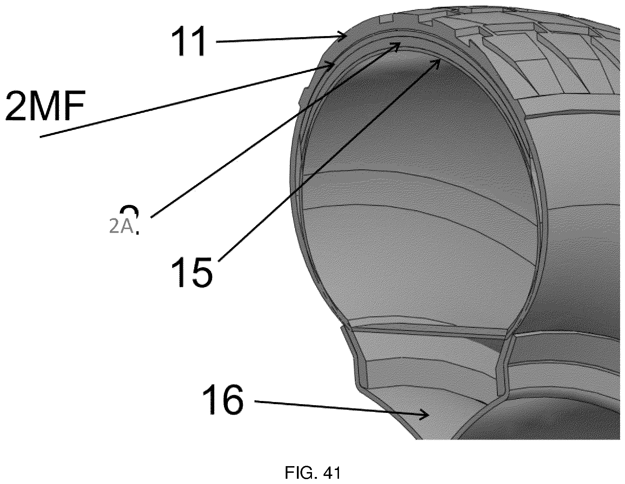

Accessory (2MF) is demonstrated in Figures 38 to 41, which refers to a polymer injected with the purpose of doing the thermal insulation of the tire rubber (11) with the shield (2A), allowing that the shielded tire (1), even at greater speeds,doesn't heat up the shield (2A) to the point of generating its softening. The proposalis that (2MF) is a thinner layer (0.3mm to 2mm) of a more rigid polymer with Shore 40D to 100D so that the shield can use a more flexible polymer, Shore 80A to 40D.The set of thicknesses applied in (2MF) and in the shield's tire tread (2A) help the technology to have application in vehicles that generate greater friction by speed such as cars, motorcycles, bicycles, and at the same time doesn't have much vibration.

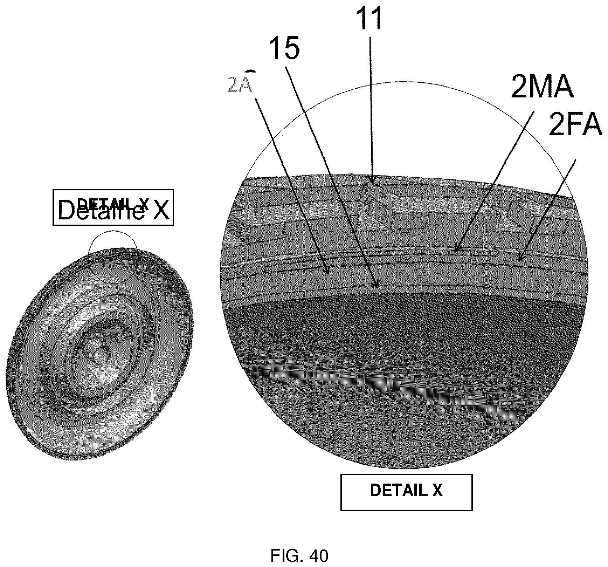

In Figure 39, the shield accessory (2MF) of male (2MA) and female (2FA) fitting in the shield (2i). In Figure 40, the male (2MA) and female (2FA) fitting when the tire is mounted, allowing a natural adjustment according to the pressure used in the tire. Such application is demonstrated in handcart tires, however, the better the engineering polymer used, the greater the thermal and mechanical capacity the shield of lower Shore shall have. Such effect can be reproduced in other tires, as of bicycles, motorcycles, cars, among other agricultural vehicles. The proposal is to always maintain the shield (2) in Shore D above 40D and (2MF) helps to use softer polymers in the shield. In any manner, the use of polymeric blends already fulfills practically all of the cases that need generating a good heat exchange in the shield,and (2MF) is rarely used in specific situations.

The same constructivity of (2MF), when used with Shore above of 40D can also become a shield (2) for tires with inner tube or for use in tubeless tires inside the tube (TU). (2MF) allows that protection layers can be done, being able to use one over the other to increase the degree of protection of the tire. (2MF) can still bea constructive process for shields (2) of large shaped tires (on the same manner as(2ES) of Figure 34).

The same constructivity of (2MF) when used with Shore between 40D and 40A can be applied in the shield's internal surface. In this position it reduces the contact of possible rigid burrs and edges of the shield (2) and (2U) with the inner tube (15) and with (2VU). This process allows that even under a strong impact or after a long period of time, even if there is still a good protection between the inner tube (15) or (2VU) and the shield. To this purpose, one or more parts of (2MF) canbe used to protect a part or all the shield's internal region.

The shield (2) for bicycles, motorcycles and cars and other vehicles, requires a greater thickness, as well as the use of additives which keep the polymer more stable with the friction and the movement of the car that produce heat and can change the shield hardness. These additives cause, in hot days and with the intensive use of the vehicle, the field hardness to maintain itself between Shore 40D and 100D. The shield function occurs maintaining the rubber or the polymeric blendflexible Hard or Extra Hard.

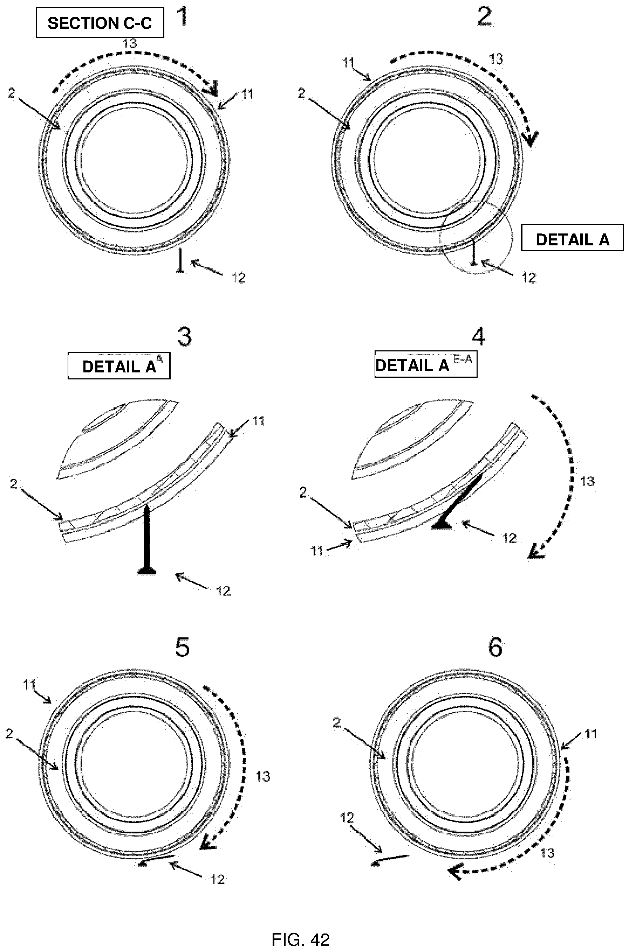

Figure 42 highlights the function of this new effect and of this new technology, that seeks to preserve the shield (2) in Shore above 40D, even when submitted to tire rotation in speed, it causes the new effect of crushing a pointed object (12). Regardless of the vehicle that uses the shield, when a flexible polymeric blend of Shore above 40D is installed inside a pneumatic tire the same begins to have the characteristic of crushing a nail, for instance.

Obvious that for applications where more heat shall be produced by the tire,the shield must be installed with superior Shore D, such as 50D, 70D, 90D, 100D, according to the application and with the tire's thermal requirement. The more heatit produces, the softer the shield stays, thereby greater thickness and more for the engineering polymers segment shall be made the base of the polymeric blend.

The other behavior of this solution is demonstrated in Figure 42. It is capable of crushing a pointed object (12) such as a nail, i.e., in the solutions generally known, the object penetrates and remains intact. On the other hand, in the current invention, the object penetrates and is bent and deformed, not allowing it to come into contactwith the inner tube (15). The pointed object (12) penetrates the tire rubber (11), but when it strikes the shield (2) instead of perforating it, the object is bent. Having, therefore, not only the function of not perforating the stricken shielded tire (1), a of eliminating the danger to other vehicles which don't have such technology. This takes place for when the nail penetrates the tire, the tire pushes the nail, and makes a slight inclination on the same, que which encounters a mass of polymer more rigid than the tire, not being capable of penetrating this harder polymer more, on accountof already being slightly inclined and by the movement of the wheel and the tire, thenail (12) deforms.

The same process depicted in Figure 42 place in tires with inner tube and without inner tube, with shields installed in the tunnel.

It is highlighted that such a deformation effect only takes place when the hardness of the shield is above 40D. i.e., the shielded tire (1) has an optimum function with the shield (2), but the technical crushing effect of pointed objects takes place only when the shield is above 40D. It is known that the tire's high rotation generates heat, which can reduce the shield's Shore.

This technical effect takes place for two reasons, as exemplified in Figure 42:The first one is that there is a combination of two distinct hardness. The tire rubber (11) normally has hardness below Shore 50A to 80A, and the shield (2) of hardnessabove Shore 40D, being able to, in some cases, use between 80A and 40D for shields of some polymers with thicknesses above 2mm. This difference of layers and the 2 distinct objects summed to the movement of the shielded tire (1) allows that the perforating object (12) penetrates in the tire rubber (11), but that, when encountering the second object, the shield (2) that has a greater hardness, propitiates a new effect, for the encounter of a greater hardness summed to the rotation movement of the tire (13) generates the crushing of the nail.

After mounted, it is summed to the shield (2) the effect of the tire's movement(13), and with the rotation, the pointed object (12) penetrates firstly in the tire rubber(11), when encountering the shield (2), a small rotation of the tire has already occurred before the object strikes the shield, and as the internal layer is harder thanthe external layer externa, this small displacement of the object, summed to the inclination that the tire rubber has generated on the nail, already causes the same to bend, and when it strikes the shield (2), this is bent by the very rotation of the shielded tire (1), which doesn't manage to perforate the shield. In synthesis, this is a non-perforating shield (2) that protects the shielded tire (1) and deforms perforating object (12).

Tests were made with the nail in the direction of the movement and against the direction of the movement of the tire, i.e., pointed towards the tire, in all the testes the shield was capable of crushing the nail.

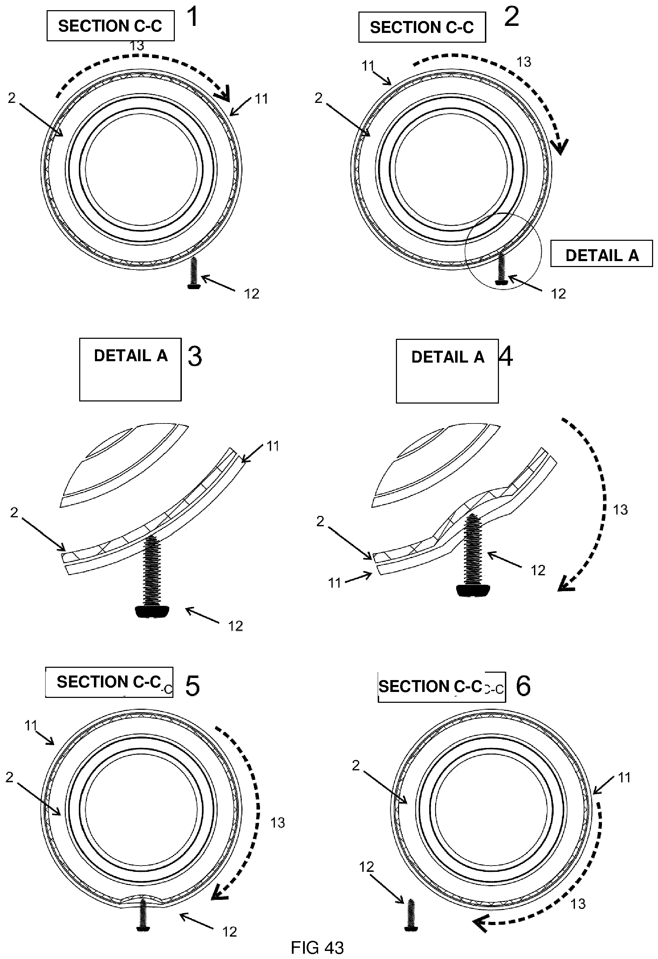

Figure 43 demonstrates a new process, for a few more rigid objects such asthicker and more structured screws and curiously for small nails (with length below10mm), the shield is also capable of preventing the perforation. In the same schematics exemplified in Figure 42 follows the details in Figure 43, which demonstrates in another situation for more rigid objects where the tire with the shield is capable of literally running over a screw, without damaging the screw and withoutemptying the air from the tire. In this sense, what happens is that the shield deformsand to have space to deform in the inner tube region, it occupies the inner tube region until concluding the passing by the perforating object, protecting the inner tube, or protecting the tunnel in the case of tubeless tires.

Another technical effect is that when bending the perforating object (12), thevehicle that has this shield (2) acts in a preventive manner to other vehicles, crushing these objects on the course of the road and protecting other vehicles that are not provided with this technology.

Therefore, the shield effect of pneumatic tires can be achieved by means of 2 distinct hardness. In the specific case of the handcart tire, the tire rubber (11) of handcart has hardness Shore 75A and the tire shield (2) has hardness above Shore40D. i.e., a thermoset or thermoplastic material used in the shield (2) with hardnessabove 40D in the internal part of the shielded tire (1), tends to cause the shield effect, i.e., the capacity of crushing a nail. The same can also take place in other kinds of vehicles, such as bicycles, automobiles, motorcycles, but in the case, theseother vehicles preferably use above Shore 60D a 85D in the shield on account of requiring greater thermal resistance.

The current invention, on account of forming a rigid mass with the same shape of the internal part of the pneumatic tire (or even with a small interference in some cases) simulates the tire with air, stretching it and keeping it on a more stableposition. With this new function, the shield (2) also allows the use of the shielded tire (1) without the same staying flat, for a certain period of time even when it is absent of air or with the inner tube limp, preserving their mechanical characteristicsand function.

This shield technology (2) by means of distinct hardness, a smaller one in thetire and a larger one in the internal shield is used in pneumatic tires with inner tube.

Complementarily to the Hardness, the polymeric blend used must always usepolymers that strength to the impact, making the shield unbreakable for the application it is intended. So, the shield must always be hard enough to crush a nail and flexible enough not to break in the tire in which it is used - respecting the impacttesting of the type of tire in which it is used.

Figure 44 depicts a shield (2CH) or spacer that can be made in a plate and shaped to a tire. It also depicts that blanket of Shore A between 80A and 20A can be installed between the shield's internal face and the inner tube, or between the shield's internal face and 2VU. It can have fittings as demonstrated in the illustration or it can be smooth with no fitting, just overlapping the protection edges so as to protect the direct contact of the shield of superior hardness distancing the shield from the inner tube or from (2VU). It can still have fittings to attach the part in the shield, allowing a better handling of the shield mounted with the spacer.

The shield (2) doesn't perforate the inner tube when sustaining impact, i.e., causes the inner tube (15) not to puncture by pressure of the rim (16) when receivinga strong shock on a hard region such as a curb or stones, performing a protection, since it doesn't allow the tire to lower to point of crushing the inner tube. When receiving the same impact it causes the tire to deform much less. Different from theprocess used by Tannus that protects the rim edge, in case this technology is not necessary, since the shield prevents the tire from lowering, like in a *runflat* tire.

Another differential of the shield (2) is it allows that a handcart, for instance, be used airless or with the tire practically limp. On account of being a rigid core, it allows the handcart to be used without the shielded tire (1) becoming fully lowered by the lack of air. The same can occur tires for cars and motorcycles, and other vehicles as already demonstrated.

### Industrial process

The industrial process of the shield (2) can be done in one of the following manners:
a) Injection of the shield (2) in cylindrical shape using the shield as a separate part and accessory to the tire, transforming it into a shieldedtire (1);
b) Vulcanization of thermoset rubber of the Shield (2) in the tire;
c) Shield (2) in EVA;
d) Shield (2) in expanded PU;
e) Shield (2) in expanded Rubber with scraps of recycled material or withvirgin resin;
f) Shield (2) in expanded PVC;
g) The materials described from item C to F can, further, be added of compatible polymers forming blends;
h) Shield (2) in blends of thermoplastic polymers with hardness above Shore 40D, capacity of working constantly with temperatures from - 50ºC to 150ºC, summed to a strength to impacts to the point of becoming unbreakable for the application it is intended for, in addition to enabling an excellent heat exchange. The blends can, further, have compatibilizing agents, graphene, loads such as fiberglass, carbon, Kevlar, talcum and other thermal and mechanical modifier additives;
i) Rotational Molding and Thermoforming for large-sized tires;
j) Machining, shaping;
k) Molds of resin and fiberglass, Kevlar, carbon.

a. Injection of the shield in cylindrical shape using the shield as a separate part and accessory to the tire;
b. Stamping of the shield in vulcanizable strap (Figure 44) welded to the tire by the vulcanization process or mounted to the tire in an independent manner;
c. Vulcanized rubber welded directly in the tire;
d. EVA;
e. Expanded PU;
f. Expanded rubber;
g. Expanded PVC;
h. Extrusion of the shield in vulcanizable strap (Figure 44), and welded to the tireby the vulcanization process or mounted in an independent manner;
i. Shield molding in cylindrical shape for later welding process by vulcanization;
j. Gluing of the strap (Figure 44) on tire by means of a chemical glue used in tires.

a) by mechanical connection;
b) by means of glue;
c) by the vulcanization process of the shield direct in the inner tube.

This process can be done both for round-edged tires and for flat-edged tires like those of cars. Both for seamless shields and shields with one or more openings.

For the plastic injection process to be used, it is possible to use collapsible systems or jaws of the same shape that makes a helmet mold. Thus, it is possible to produce a complete shield with no partitions or with one or more damping partitions.

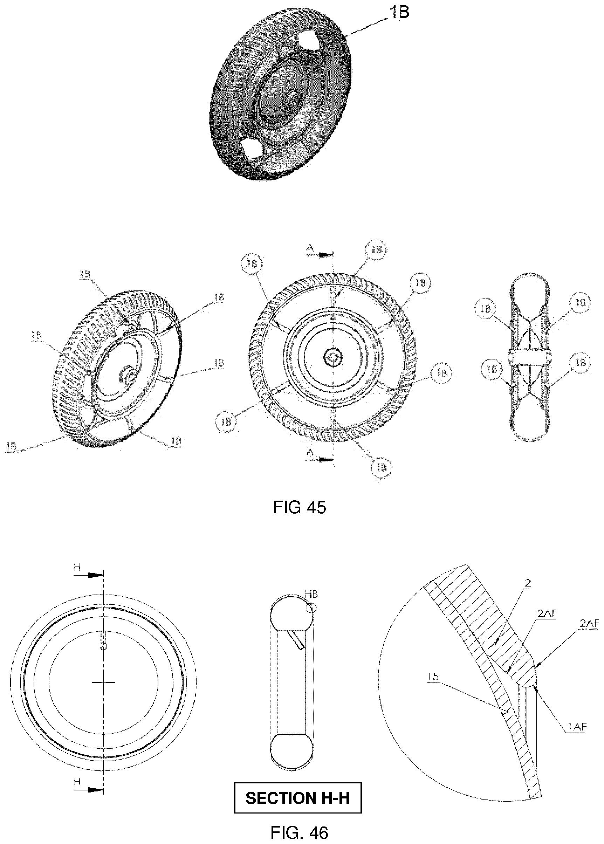

According to Figure 45, the shield's balancing system during the mounting process can be injected together with the shield or it can be a separate part that during the mounting process is used with the intent of ensuring the tire balancing, as the shield is very tight, normally even a little larger than the pneumatic tire, it enters the tire under pressure, making the tire expand. Often during the mounting process, when the process is done manually and not by automation, the shield (2) can be unbalanced, so these parts (1B) serve to ensure that the shield is always well centralized and the assembler may have a correct reference if the mounting was well done. This mounting can be done both in the factory production and by anordinary user.

Part (1B) can be injected in conjunction with the shield (2) or it can be a singlepart used only as a mounting template.

The shields can also be mounted by an automated process with robots or templates that allow an optimum balancing to be done in the tire.

As Figure 46 depicts, in the section (HB) the system developed so that the shield (2) doesn't puncture the inner tube (15) with the impact and with the tire function is demonstrated, with a more rigid edge in Shore above 40D the shield could 'bite' the inner tube in a stronger impact to perforate the same, with the thickness reduction, the edge stays more flexible, preventing this eventual 'bite' from occurring. The Edge Reinforcement (LA) presented in Figure 71, comes to reinforce this geometry presented, awarding a greater radius and a greater thickness to (2AF), capable of withstanding even more impacts.

Another process with the same purpose can be seen in Figure 52 in item (13AB) that demonstrates the mold closing line of the mold that stays to the external side of the tire, thereby preventing that burrs can puncture the inner tube or the tunnel.

In Figure 46, in (2AF) the reduction of the material's thickness is demonstrated, on account of referring to an essentially flexible polymer, even with Shore above 40D, when this material reaches a thin thickness the material stays more flexible, thereby preventing that a rigid part comes into contact with the inner tube, being able to puncture it. This thickness reduction is functional and causes theshield (2) not to manage, even when deformed by a strong impact, to perforate theinner tube (15), given that its edges are thin, rounded and more flexible.

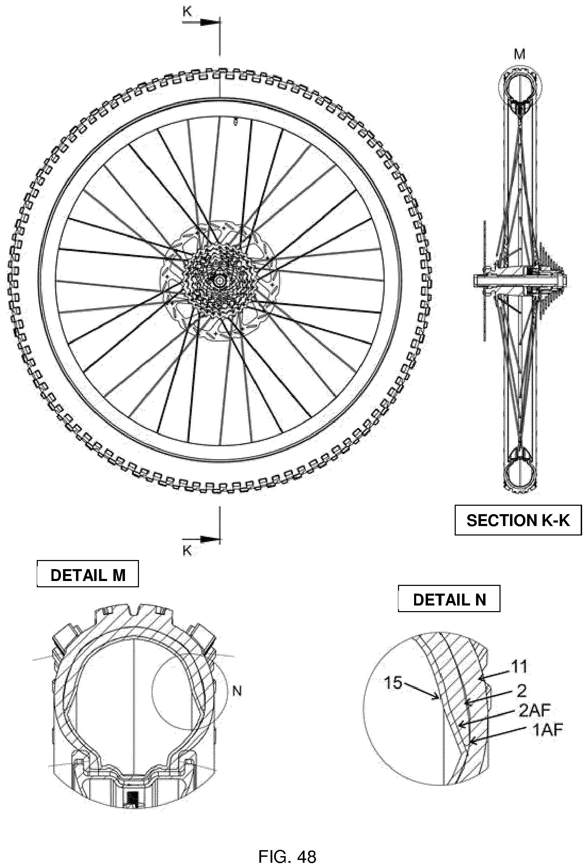

The function (1AF) refers to a rounding of the shield in (2) that is functional, since this process causes the ends of the shield to always be more flexible, for whenthe tire suffers an impact (as it can be observed in Figure 48), if the end of the shield is rigid as it is in the tire tread region, the edge of the shield could tear the inner tube(15).

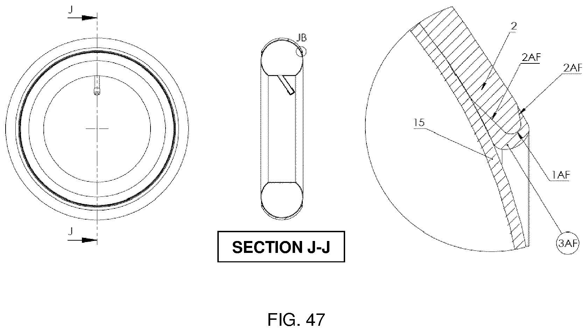

In Figure 47, in detail (JB) it is observed that the protection of the shield system ends can also can also take place by an over-injected part (3AF) or even aprofile or part independent from the shield injected more flexible with the intent of protecting the rigid edge of the shield with Shore 40D to 100D. So, part (3AF) is a system that uses Shore 80A to 20A and protects the shield (2) from puncturing theinner tube (15) or (2VU), mainly, when there are impacts. (3AF) can, in a similar manner, cover the edge reinforcement (LA) - demonstrated in Figure 71.

It is valid to point out that for various tires it isn't necessary to protect the internal face of the shield (2), but for some vehicles it can be necessary.

Figure 48 demonstrates the applying of the of the shield on a bicycle tire.

It is worthwhile to stress that, for systems in which the shield is made of a thermoset material, and vulcanized to the tire, this problem doesn't exist, since the vulcanization welds the ends of the shield to the tire. Thereby, systems of shield vulcanized to the tire, can be used with inner tube and without inner tube. Then, even if an inner tube is used in these systems, there is no need of protecting the end of the shield for it is already welded to the tire.

### Open shield for adjustment in various tire models

Open shields can have a round (2A) or plane (2PA) tire tread. The main difference between them is the shape of the edge, one is applied to tires such as those of handcarts, bicycles and motorcycles that have the edge rounded, and the other to tires of cars, bus, tractors that are planer. The universal fitting and impact absorptions system works in an identical manner for both models.

The handcart tire diameter 3.25x8, for instance, varies in average 40mm between manufacturers - being able to measure from 350 to 390mm in diameter and 80 to 85mm in thickness.

For the purpose of creating an universal shield that can be purchased directly by the end consumer, the model presented in Figure 49 was developed. Notice thatthe region (6AB) stays well removed from its normal position when a shield is mounted on the tire. This takes place for this is the position that (6AB) leaves the mold. It is more removed, then, between (6AB) and (5AB).

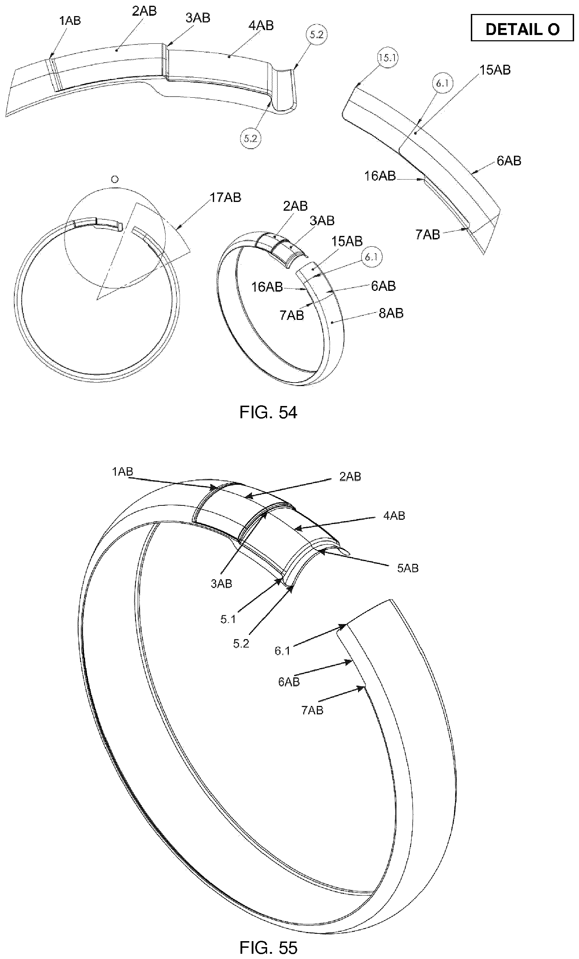

In addition to creating with this solution the universal model that auto-adjuststhese 40mm of difference between manufacturers, there is the possibility of including an insert in the mold so that a same injection mold can inject two or more shield models (for the tire 3.50x8, 3.0x8 for instance). The region (17AB), is an insertchange area (Figure 54). Therefore with only one mold a shield of diameter 350mm,for instance, can be made and with the change of inserts increase the shield to 390mm. So, the actual shield diameter is of 410mm, but as there is a radius very similar to that of the tire, this difference of 410mm to 350mm helps the shield to always maintain the tire always full, since it enters larger than the tire diameter, in addition to allowing that more than one shield can occupy the same mold. This holdstrue for shields of any kind of vehicle, whether flat-edged or round-edged.

It has a bevel (1AB) so that the tire rubber did not find a dry step, and, rather,made a smooth transition with the shield, thus preventing shoulders on the external side of the tire. The female berth (2AB) where the male (6AB) is going to settle. A stop (3AB) which limits that the final edge of (6AB) doesn't exceed the limit on (1AB) - for if it exceeded (6AB) it would be overlapped and would create a step. An extrashield (4AB), since the shield to regulate itself, if there wasn't this region the shield would be unprotected. A smooth curve (5AB) that ends upwards, since this system is for tires that have inner tube and manufactured in the plastics injection process, remembering that (5AB) also protects (2VU) in tubeless tires. The curve in (5AB) causes that there is no dry edge that comes into contact with the inner tube or with (2VU), thereby preventing the inner tube (or the tube) from being punctured whether by the edge or by the burrs of the mold. The adjust system (6AB) is a thin surface that slides over (2AB) enabling the shield to protect a same category of tire with the dimensional tolerances from various manufacturers. The thinner (6AB) better the finish with the tire mounted, to prevent irregularities from being created in the tire.

This bevel (1AB) can be replaced by a through cuts in the polymer for the purpose of generating a coil effect allowing the polymer itself adjust to the correct position according to the tire pressure.

This cutout that separates (5AB) from (6AB) provides the tire damping, and is designed in this manner to provide a better engineering for the part. However, the However, the partition can be perpendicular, wedge-shaped (on the diagonal) or even curved, promoting a cutout similar to the one demonstrated in Figure 49, but with a simpler geometry.

Region (5AB) and (6AB) can be replaced by flexible polymers that can be compressed and occupy their space according to tire pressure. So, these geometries are optional, and cannot exist in some tire configurations.

The region (1AB) and (2AB) can have the shape of the tire outline, without the recess promoted by (6AB). Therefore, (6AB) can be eliminated in some tires.

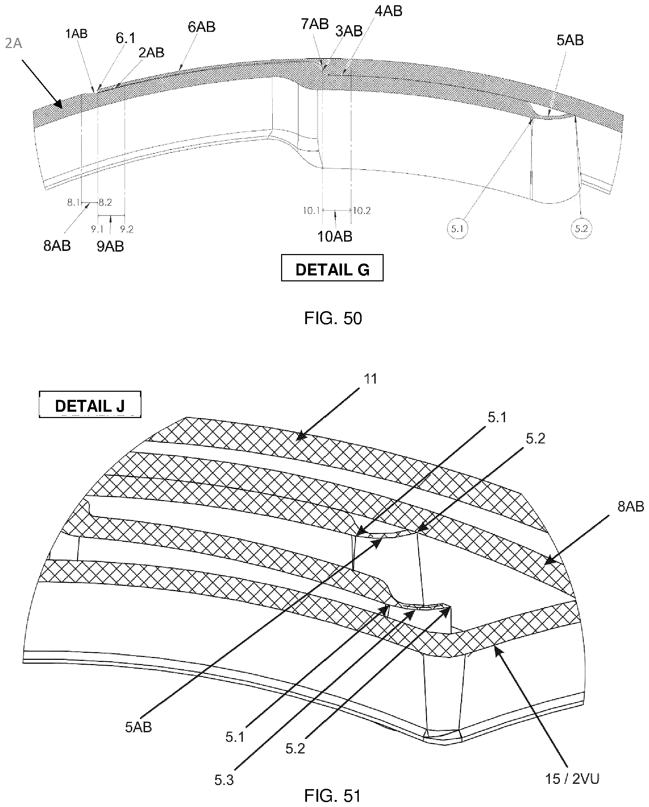

According to Figure 50, when fitting in the tire the shield takes on a perfect circular shape. Part (6AB) has a long area to run, between (8.2) and (3AB), being the region that can travel to adjust the shield to the size of the tire, i.e., the smaller the tire diameter, the more the end of (6.1) shall approach (8.2); the larger the tire, more the end of (6.1) shall approach (3AB). In this small manner, this small thickness of the shield in (6AB) ensures that the tire can have regulation adapting the tolerances and designs from various manufacturers in the market. Observe, further that (9AB) and (10AB) have a symmetry function. Since the standard of the shield is to ensure, in addition to ensuring the shield um certain damping, preventing that the tire stays with a dry strike. Therefore, the shield works perfectly when (6.1) meets (8.2); however, there is an improvement in terms of comfort when (6.1) is in (9.2), since this distance from the end allows the shield to have damping, i.e., whentire runs over a relief or hole, the end (6.1) leaves position (9.2) to position (9.1), in the same manner the end (7AB) leaves point (10.2) and reaches point (10.1) reaching the stop (3AB), and this space between the ends generates the tire damping, leaving the drivability more comfortable, mainly for tires of vehicles that don' have their own damping, such as handcarts, bicycles, agricultural vehicles, wheelchairs, etc.

Follows highlighted, in Figure 52, how the shield would be in position zero, i.e., when (6.1) leaves the position of origin in (9.20) reaches the limit in position (9.1). Just as (7AB) leaves the position of origin in (10.2) and reaches position (10.1). this effect caused by (9AB) and (10AB) is the shield damping. It is highlighted, further, the region (1AB), which has a bevel that causes the rubber not to create marks and the tire does not stay with protuberances. Further to prevent mismatches, the low thickness in (6AB) is highlighted. The greater the thickness of6, more chance of the mounting tending to present relief and protuberances in the tire. Highlighted, further, in (5AB) - observe that if the shield ended in (5.1) there would be a straight area in direct contact with the inner tube (or with the tube). i.e., which could be a risk factor for the tire, since in this case the shield itself, when submitted to a strong impact could attack the inner tube (or the tube) with a cutting point. Different from this, the end (5.2) with a curve allows that under a strong impact the region (5AB) that allows a thin thickness, which makes its deformation easier, in addition to the curved geometry that makes impact absorption easier, creates a larger contact area with the inner tube at the moment of impact, causing the end (5.2) not to attack the inner tube (or the tube).

Figure 51 demonstrates when a strong impact strikes the shield, mainly of the splice region. It is possible to observe the original position of (5AB) in the illustration from the topo, and just below it is possible to see what takes place with the movement demonstrating (5.1), (5.2) and (5.3) already in the lower part pushingthe inner tube (15) or (2VU) without having contact of a rough edge that can damagethese more delicate regions. Therefore, even if Shore 90D to 100D is used in the shield, it is possible to use this system to prevent punctures.

In an alternative manner, as already demonstrated in other occasions, it is possible to fit a flexible profile in (5.2) or even use same use the flexible polymer over-injection process to keep the shield edges more flexible and less susceptible to perforating the tube or the inner tube.

In detail K of Figure 52 the items already exemplified in perspective are demonstrated, with highlight to the part that fits the shield on a central section for abetter understanding of the function. Further, it highlights the start of item (6AB) in (6.1) and the end of item (6AB) in item (7AB). Giving origin to item (8AB) that is a shield layer with regular thickness along the entire perimeter.

It also highlights item (13AB) that is the mold's partition line, i.e., with this newconstructivity, with line (13AB) in the part's lateral part, the possible cutting area and production burrs always stay to the side the tire, thereby protecting the inner tube(15) and (2VU). A step ,was formed in the region (14AB), where it is possible to use the area for describing the product, as well as for using the brand of the company that shall commercialize the product.

Figure 53 makes the same demonstration of Figure 52, but on a shield for flat-edged tire.

An opportunity was found of developing with the same injection mold an inserts system that addressed two or more tire sizes with the same mold. Observe in Figure 54 that item (17AB) is an insert exchange region.

Up to the current moment the shield adjustment differentials had been presented comparing the dimensional differences within the same model. As an example - a handcart tire 3.25 x 8 has dimensional differences depending on the brand that commercializes it, in the same manner that a bicycle tire of rim 26 x 1.75also is not identical when comparing the most diverse market brands. In addition tothe dimensional adjustment for the tire models demonstrated above, the injection mold can be customized to address more than one model when inserts are used. A 3.25 x 8 and 3.50 x 8 tire that uses the same mold, but the same could also be donewith a bicycle tire of rim 26 x 1.95 and rim 24 x 1.95 and rim 29 x 1,95. i.e., it is possible that inserts are used in the mold with the shield with a greater diameter toaccommodate more than one shield in the same mold.

It is still valid to highlight that in some tires it is possible to work with the length of the circumference when applied in a mold with an oblong design, and when the part fits into the tire it shall stay circular, but the ideal is that it shall always be injected on a circular or spiral manner.

On the same manner that takes place with round-edged tires, on a similar manner that takes place with flat-edged tires, as presented in Figure 53, here in thiskind of tire, item (5AB) can be added with the purpose of protecting the inner tube and (2VU) from the impacts. It is still valid to highlight that marking lines can be used on the surface of (6AB) that indicate to the installer the correct shield model for eachshield size of the market.

The fact of leaving the shield larger causes one more damping system in theshield, since the same enters compressed in the tire, always seeking to open, i.e., always working to simulate air pressure within the tire.

In detail O of Figure 54, it is possible to observe that item (15AB) has the same shape of item (6AB), in the same manner that item (16AB) has the same shape that item (7AB).

This take place so that the shield can be manufactured i two distinct tire models with the same injection mold, i.e., in this specific case, item(6AB) is an end of the tire 3.25 x 8; item (15AB) is an end of the model 3x50x8.

Variations were identified in the diameter of the tire 3.50 x 8 between 360 and370mm, the thickness varying from 88 to 94mm. The proposal is to demonstrate that there is a technical solution to reduce the investment in molds. As many tire molds exist, the investment can be reduced increasing the shield diameter in comparison with the tire diameter. This causes a positive effect of causing the shield to simulate the air pressure within the tire, since the same is always going to seek to go back to its original position which is open (greater than the tire diameter).

The fact of working with a greater diameter generates two new technical effects. The first one is for the fact of the shield having greater diameter than the tireenters under pressure, and after the inner tube is installed to it allows the tire to workwith very little air pressure, or even completely empty. In tests carried out with a handcart, the shield was capable of withstanding 100kg in the handcart without making the tire get low, simulating the same behavior that a *run-flat* tire has. The second technical effect is that with this solution of increasing the shield diameter in comparison with the tire diameter to have space for the damping system, a differential is generated so that the same injection mold can hold two or more shieldmodels.

Figure 55 demonstrates how the open shield stays after leaving the mold, it only goes to the position demonstrated in Figure 52 after installed in the tire.

The same solution detailed here for handcart tires, can be applied to any tirewith inner tube - whether for bicycles, agricultural vehicles, motorcycles, wheelchairs, among others; and with no inner tube using the tunnel system with (2VU).

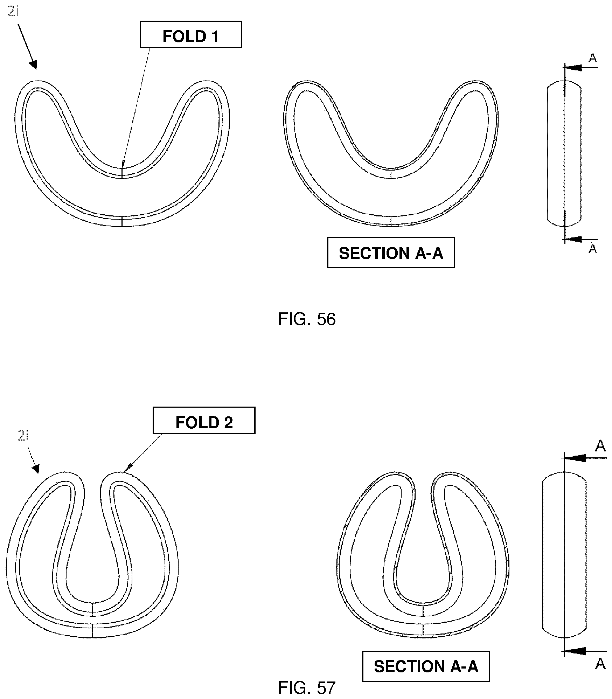

This kind of shield of Figure 55 which can have a cutout, make fitting within the tire easier, since the placement starts in (6.1) and the installer keeps rotating theshield or the tire in a spiral movement until (5.2) enters inside the tire. To enter the tire, the seamless shields need to be installed in the tire factory, or when outside thefactory, need a special movement, as demonstrated in Figure 56 and 57. Initially the circular part receives a fold in the center, and after this movement receives a second fold, demonstrated in Figure 57. with these two movements the shield remains with its elastic deformation, the one in which the stresses acting on the body are removed, goes back to its original shape, without plastic deformation taking place. With these two movements it is possible to include the shield inside the tire. This kind of installation is ideal to be done in a factory with the part still hot, but for somekinds of tires and materials applied in the shield it is possible to use the process demonstrated in Figures 56 and 57.

Some tires like those of car and of motorcycle can have a forced fitting, on amanner similar to installing the rim, in addition to, of course, the processes alreadydemonstrated in Figures 56 and 57, as well as the factory installation.

The extrusion process is demonstrated in Figure 58, where it is possible to use shields (2PE) of thinner thicknesses, and in the process of the profile exiting themold, it is possible to cause the profile to stay coil-shaped. Profiles with thicknessesfrom 0.3mm to 1mm, for instance (but not limiting to this thickness) generate less vibration in some vehicles, so 3 turns of a 0.5mm profile can be installed forming a protection of 1.5mm, which is already enough to protect from small objects. The more turns you make, more the thickness increases and better the shield.

The fact of the profile already come out concave in "U" generates a new effect, for instance, when compared to the PU strap used for protection against bicycle punctures. This shape helps the installation, for it tends to stay locked in thetire after fitting, different from the strap that is soft and tends to drop. Another differential is that it can be thin and with Shore 40D, 70D, 90D, harder and strongerthan the PU strap that has Shore 30D.

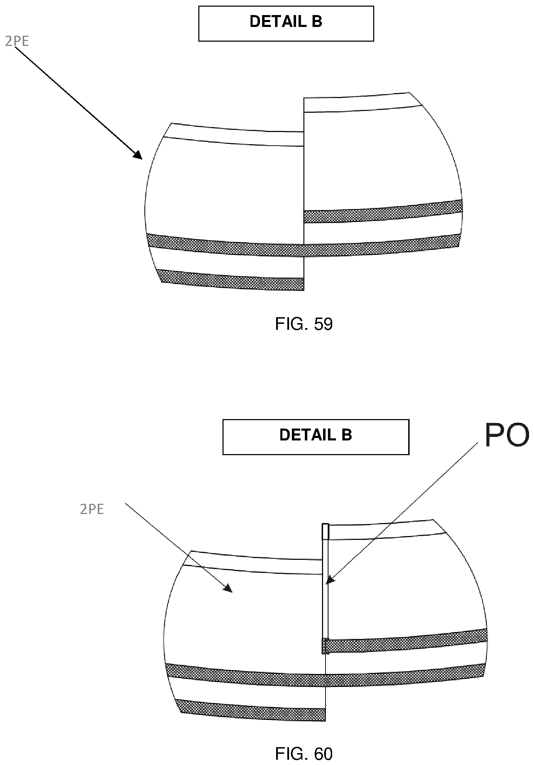

The shield process in shown in Figure 59 and 60 with the use of the extrusion process with 2 turns, however, with this process it is possible to use 1 full turn or more, according to the degree of protection with which the user wants to protect histire. In addition to winding and give more than one turn in the tire, it is possible to install several segments of turn in the tire, which also ensures a good shield against small metals The extrusion profile (2PE) is demonstrated in Figure 60, and a flexible polymer accessory (PO) to be used in profiles thicker than 0.5mm for the purpose of protecting the inner tube, since this process can also be used to protect large- shaped tires.

In this manner it is demonstrated how shield levels are created. The thinner, lesser the shield potential, but smaller the vibration and less rigid the tire shall be inan impact. It is also is possible to see an application of the shield use with no innertube, i.e., the shield can also be used without the inner tube. Sn the use of the shieldwithout the inner tube or with inner tube can be noticed, but with the use of two shields, which considerably strengthens the tire's load capacity, in addition to generating a backup shield against more rigid objects. It is possible to use shields of different industrial processes and different thicknesses in conjunction with this purpose of generating a backup.

It is worthwhile to highlight Figure 61 that demonstrates a shield spacer of hardness below Shore 80A with any thickness and with thickness below 2mm between Shore 80A and 40D, manufactured from crushed SBR and mixed with agglutinating glue, as well as other expandable thermoplastic and thermoset polymers. The same process of the SBR can be replaced by ground and crushed tires, there by forming a spacer that can be used inside the tire, mainly in applications for handcarts and manual traction vehicles.

In case of a spacer with thickness of 20mm, it acts essentially preventing punctures on account of their greater thickness. In addition of applying crushed SBR and used an agglutinating glue that cures naturally or with heat, expanded PVC, expanded PU, EVA, among other expandable polymers can be used, in addition of being able to be manufactured with scraps of used tires, using the same process that manufactures floors, with glue and heat.

It can have, further, round-shaped reliefs on the side, or with regular thickness control by means of rectangles or oblongs in the entire lateral face of thespacer, so as to relief mass and reduce the weight of the part.

Figure 62 demonstrates the possibility of reinforcing the shield (2A) with internal ribs (2NC), so as to ensure greater strength to the shield, mainly when the tire is used with no inner tube.

Figure 63 demonstrates more reinforcements (2NC2) allocated to the shield(2A) which can be partial or until the end, in this manner the shield has even more mechanical strength to function even without the tire air or the inner tube air.

Figure 64 demonstrates that it is possible to include shield cutout zones so that the same can be made in a larger manner, encompassing a greater number ofmodels in the market, or even the markings Model 1, Model 2, Model 3 can be usedfor including brands from different manufacturers or markings of size from differentshields in an universal shield.

In Figure 62 and 63, the same position of (2NC2) and (2NC), if the rib in highrelief is replaced by through cutsor mass relief recesses, the shield shall have greater flexibility, i.e., it is a new form of generating damping in the shield. Figure 65demonstrates a possibility of mass relief by means of a through cuts in (REAM), which can be done and used without the reinforcement (REPA) or with the reinforcement (REPA). These details demonstrated by (REPA) and (REAM) are forms of softening the shield and maintain the tire's anti-punctures protection.

The systems presented in Figures 62, 63, 64 and 65 can be Applied to any kind of shield (2).

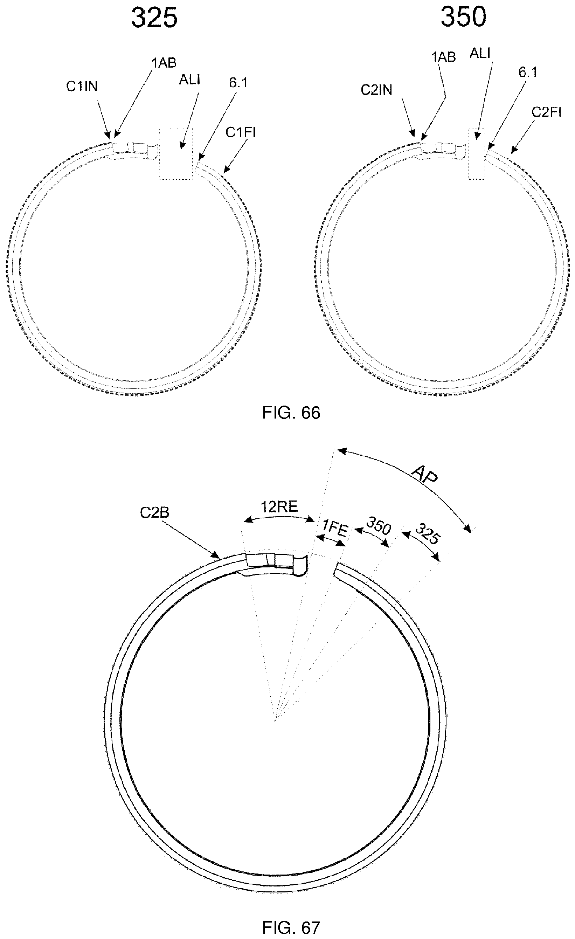

Two new effects in the constructive process of an open shield are technicallydemonstrated in Figure 66, 67, 68 and 69. Both shields (2A) and shields (2PA) apply.

Figure 66 demonstrates the shield (325), which is a smaller shield on the leftand the shield (350), than the larger shield to the right. In Figure 67 it is possible tosee the indication of the dotted circumference (C2B). (C2B) is the length of the circumference used in the shield. However, (C2B) is larger than the length of the tire's internal circumference (11) both in model (325) and in the tire (350).

(1AB) is demonstrated in Figure 66, which is the start of the circumference size of the smaller shield (325) and (6.1) that is the end of the circumference length of (325). Therefore, there is a large region so that (6.1) meets (1AB). This displacement movement from (6.1) to (1AB) generate a tension, since (6.1) shall always want to go back to its original position and not remain close to (1AB). This causes the damping system to work, since when fitted, for instance, in the correct tire, shield (325) and shield (350) stay with (6.1) close to the region (1AB).

The highlight to region (ALI) is done to demonstrate that shield (325) and shield (350) use the same circumference, in this manner it is possible to use the same mold for two or more models of tires that have close measurements. Figure 67 demonstrates (AP) that is the area of the insert that can be replaced for manufacturing more than one model with distinct lengths of circumferences.

Still in Figure 67, (1FE) is reserved so that there is always a good mold closure, (350) is up to where the shield of model (350) goes and (325) is up to wherethe shield of model (325) goes. (12RE) is the entire region that the shield uses to perform the damping and the dimensional auto-adjust between models from distinct manufacturers of models (325) or (350).

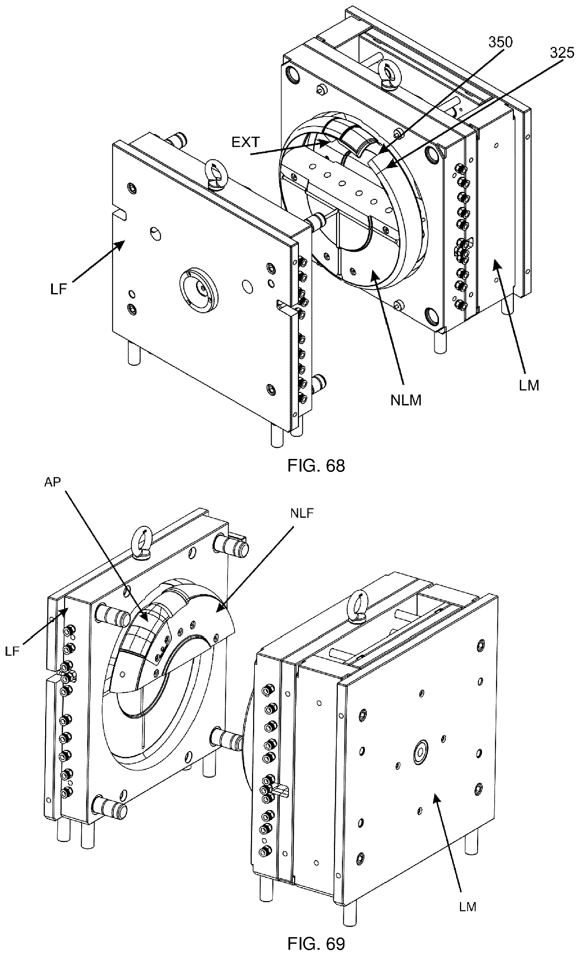

In Figure 68 it is possible to see the end of shield (325) and the end of shield (350) in the mold. Obviously each shield is produced one at the time, but uses the same mold, which can change the insert area (AP) highlighted in perspective in Figure 69.

Figures 68 and 69 demonstrate, further, an injection mold technology different from the jaws and collapsible system already popularly known for manufacturing of parts with large negatives.

(LM) mobile side of the mold, (LF) fixed side of the mold, (NLF) negative of the fixed side and (NLM) negative of the mobile side are highlighted. What happensin this case is that when opening the mold, a smaller part of the negative remains fixed in the fixe side of the mold, causing the shield to stay locked in the mobile sidethat has a larger area of contact with the shield. When removing (NLF) from the shield and by means of lifters remove (NLM) together with the shield from the cavityof (LM), it is possible to use the extractors (EXT) located in the shield's upper region and push the shield, which to exit the mold without being damaged simply opens since it is open and when dropping from the mold goes back to its original position of conformation.

For the purpose of presenting an alternative to tires with *run-flat* technology or even tires which don't even use air, the *airless (or NPT* - *non-pneumatic tires),* as the airless *tweel* tire of the Michelin company is known, a viable alternative is demonstrated in Figure 70 which allows that tires which use shield can function evenairless for the most various kinds of automotive tires. The element (222AM) is one more damping system that stays between the shield and the support (222). It can be manufactured in flexible material and polymeric blends with base in engineering polymers similar to the ones used in the shields (2) as well as polymers already used in *NPT* tires.

The differential of element (222AM) is that it ensures the function of the airless tire for the tire's entire service life, since it supports the tire and ensures the damping against contra impacts, and the main thing is that it allows the user to use its rim, with no need of substituting the rim the car already uses.

It is known that there is a culture that values the design of the car's rim and the tire, and airless tires such as the *tweel*, in addition of generating a different design in the car, the change of the rim that the user likes or that he already uses, as well as the change of the tire is necessary.

As it is demonstrated in Figure 70 this system with (222AM) can also use (2VU) allowing the tire to use air or to run airless. It is known that the air in the tire saves gasoline, therefore the shield with (222AM) ensures greater flexibility to the user who can choose running with or without air in the tire. Further, its use in autonomous vehicles ensures the vehicle's optimum function until someone can calibrate the tire in case of being limp or change it in case of puncture, since some shields cannot protect the tire's side, a place in which a tire can still be emptied.

it is still valid to stress that (222AM) can be welded to (2VU) and be a little more elongated without touching the rim, almost touching the rim or touching the rim with pressure, being a part of the tire, and in this manner making its installation easier.

Further, (222) and (222AM) can be a same flexible part attached to the rim, with the purpose of generating more damping to the tire. This new geometry formed by the union of (222) and (222AM) in a single part can be manufactured in the samematerial thermoset, in a single part, vulcanized in (2VU) or vulcanized in the shield that is vulcanized in the tire rubber (11).

(222) and (222AM) can used polyurethane like the shock absorbers of the *tweel* tires of the Michelin company, or other engineering polymeric blends bolsteredor not with 0.1% to 30% of graphene, as long as they have Shore hardness between60A to 99D. Thus, they can fill the whole interior of the tire, occupying the place of the air.

(222) and (222AM) can occupy 30% to 100% of the tire width, being able to protect only the center of the tire or the entire region.

(222) and (222AM) can be applied in round-edged tires or flat-edged tires.

They can be, further, attached to the rim, as a Nylon or rubber band (axially split and with wire ropes) locked as a rim clamp.

They can be, further, manufactured in polymeric blends with base in engineering polymers and attached to the rim in the same process which is attached to a Nylon or rubber shield band already commercialized currently. These band systems are manufactured axially split and use internal wire ropes, by means of screws the wire rope keeps on penetrating in the shield structure and providing thetightening, to the point of locking the band in the rim, like a clamp.

It can be, further, only an independent flexible part that fits into the rim, but that is not attached to the tire, it stays only touching the tire providing support.

It is important to point out that the figures and description don't have the intentof limiting the forms of performing the inventive concept proposed herein, rather, to illustrate the conceptual innovations revealed in this solution and make them understandable. In this manner, the descriptions and images must be interpreted inan illustrative and not limitative manner, being allowed to exist other equivalent or analogous forms of implementing the inventive concept revealed herein and which are not removed from the protection spectrum outlined in the proposed solution.

## Claims

1. **SHIELD, characterized by** being a part positioned juxtaposed to and internally to the tire's rubber (11), shaped like the tire's inner surface, 0.3mm to 500mm thick with Shore D hardness between 40D and 100D; and with Shore hardness between 80A and 40D with 2mm to 500mm thick and produced in thermoplastic or thermosetting polymer.

2. **SHIELD** according to claim 1, and **characterized by** preferably having Shore hardness above 40d.

3. **SHIELD,** according to claim 1, and **characterized by** function when it has Shore 80A and 40D hardness with a thickness of less than 2mm; and when it has hardness below Shore 80A, in any thickness.

4. **SHIELD,** according to claim 1 , 2 and 3, and optionally
**characterized by** ribs (21) in the opposite direction to the movement of the tire or randomly arranged.

5. **SHIELD,** according to claim 1, 2 and 3, and optionally **characterized by** having ribs (2RE) formed by external reliefs.

6. **SHIELD,** according to claim 1 to 5, and **characterized by** being one-piece, without cutouts, following the tire's internal profile in thermoplastic polymers.

7. **SHIELD,** according to claim 1 to 5, and **characterized by** being one-piece, without cutouts, following the tire's internal profile in thermosetting polymers, which can be vulcanized directly on the tire (11) to compose an integral element of the armored tire (1); or even be vulcanized to the inner tube (15).

8. **SHIELD** according to claim 1 to 5, and**characterized by** being able to comprise in an open model, with a cutout, a chamfer (1AB), female cradle (2AB) where the male (6AB) will be accommodated, provided with an end (7AB) that is juxtaposed to a stop (3AB) that limits the end edge of (6AB)
do not exceed the limit in (1AB), an extra armor (4AB) and an ascending curve (5AB).

9. **SHIELD,** according to claims 1 to 5 and 8, and**characterized by** being able to comprise a cutout, which starts at (12.1) and ends at (8.12) on the lower face, and starts at (12.12) and ends at (9.2) on the upper face, forming a damping system on simultaneous displacement from (12.1) to (12.2); (10.2) to (10.1) and consequently (9.2) to (9.1); making it possible to have natural bending of the plastic, added to the movement of the regions (9AB)(10AB)(12AB).

10. **SHIELD,** according to claims 8 and 9, and**characterized by** optionally not having the structure (6AB) or (5AB).

11. **SHIELD,** according to claims 8 and 9, and **characterized by** being able to comprise a single cutout, in perpendicular, diagonal (wedge) or curved shape, separating the ends without the elements (1AB) to (7AB).

12. **SHIELD,** according to claims 8 and 9, and **characterized by** the elements (1AB) and (2AB) are aligned with the inner surface of the tire, without the recess promoted by (6AB).

13. **SHIELD,** according to claims 1 and 5, and **characterized by** being a coil wound profile.

14. **SHIELD,** according to claims 1 and 5, and **characterized by** being able to comprise a scaled system with identical parts for use in an inner tube tire, without an inner tube, internal in the tunnel (TU) with the part (2VU), glued to the tire, or vulcanizing the parts (2ES) on the tire rubber (11).

15. **SHIELD,** according to claims 1, 2 and 3, and **characterized by** being able to comprise only an inverted "U" -shaped armoring (2U) with split, cut, or whole.

16. **SHIELD** according to claim 1, 2 and 3, and **characterized by** being able to comprise a layer (SH) and armoring (2U) with inverted edges, with division, cutout or whole overlapping the entire region of the rubber of the tire (11) and the armoring (2U); can be manufactured by over-injection, or by being a separate additional part, injected in thermoplastic flexible elastomer or thermoset with Shore between 40D and 40A; can use expanded SBR, Expanded PVC, Rubber, or leftovers of ground, cold glued or vulcanized SBR.

17. **SHIELD** according to claims 1 to 5 and 8 to 11, and**characterized by** using the layer (SH) in the flat edge or rounded edge armoring (2).

18. **SHIELD,** according to claims 1 to 17, and **characterized by** alternatively wherein the armor is painted or bathed in rubberized paint, liquid rubber, or is completely over-injected with elastomer polymer.

19. **SHIELD,** according to claim 18, and **characterized by** alternatively being isolated and protected from rubberized material to the region (2AB), (3AB), (4AB), (5AB), (6AB), (7AB), in the case of open shields.

20. **SHIELD,** according to claim 18, and **characterized by** alternatively being isolated and protected from rubberized material to the entire region of the armoring that comes into contact with the rubber of the tire (11).

21. **SHIELD,** according to claims 16 and 17 where the layer (SH) can also be positioned on the inner surface of the armoring (2) and (2U) to protect the inner tube (15) or (2VU).

22. **SHIELD,** according to claim 15, and**characterized by** alternatively using the layer (SH) on the inside; or inside and outside, of the flat edge or rounded edge armor (2) and (2U).

23. **SHIELD,** according to claim 1 and 5, and optionally **characterized by** having (2SL)(2SR) parts attached to the sides.

24. **SHIELD,** according to claim 23, and optionally **characterized by** mounting reinforcement (2IN) mounted together with the side reinforcement parts (2SL)(2SR).

25. **SHIELD,** according to claim 1 to 24, and **characterized by** being able to comprise the element (222) that functions as a definitive deformation stop in the event of overweight of the vehicle or strong impact applied at a distance (222D).

26. **SHIELD,** according to claim 25, and **characterized by** being able to comprise the support element (222) and the armor (2) or (2U) the element (222AM) manufactured in flexible material in thermoplastic engineering polymers such as PU, nylon or thermoset with Shore hardness 60A to 99D.

27. **SHIELD,** according to claim 25 and 26, and **characterized by** the element (222) and (222AM) are manufactured in the same material, in a single piece in engineering polymer.

28. **SHIELD,** according to claim 25 and 26, and **characterized by** the element (222) and (222AM) are manufactured in the same thermoset material, in a single piece, vulcanized in (2VU) or vulcanized in the armor that is vulcanized in the tire rubber (11); further (222AM) be vulcanized without the element (222) to the tire (11).

29. **SHIELD** according to claim 1 to 24, and **characterized by** being able to comprise a fold (WW) that simulates an inner tube; said fold (WW) can occur on flat-edged tires (WW2); it can be partial; it can occur up to half the side of the tire (11) or it can be total or semi-total.

30. **SHIELD,** according to claim 29, and **characterized by** (2U) also has an edge that accompanies the side of the inner profile of the tire; it can occur up to half the side of the tire (11) or it can be total or semi-total.

31. **SHIELD,** according to claim 1 to 30, and **characterized by** being able to comprise a fastening part (2VU), which is a layer vulcanizable to the tire (11), and which creates a tunnel (TU) separating the region having air from a new anti-bore armored layer; (2VU) may be continuous, without division, or in parts.

32. **SHIELD,** according to claim 31, and **characterized by the** part (2VU) can be designed similarly to an automotive repair,
where (BO) is the rubber layer and (AVU) is the adhesive and vulcanizing layer; where the extreme lateral region (AVU) is the region where volcanizing rubber is applied and the region that comes into contact with the inner tube or with the air (in tubeless tires) indicated with (BO) can be of common rubber; and further, the contact area of the glue is on the side of the tire in (AVU) and the entire region of (BO) can have fabric and fiber reinforcement layers, tarpaulins and other materials already applied in tires, or be of common rubber, such as an inner tube.

33. **SHIELD,** according to claims 1 to 17, and **characterized by the** part (2VU) can be produced in rubber without the adhesive sides, and fixed by fitting on the inside of shields (2) and (2U) to protect the inner tube (15); alternatively it can be produced in parts, without being whole, blanket, or injection of elastomers.

34. **SHIELD,** according to claims 1 to 33, and **characterized by** having a soft accessory blanket or profile, with Shore hardness between 40D and 20A, for protection of the inner tube (15) or (2VU) that can be separately or over-injected on the inner face of the armoring (2).

35. **SHIELD,** according to claims 8 to 11, and **characterized by** being able to have a cutout system in the polymer in the region (1AB) that promotes a spring effect.

36. **SHIELD,** according to claims 1 to 35, and optionally **characterized by** having accessories (2MF) wrapped around the outer surface of the armoring produced in Nylon, Teflon, PU formed by male (2MA) and female (2FA) fittings parts.

37. **SHIELD,** according to claims 36, and preferably **characterized by** the accessories (2MF) have a thin layer from 0.3mm to 2mm and Shore hardness from 40D to 100D when applied between the armoring (2) and the tire (11).

38. **SHIELD,** according to claims 36, and optionally **characterized by** having accessories (2MF) positioned between the armor (2) and the inner tube (15) or between the armor (2) and (2VU), produced in thermoplastic polymers or soft thermosets of hardness from Shore 40D to Shore 20A, formed by male (2MA) and female (2FA) fittings.

39. **SHIELD,** according to claims 1 to 38, and **characterized by** comprising parts (1B) arranged equidistantly, injected together or in a single part for assembly jig.

40. **SHIELD,** according to claims 1 to 38, and **characterized by** having material thickness reduction (2AF) and end rounding (1AF), having thin, flexible edges and with rounded corners that deform together with the inner tube (15), allowing the return to the natural stage of said tube.

41. **SHIELD,** according to claim 40, and **characterized by** being able to have an over-injected part (3AF) or even a flexible profile or injected part, in thermoplastic or thermoset with Shore hardness from 40D to 20A.

42. **SHIELD,** according to claim 1 to 41, and **characterized by** being able to have subdivision of sections of 2, 4, 8 or more equal parts or have small internal high reliefs (BA).

43. **SHIELD,** according to claim 8, 9 and 10, and **characterized by** being able to comprise guides on the upper face (2AB) or on the upper face (RE); the guides can be lateral or central, in high or low relief and the male side of the guide can be on the side (6AB) and the female side on the upper surface on the face (RE) or face (2AB); when the cutout made is simple, diagonal (wedge), perpendicular or curved it can also comprise the guides on the cutting face, where the ends can also have repeating springs or bows that join.

44. **SHIELD,** according to claim 1 to 17, and **characterized by** being able to reinforce with internal ribs (2NC) and (2NC2) partially or to the end.

45. **SHIELD,** according to claim 1 to 17, and **characterized by** being able to replace the ribs (2NC) and (2NC2) with a through tear (REAM), which can be made and used with or without the reinforcement (REPA).

46. **SHIELD,** according to claim 45, and **characterized by the** tear (REAM) and the reinforcement (REPA) can be distributed randomly, symmetrically, or asymmetrically.

47. **SHIELD** according to claims 1 to 17, and **characterized by** creating shock absorbers by means of low reliefs on the surface indicated in (2NC) and (2NC2) that may further use through tears (REAM), which may have reinforcement (REPA) or not.

48. **SHIELD,** according to claims 1 to 17 and 23 and 24, and **characterized by** being able to be coated with fiberglass, kevlar and carbon; or even by aramid armoring blanket.

49. **SHIELD,** according to claims 8 to 13, and **characterized by** having a cutout and having sensors at the ends that identify tire pressure.

50. **SHIELD,** according to claims 1 and 2, and **characterized by** being a vulcanized rubber directly to the tire, being an integral part of the tire manufacturing composition.

51. **SHIELD,** according to claims 1 to 17 and 23, 24, and **characterized by** using one or more shields on a tire, overlapping each other, with or without fixation; with or without kevlar blankets, carbon glass fiber or aramid armoring blanket; still being able to receive over injection of elastomer, rubberized paint or external liquid rubber; and can be installed between the tire rubber (11) and the inner tube (15) or in the tunnel protected by (2VU).

52. **SHIELD,** according to claims 1 to 17 and 23, 24, and **characterized by** using an extra-thin armoring shape (2) and (2U) between 0.3mm and 5mm only in resin and mats of kevlar, carbon glass fiber.

53. **SHIELD,** according to claims 1 to 17, and **characterized by** being able to be manufactured in PVC composite with leftovers from textile, automotive, and cotton industries as a load of the material.

54. **SHIELD,** according to claim 1 to 17, and **characterized by** being able to be made with vulcanizable rubber of thermosetting material with Shore hardness from 40D to 90D with thickness from 0.3mm to 500mm or with Shore hardness from 80A to 40D with thickness from 2mm to 500mm.

55. **SHIELD,** according to claims 1 to 17, and **characterized by** being able to be manufactured by polymer pressing/stamping process.

56. **SHIELD,** according to claims 1 to 17, and **characterized by** being able to be manufactured by machining process.

57. **SHIELD,** according to claims 1 to 17, and **characterized by** being able to be manufactured by injection process, with or without bi injection or over injection.

58. **SHIELD,** according to claims 1 to 17, and **characterized by** being able to be manufactured by Teflon conformation.

59. **SHIELD,** according to claims 1 to 17, and **characterized by** being able to be manufactured by rotomolding, blowing or thermoforming.

60. **SHIELD,** according to claims 1 to 3 and 13, and
**characterized by** being able to be manufactured by extrusion process.

61. **SHIELD,** according to claims 1 to 17, and **characterized by** having polymers with 0.1% to 30% graphene, fiberglass, or mineral additives.

62. **SHIELD,** according to claims 1 to 17, and **characterized by** having virgin thermoplastic resins and/or with mixtures of recycled material.

63. **SHIELD,** according to claims 1 to 17, and **characterized by** being able to be manufactured from expanded rubber, EVA, expanded PVC, expanded PU, SBR, by means of rotary injectors or common molds.

64. **SHIELD,** according to claims 1 to 17, and **characterized by** being able to be manufactured with leftovers from the footwear industry, with ground SBR, cold glued or glued and vulcanized by means of molds.

65. **SHIELD,** according to claims 1 to 17, and **characterized by** being able to be manufactured in thermoplastics and thermosets with 0.1% to 30% graphene.

66. **SHIELD,** according to claims 1 to 17, and **characterized by** being able to be bonded to synthetic fiber mats; or be manufactured completely in synthetic fiber and resin mats.

67. **SHIELD** according to claims 8, 9 and 14, and **characterized by** the joints of the parts having repeated X-shaped damping systems, or arches at the ends that absorb impact; further because the damping systems can be in the same part or in separate parts; further because (2ES) can have the same impact absorption systems in the union of one part with the other.

68. **SHIELD** according to claims 1 to 64, and **characterized by** being able to be applied to wheelbarrow tires and similar hand-drawn vehicles.

69. **SHIELD** according to claims 1 to 64, and **characterized by** being able to be applied to bicycle tires and electric bicycles.

70. **SHIELD** according to claims 1 to 64, and **characterized by** being able to be applied to tires of wheelchairs and electric wheelchairs.

71. **SHIELD** according to claims 1 to 64, and **characterized by** being able to be applied to scooter and motorcycle tires.

72. **SHIELD** according to claims 1 to 64, and **characterized by** being able to be applied to automobile tires, small trailers, trailers.

73. **SHIELD** according to claims 1 to 64, and **characterized by** being able to be applied to tires of agricultural vehicles.

74. **SHIELD** according to claims 1 to 64, and **characterized by** being able to be applied to tires of large construction machines and large agricultural machines.

75. **SHIELD** according to claims 1 to 64, and **characterized by** being able to be applied to tires of military armored vehicles.

76. **SHIELD** according to claims 1 to 64, and **characterized by** being able to be applied to tires of all types of vehicles.
